# EUROPEAN PATENT APPLICATION

(11) **EP 4 415 382 A1**
(43) Date of publication of application: **14.08.2024**
(21) Application number: 23883882.5
(22) Date of filing: 24.03.2023
(51) Int. Cl.: H04R 1/10

(54) **CHARGING BOX FOR EARPHONE**

(30) Priority: 01.12.2022 CN 202211539251
(71) Applicant: Shenzhen Shokz Co., Ltd., Shenzhen, Guangdong 518108 (CN)
(72) Inventor: LIU, Zhiqing, Shenzhen, Guangdong 518108 (CN); ZHANG, Chenxi, Shenzhen, Guangdong 518108 (CN); YAN, Zeteng, Shenzhen, Guangdong 518108 (CN); ZHANG, Haofeng, Shenzhen, Guangdong 518108 (CN)
(74) Representative: Wang, Bo
(86) International application number: PCT/CN2023/083744
(87) International publication number: WO 2024/113554

(57) **Abstract**

The present disclosure provides a charging case for an earphone, comprising a lower housing assembly, an upper housing assembly, a main control circuit board, a magnetic suction structure, and an upper housing magnet. A Hall sensor is provided within the lower housing assembly, and the Hall sensor is electrically connected to the main control circuit board. The magnetic suction structure is configured to place an earphone in a magnetic suction manner, and when the upper housing assembly is in an open state with respect to the lower housing assembly, the Hall sensor is in a first state under an action of a magnetic field of the magnetic suction structure, and when the upper housing assembly is in a closed state with respect to the lower housing assembly, the upper housing magnet causes the Hall sensor to switch to a second state different from the first state.

## Description

### TECHNICAL FIELD

The present disclosure relates to the technical field of electronic devices, and in particular, to charging cases for earphones.

### BACKGROUND

With the increasing popularity of electronic devices, the electronic devices have become indispensable social and entertainment tools in people's daily life, and people's requirements for the electronic devices are also increasing. The electronic devices (e.g., earphones) have also been widely used in people's daily life, which can be used in conjunction with terminal devices (e.g., mobile phones, computers, etc.) to provide users with an auditory feast. According to the working principle of the earphones, the earphones can generally be divided into gas-conducting earphones and bone-conducting earphones. According to the way that the user wears the earphones, the earphones can generally be divided into headset earphones, ear-hanging earphones, and in-ear earphones. According to the interaction between the earphones and the electronic devices, the earphones can generally be divided into wired earphones and wireless earphones. Furthermore, when the power of the earphones is low or the earphones are not in use, the earphones can be accommodated in corresponding charging cases for charging and storing.

### SUMMARY

The present disclosure provides a charging case for an earphone, comprising a lower housing assembly, an upper housing assembly, a main control circuit board, a magnetic suction structure disposed within the lower housing assembly, an upper housing magnet disposed within the upper housing assembly, and a Hall sensor disposed within the lower housing assembly. The Hall sensor is electrically connected to the main control circuit board. The magnetic suction structure is configured to place an earphone in a magnetic suction manner, and when the upper housing assembly is in an open state with respect to the lower housing assembly, the Hall sensor is in a first state under an action of a magnetic field of the magnetic suction structure, and when the upper housing assembly is in a closed state with respect to the lower housing assembly, the upper housing magnet causes the Hall sensor to switch to a second state different from the first state.

In some embodiments, a first magnetic suction member cooperating with the magnetic suction structure is disposed on the earphone, the first magnetic suction member is set so that the Hall sensor is in the first state when the earphone is placed in the charging case and the upper housing assembly is in the open state, and the first magnetic suction member is set so that the Hall sensor is in the second state when the earphone is placed in the charging case and the upper housing assembly is in the closed state.

In some embodiments, the magnetic suction structure comprises a first magnetic suction structure that magnetically cooperates with the first magnetic suction member, and the earphone further includes a second magnetic suction member independent of the first magnetic suction member, the magnetic suction structure comprises a second magnetic suction structure magnetically cooperating with the second magnetic suction member, volumes of the second magnetic suction member and the second magnetic suction structure are smaller than volumes of the first magnetic suction member and the first magnetic suction structure, and a distance from the Hall sensor to the first magnetic suction structure is smaller than a distance from the Hall sensor to the second magnetic suction structure.

In some embodiments, a diameter of the first magnetic suction structure is in a range of 8 mm to 15 mm and a thickness of the first magnetic suction structure is in a range of 2 mm to 4 mm; and a diameter of the upper housing magnet is in a range of 4 mm to 6 mm and a thickness of the upper housing magnet is in a range of 1 mm to 8 mm.

In some embodiments, when the upper housing assembly is in the closed state with respect to the lower housing assembly, a magnetic pole of the magnetic suction structure facing the upper housing assembly and a magnetic pole of the magnetic suction structure facing the lower housing assembly are opposite in polarity.

In some embodiments, a magnetic guide member is disposed in the lower housing assembly, and when the upper housing assembly is in the closed state, a magnetic field of the upper housing magnet magnetizes the magnetic guide member.

In some embodiments, a distance from the Hall sensor to the magnetic guide member is smaller than a distance from the Hall sensor to the magnetic suction structure.

In some embodiments, projections of the upper housing magnet and the magnetic guide member along a thickness direction of the charging case at least partially overlap when the upper housing assembly is in the closed state.

In some embodiments, when the upper housing assembly is in the closed state, a distance between surfaces of the upper housing magnet and the magnetic guide member that are close to each other is smaller than or equal to 5 mm.

In some embodiments, the lower housing assembly is provided with a profiling recess for accommodating the earphone, and along a thickness direction of the charging case, a projection of the profiling recess is staggered from a projection of the Hall sensor and a projection of the upper housing magnet.

In some embodiments, the lower housing assembly is further provided with an auxiliary magnet, the auxiliary magnet being set so that the Hall sensor is in the first state when the upper housing assembly is in the open state and the Hall sensor is in the second state when the upper housing assembly is in the closed state.

The beneficial effect of the present disclosure is that the Hall sensor is in the first state under the action of the magnetic field of the magnetic suction structure when the upper housing assembly is set to be in the open state with respect to the lower housing assembly, and when the upper housing assembly is in the closed state with respect to the lower housing assembly, the Hall sensor switches to the second state different from the first state. It is possible to enable the charging case to successfully realize closure detection even when the Hall sensor is interfered by the magnetic suction structure.

### BRIEF DESCRIPTION OF THE DRAWINGS

In order to more clearly illustrate the technical solutions in the embodiments of the present disclosure or the prior art, the following will briefly introduce the drawings that need to be used in the description of the embodiments or the prior art. Obviously, the accompanying drawings in the following description are merely some embodiments of the present disclosure. For those of ordinary skill in the art, other drawings may also be obtained according to these drawings without creative work, wherein:
FIG. 1 is a schematic diagram illustrating an exemplary anterior side profile of an ear of a user according to some embodiments of the present disclosure;
FIG. 2 is a schematic diagram illustrating an exemplary structure of at least one earphone according to some embodiments of the present disclosure;
FIG. 3 is a schematic diagram illustrating an exemplary earphone in a wearing state according to some embodiments of the present disclosure;
FIG. 4 is a schematic diagram illustrating an exemplary earphone according to some embodiments of the present disclosure;
FIG. 5 is a schematic diagram illustrating an exemplary earphone according to some embodiments of the present disclosure;
FIG. 6 is a diagram illustrating frequency response curves measured at a same listening position when a core module of at least one earphone is located at different positions on an ear according to some embodiments of the present disclosure;
FIG. 7 is a schematic diagram illustrating an exemplary sectional structure of the at least one earphone in FIG. 2 along a direction of A1 -A1 ;
FIG. 8 is a schematic diagram illustrating an exemplary sectional structure of the at least one earphone in FIG. 2 along a direction of A2-A2;
FIG. 9 is a schematic diagram illustrating an exemplary structure of at least one earphone according to some embodiments of the present disclosure;
FIG. 10 is a schematic diagram illustrating an exemplary structure of a core housing according to some embodiments of the present disclosure;
FIG. 11 is a schematic diagram illustrating an exemplary structure of a core housing according to some embodiments of the present disclosure;
FIG. 12 is a schematic diagram illustrating an exemplary structure of a bracket according to some embodiments of the present disclosure;
FIG. 13 is a schematic diagram illustrating an exemplary enlarged structure of the at least one earphone in FIG. 8 in a B1 region;
FIG. 14 is a schematic diagram illustrating an exemplary enlarged structure of the at least one earphone in FIG. 8 in a B2 region;
FIG. 15 is a schematic diagram illustrating an exemplary hook structure according to some embodiments of the present disclosure;
FIG. 16 is a schematic diagram illustrating an exemplary sectional structure of the hook structure in FIG. 15 along a direction of A3-A3;
FIG. 17 is a schematic diagram illustrating an exemplary sectional structure of the hook structure in FIG. 15 along a direction perpendicular to the direction of A3-A3;
FIG. 18 is a schematic diagram illustrating an exemplary exploded structure of the hook structure in FIG. 15;
FIG. 19 is a schematic diagram illustrating an exemplary structure of a charging case according to some embodiments of the present disclosure;
FIG. 20 is a schematic diagram illustrating an exemplary structure of the charging case in FIG. 19 after earphones have been placed inside;
FIG. 21 is a schematic diagram illustrating an exemplary structure of a charging case according to some embodiments of the present disclosure;
FIG. 22 is a schematic diagram illustrating an exemplary sectional structure of the charging case in FIG. 21 in a closed state along a direction of A4-A4;
FIG. 23 is a schematic diagram illustrating an exemplary structure of the charging case in FIG. 22;
FIG. 24 is a schematic diagram illustrating an exemplary sectional structure of the charging case in FIG. 19 along a direction of A5-A5;
FIG. 25 is a schematic diagram illustrating an exemplary structure of a charging case with a limiting member being disposed on an upper housing assembly of the charging case;
FIG. 26 is a schematic diagram illustrating another view of the upper housing assembly in FIG. 25 with the limiting member;
FIG. 27 is a schematic diagram illustrating an exemplary sectional structure of a charging case of the present disclosure in an open state;
FIG. 28 is a schematic diagram illustrating an exemplary exploded structure of a position limiting mechanism in a charging case of the present disclosure;
FIG. 29 is a schematic diagram illustrating an exemplary partial structure of the unexploded position limiting mechanism in FIG. 28;
FIG. 30 is a schematic diagram illustrating an exemplary exploded structure of another position limiting mechanism in a charging case of the present disclosure;
FIG. 31 is a schematic diagram illustrating an exemplary partial structure of the unexploded position limiting mechanism in FIG. 30;
FIG. 32 is a schematic diagram illustrating an exemplary sectional structure of the position limiting mechanism in FIG. 31 along a direction of A6-A6;
FIG. 33 is a schematic diagram illustrating an exemplary sectional structure of a charging case of the present disclosure in a closed state; and
FIG. 34 is a schematic diagram illustrating magnetic field simulation results at a Hall sensor of a charging case according to some embodiments of the present disclosure.

### DETAILED DESCRIPTION

The following will clearly and completely describe the technical solutions in the embodiments of the present disclosure with reference to the accompanying drawings in the embodiments of the present disclosure. Obviously, the described embodiments are only a part of the embodiments of the present disclosure, and not all of them. Based on the embodiments of the present disclosure, all other embodiments obtained by persons of ordinary skill in the art without making creative efforts belong to the scope of protection of the present disclosure.

Reference herein to the term "embodiment" means that a particular feature, structure, or characteristic described in connection with the embodiment can be included in at least one embodiment of the present disclosure. The occurrences of the term in various places in the present disclosure are not necessarily all referring to the same embodiment, nor are separate or alternative embodiments mutually exclusive of other embodiments. It is understood explicitly and implicitly by those skilled in the art that the embodiments described herein can be combined with other embodiments.

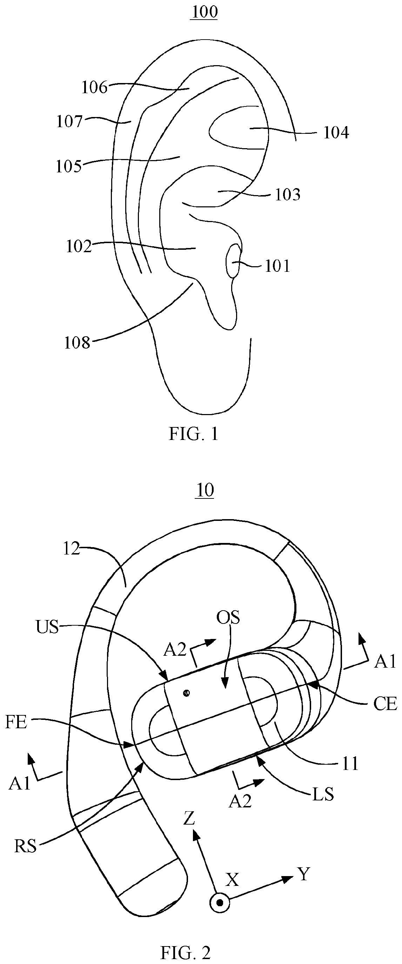

FIG. 1 is a schematic diagram illustrating an exemplary anterior side profile of an ear of a user according to some embodiments of the present disclosure. Referring to FIG. 1, an ear 100 of a user may include physiological parts, such as an external ear canal 101, a cavity of auricular concha 102, a cymba of auricular concha 103, a triangular fossa 104, an antihelix 105, a scapha 106, a helix 107, and a tragus 108. Although the external ear canal 101 has a certain depth and extends to a tympanic membrane of the ear 100, for the convenience of description and in combination with FIG. 1, unless otherwise specified, the external ear canal 101 refers to an entrance (i.e., an aperture) of the external ear canal 101 that is away from the tympanic membrane in the present disclosure. In some embodiments, the physiological parts (e.g., the cavity of auricular concha 102, the cymba of auricular concha 103, the triangular fossa 104, etc.) have a certain volume and depth, and the cavity of auricular concha 102 is directly connected to the external ear canal 101, which can be simply regarded as that the aperture is located at a bottom of the cavity of auricular concha 102.

In some embodiments, there may be individual differences between different users, resulting in dimensional differences (e.g., different shapes, sizes, etc.) of ears. For the convenience of description and to reduce (or even eliminate) the individual differences between the users, a simulator (e.g., GRAS 45BC KEMAR) including a head and (left and right) ears of the head may be produced based on the ANSI: S3.36, S3.25 and IEC: 60318-7 standards. Therefore, in the present disclosure, embodiments such as "a user wears earphones," "the earphones are in a wearing state," "in the wearing state," etc., may refer to the earphones of the present disclosure being worn on the ears of the simulator. Due to the individual differences between different users, there may be certain differences when the earphones are worn by different users and when the earphones are worn on the ears of the simulator, but the differences should be tolerated.

It should be noted that in the fields of medicine, anatomy, etc., three basic sections (i.e., a sagittal plane, a coronal plane, and a horizontal plane) and three basic axes (i.e., a sagittal axis, a coronal axis, and a vertical axis) of a human body may be defined. The sagittal plane refers to a section perpendicular to the ground made along an anterior- posterior direction of the human body, which divides the human body into left and right parts. The coronal plane refers to a section perpendicular to the ground made along a left- right direction of the human body, which divides the human body into anterior and posterior parts. The horizontal plane refers to a section parallel to the ground made along an upper-lower direction of the human body, which divides the human body into upper and lower parts. Correspondingly, the sagittal axis refers to an axis along the anterior-posterior direction of the human body and perpendicular to the coronal plane, the coronal axis refers to an axis along the left-right direction of the human body and perpendicular to the sagittal plane, and the perpendicular axis refers to an axis along the upper-lower direction of the human body and perpendicular to the horizontal plane. In some embodiments, an "anterior side of the ear" of the present disclosure is a concept with respect to a "posterior side of the ear." The anterior side refers to a side of the ear away from the head, and the posterior side refers to a side of the ear facing the head, both of which are directed toward the ear of the user. By observing an ear of the simulator along a direction where the coronal axis of the human body is located, a schematic diagram of an anterior side profile of the ear 100 can be obtained as shown in FIG. 1.

In some embodiments, in combination with FIGs. 2-5, each of at least one earphone 10 may include a core module 11 and a hook structure 12 connected to the core module 11. The core module 11 may be disposed on an anterior side of an ear in a wearing state, and at least a portion of the hook structure 12 may be disposed on a posterior side of the ear in the wearing state, so as to dispose the earphone 10 on the ear in the wearing state. The core module 11 may include a connection end CE connected to the hook structure 12 and a free end FE not connected to the hook structure 12. In some embodiments, the core module 11 may be disposed not to block an external ear canal in the wearing state, so that the earphone 10 serves as an "open earphone." Due to individual differences between different users, when the earphone 10 is worn by different users, the core module 11 may partially block the external ear canal, but the external ear canal may remain unblocked.

In order to improve the stability of the earphone 10 in the wearing state, one or more following manners may be used in the earphone 10. Firstly, at least a portion of the hook structure 12 may be disposed as a profiling structure that fits with at least one of the posterior side of the ear and the head to increase a contact area between the hook structure 12 and the ear and/or the head, thereby increasing a resistance of the earphone 10 from falling off from the ear. Secondly, at least a portion of the hook structure 12 may be disposed as an elastic structure to have a certain amount of deformation in the wearing state, so as to increase a positive pressure of the hook structure 12 on the ear and/or the head, thereby increasing the resistance of the earphone 10 from falling off from the ear. Thirdly, at least a portion of the hook structure 12 may be disposed to abut against the head in the wearing state to form a counterforce that presses on the ear, so as to press the core module 11 on the anterior side of the ear, thereby increasing the resistance of the earphone 10 from falling off from the ear. Fourthly, the core module 11 and the hook structure 12 may be disposed to clamp one or more physiological parts (e.g., a region where an antihelix is located, a region where a cavity of auricular concha is located, etc.) from the anterior and posterior sides of the ear in the wearing state, thereby increasing the resistance of the earphone 10 from falling off from the ear. Fifthly, at least a portion of the core module 11 or an auxiliary structure connected to the core module 11 may be disposed to extend into the physiological part(s) (e.g., the cavity of auricular concha, a cymba of auricular concha, a triangular fossa, a scapha, etc.), thereby increasing the resistance of the earphone 10 from falling off from the ear.

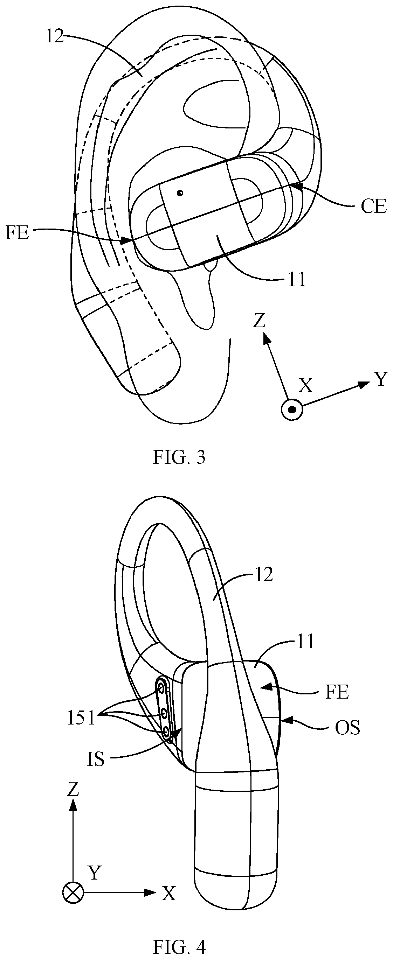

In some embodiments, in combination with FIG. 3, in the wearing state, the free end FE of the core module 11 may extend into the cavity of auricular concha. The core module 11 and the hook structure 12 may be disposed to jointly clamp anterior and posterior sides of an ear region corresponding to the cavity of auricular concha, so as to increase the resistance of the earphone 10 from falling off from the ear, thereby improving the stability of the earphone 10 in the wearing state. For example, the free end FE may press into the cavity of auricular concha in a thickness direction X. As another example, the free end FE may abut against the cavity of auricular concha in a length direction Y and a width direction Z.

It should be noted that in the wearing state, in addition to extending into the concha cavity, the free end FE of the core module 11 can not only be projected orthogonally on the antihelix, but also can be projected orthogonally on left and right sides of the head and be located at a position of the anterior side of the ear on the sagittal axis of the human body. In other words, the hook structure 12 may support the core module 11 to be worn to wearing positions of the cavity of auricular concha, the antihelix, the anterior side of the ear, etc.

In some embodiments, in combination with FIGs. 3 and 4, in the wearing state, the core module 11 may include an inner side surface IS facing the ear along the thickness direction X, an outer side surface OS away from the ear along the thickness direction X, and a connection surface connecting the inner side surface IS and the outer side surface OS. The thickness direction X may be defined as a direction in which the core module 11 approaches or moves away from the ear in the wearing state. In some embodiments, at least a portion of the connection surface may be disposed within the cavity of auricular concha in the wearing state, and form a first contact region with the anterior side of the ear. The hook structure 12 may form a second contact region with the posterior side of the ear in the wearing state. The second contact region and the first contact region may at least partially overlap along the thickness direction of the ear region. In this way, not only the core module 11 and the hook structure 12 can jointly clamp the ear from the anterior and posterior sides of the ear, but also a clamping force formed can be mainly manifested as a compressive stress, which improves the stability and comfort of the earphone 10 in the wearing state.

It should be noted that in the wearing state and viewed along a direction where the coronal axis is located, the core module 11 may be disposed as a shape, such as a circle, an oval, a rounded square, a rounded rectangle, etc. When the core module 11 is disposed as a shape, such as the circle, the oval, etc., the connection surface may refer to a curved side surface of the core module 11. When the core module 11 is disposed as a shape, such as the rounded corner square, the rounded corner rectangle, etc., the connection surface may include a lower side surface LS, an upper side surface US, and a rear side surface RS as mentioned later. In some embodiments, the core module 11 may have the length direction Y and the width direction Z perpendicular to the thickness direction X, and the length direction Yand the width direction Z may be orthogonal to each other. The length direction Y may be defined as a direction in which the core module 11 approaches or moves away from the back of the user's head in the wearing state, and the width direction Z may be defined as a direction in which the core module 11 approaches or moves away from the top of the user's head in the wearing state. Therefore, for the convenience of description, the core module 11 being disposed as the rounded rectangle may be taken as an example for illustration in the present embodiment. A length of the core module 11 along the length direction Y may be greater than a width of the core module 11 along the width direction Z.

In some embodiments, in combination with FIGs. 2, 3, and 5, in the wearing state and viewed along the direction where the coronal axis of the human body is located, the connection end CE may be closer to the top of the head than the free end FE, so as to facilitate the free end FE to extend into the cavity of auricular concha. Based on this, an included angle between the length direction Y and a direction where the sagittal axis of the human body is located may be within a range of 15 degrees to 60 degrees. If the included angle is too small, the free end FE may be unable to extend into the cavity of auricular concha, and a sound outlet hole 111a on the core module 11 may be too far away from the external ear canal. If the included angle is too large, the free end FE may also be unable to extend into the cavity of auricular concha, and the external ear canal may be blocked by the core module 11. In other words, by disposing the included angle in such a manner, not only the free end FE can be able to extend into the cavity of auricular concha, but also a suitable distance between the sound outlet hole 111a on the core module 11 and the external ear canal can be disposed, so that sound waves generated by the core module 11 that the user can hear are increased when the external ear canal is not blocked.

In some embodiments, in combination with FIG. 4, an orthographic projection of the hook structure 12 on a reference plane (e.g., an XZ plane in FIG. 4) perpendicular to the length direction Y may partially overlap with an orthographic projection of the free end FE on the reference plane. An overlapping region formed by the orthographic projection of the hook structure 12 on the reference plane and the orthographic projection of the free end FE on the reference plane may be located between the inner side surface IS and the outer side surface OS in the thickness direction X. In this way, not only the core module 11 and the hook structure 12 can jointly clamp the ear from the anterior and posterior sides of the ear, but also the clamping force formed may be mainly manifested as the compressive stress, which improves the stability and comfort of the earphone 10.

In some embodiments, in combination with FIGs. 2, 4, 5, and 9, the hook structure 12 may include an elastic metal wire 121 connected to the core module 11 and a battery housing 123 connected to an end of the elastic metal wire 121 away from the core module 11. A battery 14 coupled to the core module 11 may be disposed in the battery housing 123. An orthographic projection of the battery housing 123 on the reference plane may partially overlap with the orthographic projection of the free end FE on the reference plane. In this way, when the free end FE abuts against the cavity of auricular concha, the battery housing 123 can support the ear from the posterior side of the ear, which improves the stability of the earphone 10 in the wearing state. The battery housing 123 may include a housing cover 1231 connected to the elastic metal wire 121 and a battery compartment 1232 connected to the housing cover 1231. The battery compartment 1232 and the housing cover 1231 may cooperate with each other to form a chamber structure for accommodating the battery 14.

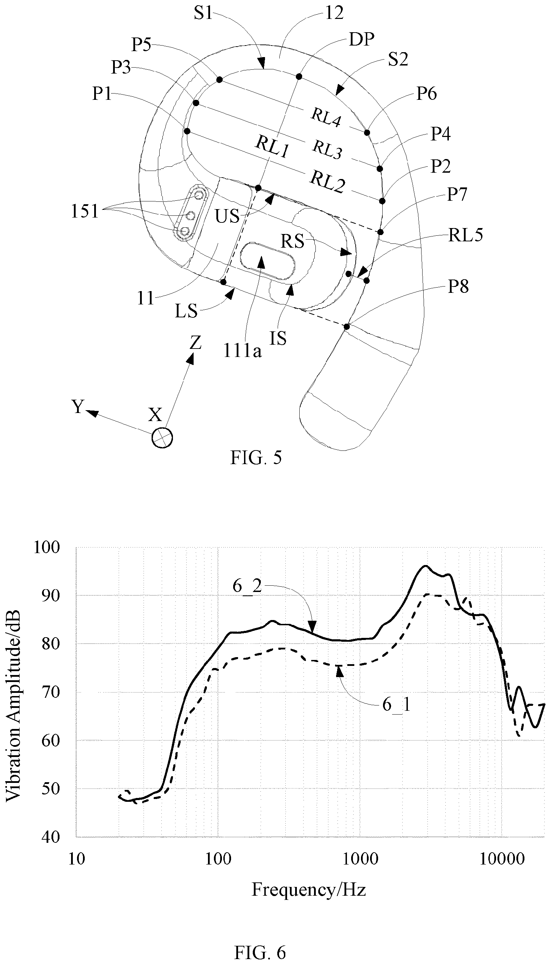

In some embodiments, in combination with FIG. 5, in the wearing state, the core module 11 may include the upper side surface US away from the external ear canal along the width direction Z, the lower side surface LS facing the external ear canal along the width direction Z, and the rear side surface RS connecting the upper side surface US and the lower side surface. The rear side surface RS may be disposed at an end of the length direction Y facing the back of the head in the wearing state, and at least a portion of the rear side surface RS may be disposed within the cavity of auricular concha. An edge of an orthographic projection of the hook structure 12 on a reference plane (e.g., a YZ plane in FIG. 5) perpendicular to the thickness direction X facing the core module 11 may be divided into a first section S1 and a second section S2 in a continuous arcuate transition. A demarcation point DP between the first section S1 and the second section S2 may be a location where the edge is furthest away from the upper side surface US along the width direction Z. In some embodiments, an overall degree of curvature of the hook structure 12 in the first section S1 may be greater than an overall degree of curvature of the hook structure 12 in the second section S2. In this way, not only the free end FE can be allowed to extend into the cavity of auricular concha, but also the hook structure 12 can cooperate with the core module 11 to provide a suitable clamping force.

It should be noted that the above overall degree of curvature may be used to qualitatively characterize a degree of curvature of different sections of the hook structure 12. A radius of curvature of each section may be a constant value or be continuously varied. Therefore, there may be at least one point within the first section S1 having a radius of curvature that is smaller than a radius of curvature of any point within the second section S2. In some embodiments, the overall degree of curvature may also be quantitatively characterized by an average radius of curvature. That is, radii of curvature of N points on each section may be determined, and then averaged to obtain the average radius of curvature of each section.

In some embodiments, a length of the second section S2 may be greater than a length of the first section S1 in an extension direction of the hook structure 12, so as to facilitate the clamping of the ear by the hook structure 12 together with the core module 11, and to increase a contact area between the hook structure 12 and the user's skin, thereby improving the stability of the earphone 10 in the wearing state.

In some embodiments, the earphone 10 may include a first reference line section RL1 parallel to the width direction Z. A starting point of the first reference line section RL1 may be a point where the first reference line section RL1 intersects with the upper side surface US, and an ending point of the first reference line section RL1 may be the demarcation point DP. A second reference line section RL2, a third reference line section RL3, and a fourth reference line section RL4 as mentioned later may be sequentially increasingly farther away from the starting point of the first reference line section RL1 in the width direction Z. In some embodiments, a length of the first reference line section RL1 may be within a range of 13 millimeters (mm) to 20 mm. If the length of the first reference line section RL1 is too small, the free end FE may be unable to extend into the cavity of auricular concha, and the sound outlet hole 111a on the core module 11 may be too far away from the external ear canal. If the length of the first reference line section RL1 is too large, the free end FE may also be unable to extend into the cavity of auricular concha, and the external ear canal may be blocked by the core module 11. In other words, by disposing the length of the first reference line section RL1 in such a manner, not only the free end FE can be able to extend into the cavity of auricular concha, but also the suitable distance between the sound outlet hole 111a on the core module 11 and the external ear canal can be disposed, so that sound waves generated by the core module 11 that the user can hear are increased when the external ear canal is not blocked.

In some embodiments, the second reference line section RL2 passing 1/4 of the first reference line section RL1 and parallel to the length direction Y may intersect with the first section S1 and the second section S2 at a first intersection point P1 and a second intersection point P2, respectively. A distance between the first intersection point P1 and the starting point of the first reference line section RL1 may be within a range of 9 mm to 15 mm, and a distance between the second intersection point P2 and the starting point of the first reference line section RL1 may be within a range of 12 mm to 19 mm. The third reference line section RL3 passing through 1/2 of the first reference line section RL1 and parallel to the length direction Y may intersect with the first section S1 and the second section S2 at a third intersection point P3 and a fourth intersection point P3, respectively. A distance between the third intersection point P3 and the starting point of the first reference line section RL1 may be within a range of 11 mm to 18 mm, and a distance between the fourth intersection point P4 and the starting point of the first reference line section RL1 may be within a range of 12 mm to 19 mm. The fourth reference line section RL4 passing through 3/4 of the first reference line section RL1 and parallel to the length direction Y may intersect with the first section S1 and the second section S2 at a fifth intersection point P5 and a sixth intersection point P6, respectively. A distance between the fifth intersection point P5 and the starting point of the first reference line section RL1 may be within a range of 12 mm to 19 mm, and a distance between the sixth intersection point P6 and the starting point of the first reference line section RL1 may be within a range of 12 mm to 19 mm. In this way, when the free end FE extends into the cavity of auricular concha, and the suitable distance between the sound outlet hole 111a on the core module 11 and the external ear canal is disposed, the hook structure 12 can be better fit with the ear.

In some embodiments, there may be a fifth reference line section RL5 with a shortest spacing along the length direction Y between the second section S2 and the rear side surface RS. A length of the fifth reference line section RL5 may be within a range of 2 mm to 3 mm. If the length of the fifth reference line section RL5 is too small, the clamping force provided by the core module 11 and the hook structure 12 on the ear may be too large, causing wearing discomfort. If the length of the fifth reference line section RL5 is too large, the clamping force provided by the core module 11 and the hook structure 12 on the ear may be too small, causing wearing instability. In other words, by disposing the length of the fifth reference line section RL5 in such a manner, the stability and comfort of the earphone 10 in the wearing state can be considered.

In some embodiments, the fifth reference line section RL5 may be defined by designating a point where the fifth reference line section RL5 intersects with the rear side surface RS as a starting point of the fifth reference line section RL5, and designating a point where the fifth reference line section RL5 intersects with the second section S2 as an ending point of the fifth reference line section RL5. An orthographic projection of an intersection point between the first reference line section RL1 and the upper side surface US along the length direction Y may intersect with the second section S2 at a seventh intersection point P7, and an orthographic projection of an intersection point between an extension line of the first reference line section RL1 and the lower side surface LS along the length direction Y may intersect with the second section S2 at an eighth intersection point P8. A distance between the seventh intersection point P7 and the starting point of the fifth reference line section RL5 may be within a range of 5 mm to 9 mm, and a distance between the eighth intersection point P8 and the starting point of the fifth reference line section RL5 may be within a range of 5 mm to 9 mm. In this way, the hook structure 12 can be better fit with the ear while the stability and comfort of the earphone 10 in the wearing state can be considered.

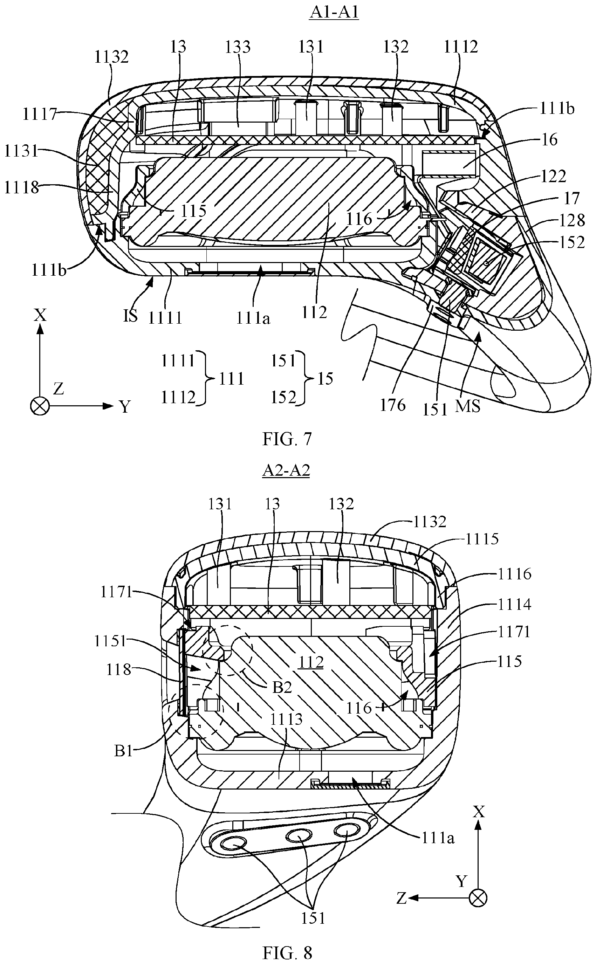

In some embodiments, in combination with FIGs. 7, 8, and 5, the core module 11 may include a core housing 111 connected to the hook structure 12 and a loudspeaker 112 disposed within the core housing 111. An inner side surface (e.g., the inner side surface IS) of the core housing 111 facing the ear in the wearing state may be disposed with the sound outlet hole 111a, and the sound waves generated by the loudspeaker 112 may be propagated out through the sound outlet hole 111a, so as to be easily transmitted into the external ear canal. It should be noted that, the sound outlet hole 111a may also be disposed on a side of the core housing 111 corresponding to the lower side surface LS, and may also be disposed at a corner between the inner side surface and the lower side surface LS. In some embodiments, the loudspeaker 112 may include a magnetic circuit system, a voice coil extending into the magnetic circuit system, and a diaphragm connected to the voice coil. A magnetic field generated by the voice coil after being energized may interact with a magnetic field formed by the magnetic circuit system to drive the diaphragm to generate mechanical vibrations, and then a sound may be generated by propagating the mechanical vibrations through media, such as air, etc.

In some embodiments, in combination with FIGs. 7-9, the earphone 10 may include a main control circuit board 13 disposed within the core housing 111 and the battery 14 disposed at one end of the hook structure 12 away from the core module 11. The battery 14 and the loudspeaker 112 may be coupled to the main control circuit board 13, respectively, to allow the battery 14 to power the loudspeaker 112 under the control of the main control circuit board 13. In some embodiments, both the battery 14 and the loudspeaker 112 may also be disposed within the core housing 111, and the battery 14 may be located closer to the connection end CE while the loudspeaker 112 may be located closer to the free end FE.

In some embodiments, in combination with FIGs. 3 and 1, since the cavity of auricular concha has a certain volume and depth, after the free end FE is extended into the cavity of auricular concha, there may be a certain spacing between the inner side surface IS of the core housing 111 and the cavity of auricular concha. In other words, the core module 11 may cooperate with the cavity of auricular concha in the wearing state to form an auxiliary chamber that is connected to the external ear canal, and at least a portion of the sound outlet hole 111a may be located within the auxiliary chamber. In this way, in the wearing state, the sound waves generated by the loudspeaker 112 and propagated through the sound outlet hole 111a may be limited by the auxiliary chamber. That is, the auxiliary chamber can aggregate the sound waves so that more of the sound waves can be propagated into the external ear canal, which increases the volume and sound quality of the sound heard by the user in a near field, thereby improving the acoustic effectiveness of the earphone 10. In some embodiments, since the core module 11 can be disposed not to block the external ear canal in the wearing state, the auxiliary chamber may be disposed in a semi-open arrangement. In this way, most of the sound waves generated by the speaker 112 and propagated through the sound outlet 111a may be propagated to the external auditory canal, and a small portion of the sound waves may be propagated to the earphone 10 and outside the ear via a gap between the core module 11 and the ear (e.g., a portion of the cavity of auricular concha that is not covered by the core module 11), thereby forming a first sound leakage in a far field. At the same time, the core module 11 is generally disposed with an acoustic hole (e.g., a pressure relief hole 111c as mentioned later), and sound waves propagated through the acoustic hole generally form a second sound leakage in the far field. A phase of the first sound leakage and a phase of the second sound leakage are (proximity) opposite to each other, so that the two sound leakages can be canceled out in the far field inversely, thereby reducing the sound leakage of the earphone 10 in the far field.

In some embodiments, the earphone 10 may include an adjusting mechanism connecting the core module 11 and the hook structure 12. Different users can adjust a relative position of the core module 11 on the ear in the wearing state through the adjusting mechanism, so as to cause the core module 11 to be located at a suitable position, thereby causing the core module 11 to form the auxiliary chamber with the cavity of auricular concha. Besides, due to the presence of the adjusting mechanism, the user can adjust the earphone 10 to be worn in a more stable and comfortable position.

In some embodiments, in combination with FIG. 6, the earphone 10 was first worn on the simulator, a position of the core module 11 was adjusted on an ear of the simulator, and then a frequency response curve of the earphone 10 was measured by a detector (e.g., a microphone) disposed within an external ear canal (e.g., a position of a tympanic membrane, i.e., a listening position) of the simulator, so as to simulate a listening effectiveness of the user after wearing the earphone 10. The frequency response curve may be used to characterize a changing relationship between a vibration magnitude and a frequency. A horizontal coordinate of the frequency response curve may be denoted as a frequency in hertz (Hz), and a vertical coordinate of the frequency response curve may be denoted as a vibration magnitude in decibels (dB). As illustrated in FIG. 6, a curve 6_1 may represent a frequency response curve when the core module 11 is in the wearing state without forming the auxiliary chamber with the cavity of auricular concha, and a curve 6_2 may represent a frequency response curve when the core module 11 is in the wearing state with forming the auxiliary chamber with the cavity of auricular concha. Based on this, from a comparison diagram of the frequency response curves shown in FIG. 6, it can be directly and unquestionably concluded that the curve 6_2 is located overall above the curve 6_1. That is, compared with the core module 11 not forming the auxiliary chamber with the cavity of auricular concha in the wearing state, the core module 11 forming the auxiliary chamber with the cavity of auricular concha in the wearing state can improve the acoustic effectiveness of the earphone 10.

In some embodiments, in combination with FIGs. 7, 9, and 11, the core module 11 may include a flexible insert 1131 disposed outside the core housing 111. A hardness of the flexible insert 1131 may be smaller than a hardness of the core housing 111. The core housing 111 may be a plastic component. The flexible insert 1131 may be made of silicone, rubber, etc., and may be formed on a predetermined region of the core housing 111 by injection molding. In some embodiments, at least a portion of the flexible insert 1131 may cover a region of the core housing 111 corresponding to the free end FE, such that at least a portion of the core module 11 abuts against the cavity of auricular concha through the flexible insert 1131. In other words, the portion of the core housing 111 that extends into the cavity of auricular concha and is in contact with the cavity of auricular concha may be covered by the flexible insert 1131. In this way, when the core module 11 abuts against the cavity of auricular concha, for example, when the core module 11 and the hook structure 12 are disposed to jointly clamp the ear from the anterior and posterior sides of the ear region corresponding to the cavity of auricular concha of the ear, the flexible insert 1131 may serve as a cushioning effect between the core housing 111 and the ear (e.g., the ear region) to relieve a pressure of the earphone 10 on the ear, thereby improving the comfort of the earphone 10 in the wearing state.

In some embodiments, the flexible insert 1131 may successively cover at least a portion of regions of the core housing 111 corresponding to the rear side surface RS, the upper side surface US, and the lower side surface LS. For example, a region of the core housing 111 corresponding to the rear side surface RS may be covered more than 90% by the flexible insert 1131, and regions of the core housing 111 corresponding to the upper side surface US and the lower side surface LS may be respectively covered about 30% by the flexible insert 1131. In this way, the comfort of the earphone 10 in the wearing state and the need for structural components such as the loudspeaker 112 disposed in the core housing 111 may be considered.

In some embodiments, the flexible insert 1131 may have a U-shape viewed along the thickness direction X.

In some embodiments, a portion of the flexible insert 1131 corresponding to the lower side surface LS may abut against the tragus. A thickness of a portion of the flexible insert 1131 corresponding to the rear side surface RS may be smaller than a thickness of a portion of the flexible insert 1131 corresponding to the upper side surface US and a thickness of the portion of the flexible insert 1131 corresponding to the lower side surface LS, respectively, which provides good comfort even when the core module 11 abuts against an uneven position within the cavity of auricular concha.

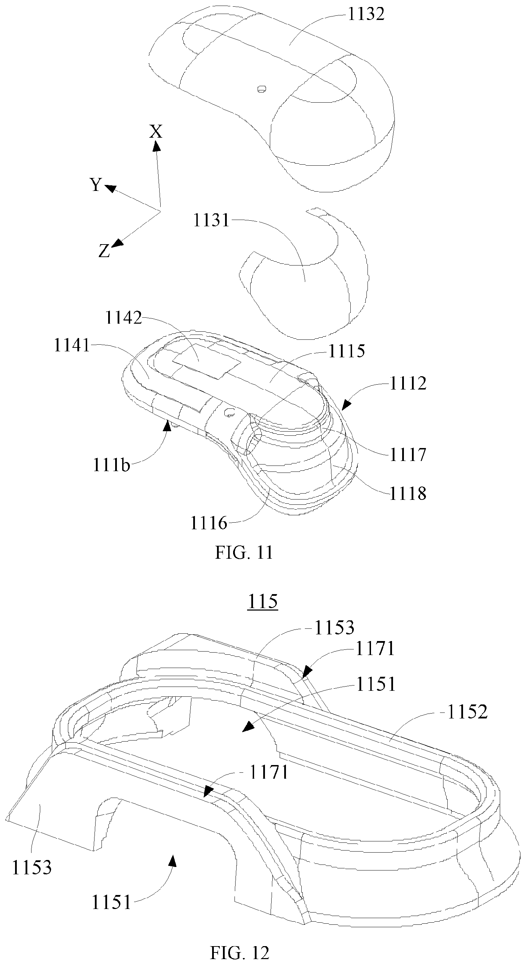

In some embodiments, in combination with FIGs. 7 and 8, the core housing 111 may include a core inner housing 1111 and a core outer housing 1112 snap-fit with each other along the thickness direction X. The core inner housing 1111 may be closer to the ear than the core outer housing 1112 in the wearing state. A parting surface 111b between the core outer housing 1112 and the core inner housing 1111 may be inclined toward a side where the core inner housing 1111 is located in a direction close to the free end FE, which causes the flexible insert 1131 to be disposed in the region of the core housing 111 corresponding to the free end FE as much as possible. For example, in combination with FIG. 11, the whole flexible insert 1131 may be disposed in the region of the core housing 111 corresponding to the free end FE to simplify a structure of the core module 11 and reduce a processing cost.

In some embodiments, in combination with FIGs. 7, 8, and 11, the core module 11 may include a flexible coating 1132. A hardness of the flexible coating 1132 may be smaller than the hardness of the core housing 111. The core housing 111 may be a plastic fabrication. The flexible coating 1132 may be made of silicone, rubber, etc., and may be formed on a predetermined region of the core housing 111 by injection molding, glue connection, etc. In some embodiments, the flexible coating 1132 may integrally cover at least a portion of an outer surface of the flexible insert 1131 and at least a portion of an outer surface of the core outer housing 1112 that is not covered by the flexible insert 1131, which improves the consistency of the core module 11 in appearance. In some embodiments, the flexible coating 1132 may further cover an outer surface of the core inner housing 1111. The hardness of the flexible insert 1131 may be smaller than the hardness of the flexible coating 1132 to allow the flexible insert 1131 to be soft enough. Besides, the flexible coating 1132 can also improve the comfort of the earphone 10 in the wearing state and have a certain structural strength to protect the flexible insert 1131. In some embodiments, an area of the outer surface of the flexible insert 1131 may be within a range of 126 square millimeters (mm²) to 189 mm². If the area is too small, the comfort of the core module 11 in the wearing state can be reduced. If the area is too large, the volume of movement module 11 can be too large, and an area of the flexible insert 1131 not against the cavity of auricular concha can be too large, which deviates from an original purpose of disposing the flexible insert 1131. In some embodiments, a thickness of the flexible coating 1132 may be smaller than a thickness of the core outer housing 1112.

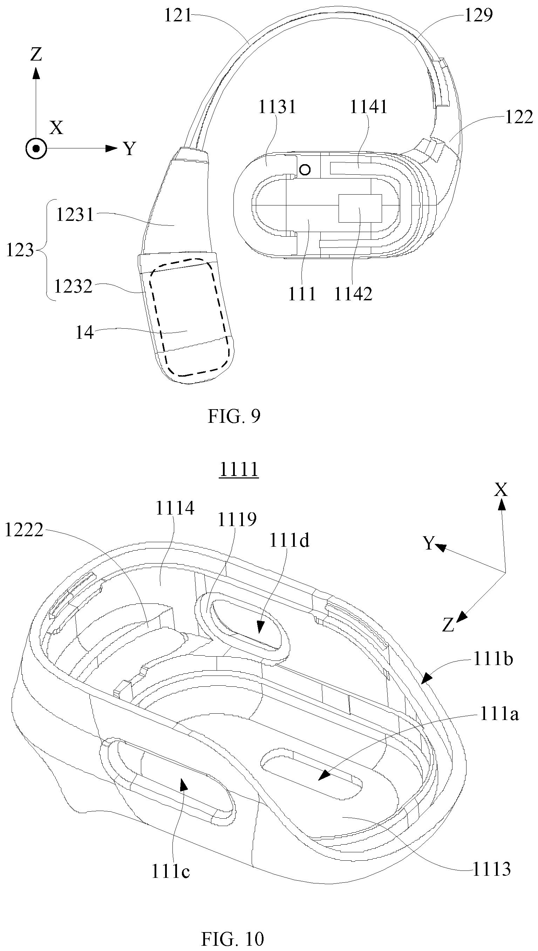

In some embodiments, in combination with FIGs. 11 and 9, the core module 11 may include a metallic function pattern, such as an antenna pattern 1141 and/or a touch pattern 1142 disposed between the core outer housing 1112 and the flexible coating 1132. The antenna pattern 1141 may be molded on an outer side of the core outer housing 1112 using a laser-direct-structuring (LDS) technique. The touch pattern 1142 may be molded on the outer side of the core outer housing 1112 using the LDS technique, or may be a flexible touch circuit board attached to the outer side of the core outer housing 1112. In some embodiments, the core outer housing 1112 may be disposed with metalized holes connected to the antenna pattern 1141 and the touch pattern 1142, respectively. At this time, since the main control circuit board 13 is disposed in the core housing 111 (e.g., the main control circuit board 13 is connected to the core outer housing 1112), the main control circuit board 13 may be in contact with an inner wall of a corresponding metalized hole through an elastic metal component (e.g., a pogo-PIN, a metal shrapnel, etc.). For example, the antenna pattern 1141 and the touch pattern 1142 may be connected to a pogo-PIN 131 and a pogo-PIN 132 soldered on the main control circuit board 13, respectively. Correspondingly, the loudspeaker 112 may be disposed on a side of the main control circuit board 13 away from the core outer housing 1112. In this way, compared to the antenna pattern 1141 and the touch control pattern 1142 being disposed on an inner side of the core outer housing 1112 facing the loudspeaker 112, respectively, the antenna pattern 1141 may be disposed on the outer side of the core outer housing 1112, which can increase a spacing between the antenna pattern 1141 and the main control circuit board 13. That is, an antenna headroom region can be improved, thereby increasing the interference immunity of the antenna pattern 1141. By disposing the touch pattern 1142 on the outer side of the core outer housing 1112, a spacing between the touch pattern 1142 and an external signal trigger source (e.g., a user's finger) may be shortened. That is, a touch spacing can be reduced, thereby increasing the sensitivity of the touch pattern 1142 to be triggered by the user.

In some embodiments, the antenna pattern 1141 may surround a periphery of the touch pattern 1142 to make full use of a space of the outer side of the core outer housing 1112. The antenna pattern 1141 may have a U-shape, and the touch pattern 1142 may have a square shape.

In some embodiments, the core module 11 may include a microphone 133 soldered on the main control circuit board 13. The microphone 133 may pick up a user voice and environment sound through a sound pickup through hole disposed in the core outer housing 1112. When the main control circuit board 13 is connected to the core outer housing 1112, the microphone 133 may be further pressed against the core outer housing 1112.

In some embodiments, in combination with FIGs. 10 and 11, the core inner housing 1111 may include a bottom wall 1113 and a first side wall 1114 connected to the bottom wall 1113, and the core outer housing 1112 may include a top wall 1115 and a second side wall 1116 connected to the top wall 1115. The second side wall 1116 and the first side wall 1114 may be snap-fit to each other along the parting surface 111b, and may support each other. Viewed along the width direction Z and in a reference direction (e.g., an opposite direction of an arrow Y in FIGs. 10 and 11) that the connection end CE points to the free end FE, a portion of the first side wall 1114 close to the free end FE may be progressively closer to the bottom wall 1113 in the thickness direction X, and a portion of the second side wall 1116 close to the free end FE may be progressively farther away from the top wall 1115 in the thickness direction X, such that the parting surface 111b is inclined toward the side where the core inner housing 1111 is located in the direction close to the free end FE. In this case, at least a portion of the flexible insert 1131 may be disposed on an outer side of the second side wall 1116. For example, in combination with FIGs. 11 and 9, a portion of the flexible insert 1131 may be disposed on an outer side of the top wall 1115 in addition to being disposed on the outer side of the second side wall 1116. Correspondingly, the sound outlet hole 111a may be disposed on the bottom wall 1113. In some embodiments, the sound outlet hole 111a may also be disposed on a side of the first side wall 1114 corresponding to the lower side surface LS, and may also be disposed at a corner between the first side wall 1114 and the bottom wall 1113. In some embodiments, the antenna pattern 1141, the touch pattern 1142, and their respective metalized holes may be disposed on the top wall 1115, and the sound pickup through hole of the microphone 133 may also be disposed on the top wall 1115.

In some embodiments, in combination with FIGs. 7 and 11, the core outer housing 1112 may be disposed with an embedding groove at least partially disposed on the second side wall 1116. The flexible insert 1131 may be embedded in the embedding groove, resulting in a continuous transition between an outer surface of a region of the core outer housing 1112 that is not covered by the flexible insert 1131 and the outer surface of the flexible insert 1131. A region where the flexible insert 1131 is located in FIG. 7 may be simply regarded as the embedding groove. In this way, it is not only beneficial for the flexible insert 1131 to be stacked on the core outer housing 1112 during the injection molding to avoid the flexible insert 1131 from overflowing, but is also beneficial to improve the appearance quality of the core module 11 to avoid the core module 11 from having a pitted surface.

In some embodiments, the second side wall 1116 may include a first sub-side wall segment 1117 and a second sub-side wall segment 1118 connected to the first sub-side wall segment 1117. The first sub-side wall segment 1117 may be closer to the top wall 1115 in the thickness direction X than the second sub-side wall segment 1118, and the second sub-side wall segment 1118 may protrude toward the outer side of the core housing 111 than the first sub-side wall segment 1117. In short, the second side wall 1116 may have a step-like structure. In this way, it is not only beneficial for the flexible insert 1131 to be stacked on the core outer housing 1112 during the injection molding to avoid the flexible insert 1131 from overflowing, but is also beneficial for the core module 11 to abut against the cavity of auricular concha through the flexible insert 1131, thereby improving the comfort of the earphone10 in the wearing state.

In some embodiments, the main control circuit board 13 may be connected to the core outer housing 1112 (e.g., fixed to a heat stack connected to the top wall 1115), and may partially overlap with the first sub-side wall segment 1117 in the thickness direction X. The loudspeaker 112 may partially overlap with the second sub-side wall segment 1118 in the thickness direction X. In this way, the loudspeaker 112 disposed in the core housing 111 may have a sufficiently large size, thereby enhancing a volume of the sound generated by the earphone 10.

In some embodiments, in combination with FIGs. 10 and 8, the core housing 111 may be disposed with the pressure relief hole 111c. The pressure relief hole 111c may be configured to connect a space on a side of the loudspeaker 112 facing the main control circuit board 13 and the external environment. That is, air can freely move in and out of the space. In this way, a resistance of the diaphragm of the loudspeaker 112 can be reduced during vibration. The pressure relief hole 111c may face the top of the head in the wearing state, which prevents the sound waves propagated through the pressure relief hole 111c from forming a sound leakage (i.e., the second sound leakage) and being heard. Based on a Helmholtz resonance cavity, an aperture of the pressure relief hole 111c may be as large as possible to shift a resonance frequency of the second sound leakage as much as possible towards a relatively high frequency band (e.g., a frequency range larger than 4 kilohertz (kHz)), which further avoids the second sound leakage from being heard.

In some embodiments, the core housing 111 may be disposed with a tuning hole 111d. The tuning hole 111d may be used to shift the resonant frequency of the second sound leakage as much as possible towards the relatively high frequency band (e.g., the frequency range larger than 4 kHz), which further prevents the second sound leakage from being heard. An area of the tuning hole 111d may be smaller than an area of the pressure relief hole 111c to allow the space on the side of the loudspeaker 112 facing the main control circuit board 13 to be more connected to the external environment through the pressure relief hole 111c. In some embodiments, a spacing between the sound outlet hole 111a and the pressure relief hole 111c in the width direction Z may be greater than a spacing between the sound outlet hole 111a and the tuning hole 111d in the width direction Z, so as to avoid sound waves respectively propagating through the sound outlet hole 111a and the pressure relief hole 111c to be canceled out in the near field inversely, thereby increasing the volume of the sound propagated through the sound outlet hole 111a heard by the user. Correspondingly, the tuning hole 111d may be closer to the connection end CE than the sound outlet hole 111a to increase a spacing between the tuning hole 111d and the sound outlet hole 111a in the length direction Y, so as to avoid the sound waves respectively propagating through the sound outlet hole 111a and the tuning hole 111d to be canceled in the near field inversely, thereby increasing the volume of the sound propagated through the sound outlet hole 111a heard by the user.

In some embodiments, in combination with FIG. 10, the sound outlet hole 111a, the pressure relief hole 111c, and the tuning hole 111d may be disposed on the core inner housing 1111. For example, the sound outlet hole 111a may be disposed on the bottom wall 1113, and the pressure relief hole 111c and the tuning hole 111d may be disposed on the first side wall 1114, respectively. For instance, the pressure relief hole 111c and the tuning hole 111d may be disposed on opposite sides of the first side wall 1114 along the width direction Z, respectively. In this way, since the sound outlet hole 111a, the pressure relief hole 111c, and the tuning hole 111d are disposed on the core inner housing 1111, the structure of the core outer housing 1112 can be simplified, thereby reducing the processing cost. In addition, since the pressure relief hole 111c and the tuning hole 111d are respectively disposed on the opposite sides of the first side wall 1114 along the width direction Z, the parting surface 111b may be symmetrically disposed with respect to a reference plane perpendicular to the width direction Z, thereby improving the appearance quality of the core module 11.

In some embodiments, in combination with FIGs. 7 and 8, the core module 11 may include a bracket 115 disposed within the core housing 111. The bracket 115 and the loudspeaker 112 may be surrounded to form an acoustic chamber 116 to separate the acoustic chamber 116 from other structures (e.g., the main control circuit board 13, etc.) within the core housing 111, thereby improving the acoustic performance of the core module 11. The core housing 111 may be disposed with an acoustic hole. For example, the acoustic hole may include at least one of the pressure relief hole 111c or the tuning hole 111d. The bracket 115 may be disposed with an acoustic channel 1151 connecting the acoustic hole and the acoustic chamber 116, so as to allow the acoustic chamber 116 to be connected to the external environment. That is, air can freely move in and out of the acoustic chamber 116. In this way, the resistance of the diaphragm of the loudspeaker 112 can be reduced during vibration.

In some embodiments, the bracket 115 may cooperate with the core housing 111 to form a first glue accommodation groove 1171 surrounding at least a portion of the acoustic hole. The first glue accommodation groove 1171 may accommodate first glue for sealing an assembly gap between the bracket 115 and the core housing 111. That is, the first glue may be used for waterproof sealing, which avoids external sweat, rain, etc. from intruding into a space where the main control circuit board 13 is located in the movement housing 111. In this way, based on the Helmholtz resonance cavity, compared to a related technique that a silicone sleeve is pressed on the core housing 111 through the bracket 115 for waterproof sealing, the waterproof sealing through the first glue in the present disclosure may eliminate the silicone sleeve in the related technique, which shortens a length of a connection portion (including the acoustic channel 1151 and the acoustic hole) between the acoustic chamber 116 and the external environment, so as to shift the resonant frequency of the sound leakage (i.e., the second sound leakage) propagated out through the pressure relief hole 111c as much as possible towards the relatively high frequency band (e.g., the frequency range larger than 4 kHz), which further avoids the second sound leakage from being heard.

It should be noted that when the acoustic hole includes the pressure relief hole 111c, the first glue accommodation groove 1171 may surround at least a portion of the pressure relief hole 111c. When the acoustic hole includes the tuning hole 111d, the first glue accommodation groove 1171 may surround at least a portion of the tuning hole 111d. When the acoustic hole includes the pressure relief hole 111c and the tuning hole 111d, the first glue accommodation groove 1171 may surround at least a portion of the pressure relief hole 111c and the tuning hole 111d, respectively. For the convenience of description and in combination with FIGs. 8, 10, and 12, the acoustic hole including the pressure relief hole 111c and the sound tuning hole 111d, and the first glue accommodation groove 1171 respectively surrounding at least a portion of the pressure relief hole 111c and tuning hole 111d are taken as an example in the present disclosure. In some embodiments, if a gap between the bracket 115 and the core housing 111 (e.g., the bottom wall 1113) is sufficiently large, or if the bottom wall 1113 and the first side wall 1114 in the core housing 111 are not an integrally molded structural member (i.e., two separate structural members), the first glue accommodation groove 1171 may surround the whole acoustic hole. That is, the first glue accommodation groove 1171 may be an integrally ring-shaped structure.

In some embodiments, in combination with FIGs. 12 and 10, the bracket 115 may include an annular body part 1152 and a docking part 1153 connected to the annular body part 1152. The annular body part 1152 may be sleeved on the periphery of the loudspeaker 112 to form the acoustic chamber 116. The acoustic channel 1151 may penetrate through the docking part 1153 and the annular body part 1152. In some embodiments, the docking part 1153 may be disposed between the annular body part 1152 and the core housing 111, and surround at least a portion of the acoustic hole. The docking part 1153 may cooperate with the core housing 111 to form the first glue accommodation groove 1171. Since the acoustic hole may include the pressure relief hole 111c and the tuning hole 111d, two docking parts 1153 may be accordingly disposed, and two first glue-holding grooves 1171 may be accordingly disposed. Correspondingly, the docking part 1153 may cooperate with the first side wall 1114 to form the first glue-holding groove 1171. In this way, since the bracket 115 has an annular shape, a side of the loudspeaker 112 facing the main control circuit board 13 may be exposed, which reduces the thickness of the core module 11 in the thickness direction X.

In some embodiments, in combination with FIGs. 10 and 8, an inner side of the core housing 111 may be disposed with a depression region 1119. The acoustic hole may be disposed on a bottom of the depression region 1119. The core module 11 may include a sound barrier mesh 118 disposed within the depression region 1119. The docking part 1153 may press the sound barrier mesh 118 on the bottom of the depression region 1119. In this way, not only the bracket 115 can be avoided from scraping the sound barrier mesh 118 during the assembly, but also assembly gaps can be narrowed between the bracket 115, the sound barrier mesh 118, and the core inner housing 1111, thereby preventing the sound barrier mesh 118 from wobbling. The sound barrier mesh 118 may be pre-fixed to the bottom of the depression region 1119 through double-sided tape or glue. Alternatively, the sound barrier mesh 118 may be pre-fixed to a protective steel mesh, and then the protective steel mesh may be pre-fixed to the bottom of the depression region 1119 through the double-sided tape or glue. Correspondingly, since the acoustic hole may include the pressure relief hole 111c and the tuning hole 111d, two depression regions 1119 may be accordingly disposed, and two sound barrier meshes 118 may be accordingly disposed.

In some embodiments, the first glue may be further used to seal the assembly gap between the bracket 115 and the sound barrier mesh 118 and/or the assembly gap between the sound barrier mesh 118 and the core housing 111 (e.g., a side wall of the depression region 1119), thereby further improving waterproof sealing.

In some embodiments, in combination with FIGs. 8, 10, and 12, the docking part 1153 may be used to form a bottom wall and a side groove wall of the first glue accommodation groove 1171, and the core housing 111 may be used to form another side groove wall of the first glue-holding groove 1171. The side groove wall on the core housing 111 may be disposed opposite to the side groove wall on the docking part 1153, so that the first glue accommodation groove 1171 has a certain width and depth. In some embodiments, the docking part 1153 may be used to form the side groove wall of the first glue accommodation groove 1171, and the core housing 111 may be used to form the bottom wall and another side groove wall of the first glue accommodation groove 1171. Alternatively, the docking part 1153 may be used to form the side groove wall and a portion of the bottom wall of the first glue accommodation groove 1171, and the core housing 111 may be used to form another side groove wall and another portion of the bottom wall of the first glue accommodation groove 1171.

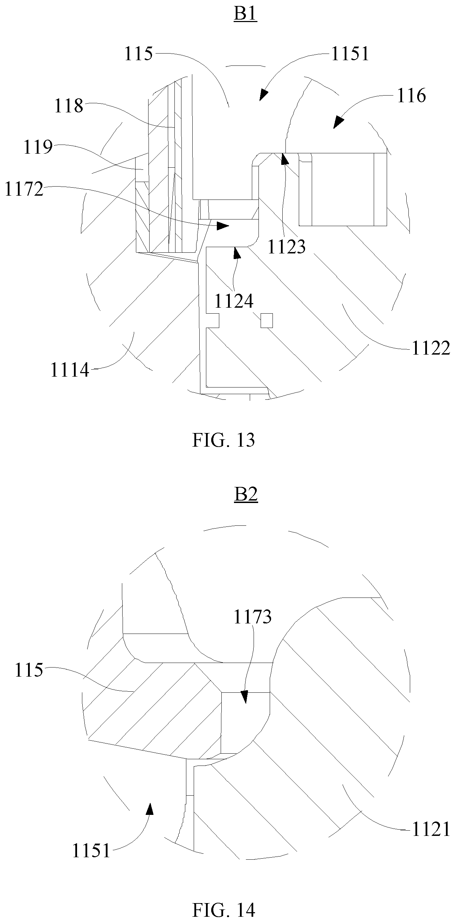

In some embodiments, in combination with FIGs. 12-14, the loudspeaker 112 may include a body 1121 and an annular bearing platform 1122 disposed along a circumferential direction of the body 1121. A lower end of the bracket 115 may be supported on the annular bearing platform 1122. A side of the acoustic channel 1151 facing the annular bearing platform 1122 may be openly disposed, and the annular bearing platform 1122 may further seal the open portion of the acoustic channel 1151. In this case, the first glue accommodation groove 1171 may be simply regarded as surrounding a portion of the acoustic hole, so as to facilitate subsequent filling of the first glue accommodation groove 1171 with glue through, for example, a dispensing operation.

In some embodiments, the annular bearing platform 1122 may include a first annular platform surface 1123 and a second annular platform surface 1124 disposed in a stepped manner. The second annular platform surface 1124 may be disposed around a periphery of the first annular platform surface 1123. A portion of the lower end of the bracket 115 may be supported on the first annular platform surface 1123, and another portion of the lower end of the bracket 115 may form a spacing region with the second annular platform surface 1124, so that the bracket 115, the annular bearing platform 1122, and the core housing 111 may cooperate with each other to form a second glue accommodation groove 1172. The second glue accommodation groove 1172 may accommodate second glue used for sealing assembly gaps between any two of the bracket 115, the annular bearing table 1122, and the core housing 111, thereby performing corresponding waterproof sealing.

In some embodiments, an upper end of the bracket 115 may be lapped on the body 1121, and cooperate with the body 1121 to form a third glue accommodation groove 1173. The third glue accommodation groove 1173 may accommodate third glue used for sealing an assembly gap between the bracket 115 and the body 1121, thereby performing corresponding waterproof sealing.

It is to be noted that a specific assembly process of the core module 11 may include following processing operations, and a sequence of the processing operations may be adjusted as needed. In operation 1), the sound barrier mesh 118 may be pre-fixed to the bottom of the depression region 1119 through the double-sided tape. In operation 2), the loudspeaker 112 may be fixed to the bottom wall 1113, and glue may be dispensed into an assembly gap between the loudspeaker 112 and the bottom wall 1113. A portion of the corresponding glue may be stacked on the second annular platform surface 1124 of the loudspeaker 112. In operation 3), before the glue in operation 2) is cured, the bracket 115 may be fixed to the loudspeaker 112. The lower end of the bracket 115 may be supported on the first annular platform surface 1123 of the loudspeaker 112, so that a region between the lower end of the bracket 115 and the second annular platform surface 1124 is also filled with the glue. The docking part 1153 of the bracket 115 may be pressed on the sound barrier mesh 118 and cooperate with the first side wall 1114 to form the first glue accommodation groove 1171. The upper end of the bracket 115 may be lapped on the body 1121 and cooperate with the body 1121 to form the third glue accommodation groove 1173. In operation 4), the first glue accommodation groove 1171, the third glue accommodation groove 1173, the assembly gap between the lower end of the bracket 115 and the loudspeaker 112, and the assembly gap between the lower end of the bracket 115 and the core inner housing 1111 may be dispensed with the glue. Since the assembly gap between the lower end of the bracket 115 and the loudspeaker 112 and the assembly gap between the lower end of the bracket 115 and the core inner housing 1111 are close to the first glue accommodation groove 1171, the assembly gap between the lower end of the bracket 115 and the loudspeaker 112 and the assembly gap between the lower end of the bracket 115 and the core inner housing 1111 may be simply regarded as continuations of the first glue accommodation groove 1171. That is, the first glue accommodation groove 1171 and the second glue accommodation groove 1172 may be connected.

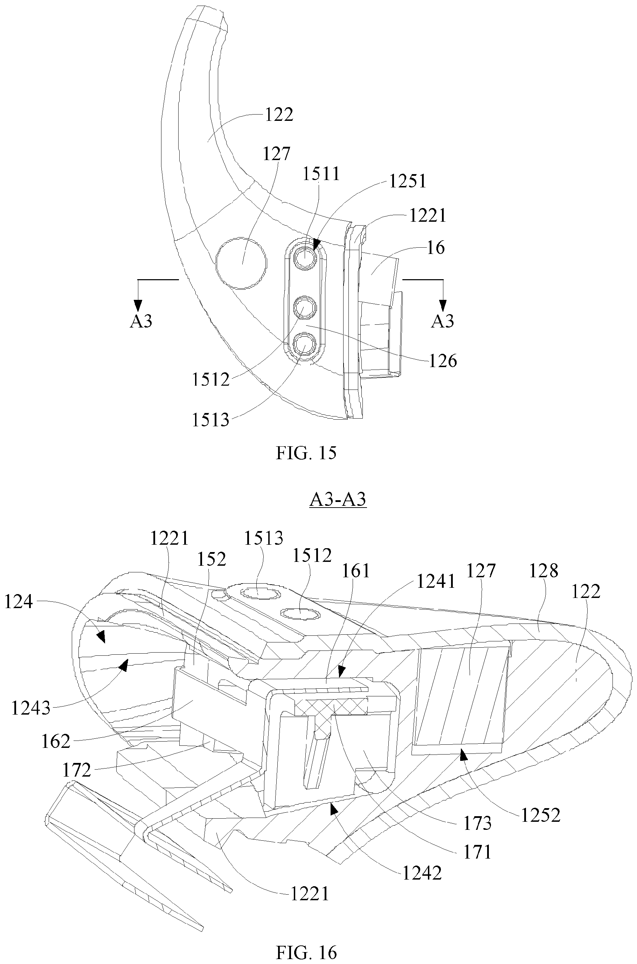

In some embodiments, in combination with FIGs. 15, 18, and 7, the hook structure 12 may include an adapter housing 122 connected to the core module 11. The adapter housing 122 may be pre-disposed with an accommodation chamber 124, and the earphone10 may include an electronic component 15 that is subsequently installed in the accommodation chamber 124. The connection between the adapter housing 122 and the core module 11 may include a snap-fit connection, a soldered connection, a glued connection, a threaded connection, a screw connection, or the like, or any combination thereof. In this way, compared to a related technique that the electronic component 15 is disposed in the core module 11, the electronic component 15 is installed in the accommodation chamber 124 pre-disposed in the hook structure 12 in the present disclosure, which saves the space of the core module 11 to make the core module 11 more compact and smaller in structure. At the same time, the structure of the core module 11 can be simplified, and relative positions of various structural components in the earphone 10 can be reasonably arranged, which can improve the utilization of the core module 11 and the hook structure 12.

It should be noted that the adapter housing 122 pre-disposed with the accommodation chamber 124 refers to that the accommodation chamber 124 is formed at the same time as the adapter housing 122 is molded, rather than being processed and formed after the adapter housing 122 is molded. For example, the adapter housing 122 may be a plastic housing, and the corresponding accommodation chamber 124 may be obtained after the plastic housing is injection molded by disposing a corresponding mold core. Correspondingly, the subsequent installation of the electronic component 15 in the accommodation chamber 124 refers to that the electronic component 15 and the adapter housing 122 are not integrally molded structural members. For example, the adapter housing 122 may be a plastic housing, and the electronic component 15 may not be integrally injection molded into the plastic housing by way of an insert. Based on this, later descriptions that the adapter housing 122 is pre-disposed with a through hole 1251, a blind hole 1252, and a through hole 1253, etc., in the present disclosure are the same as or similar to this, which will not be repeated herein. In some embodiments, the accommodation chamber 124 may also be obtained through a drilling operation after the adapter housing 122 has been molded, and the through hole 1251, the blind hole 1252, the through hole 1253, etc., may also be obtained through the drilling operation after the adapter housing 122 has been molded.

In some embodiments, in combination with FIG. 7, the electronic component 15 may be coupled to the main control circuit board 13, so that the hook structure 12 can be electrically connected to the core module 11. The adapter housing 122 may be plugged and fixed with the core housing 111 to realize a structural connection between the hook structure 12 and the core module 11, which is simple and reliable. The plugging and fixing refers to that a portion of one of the adapter housing 122 and the core housing 111 is first inserted into the other along an assembly direction, and then plugged and fixed with the help of other limitation structures such as pins. An assembly direction of the limitation structure may not be parallel to the assembly direction. Alternatively, the plugging and fixing also refers to that one of the adapter housing 122 and the core housing 111 can be plugged and fixed without the aid of the limitation structure when a portion of one of the adapter housing 122 and the core housing 111 is extended into the other.

In some embodiments, in combination with FIGs. 7, 10, and 16, the adapter housing 122 may be disposed with a first snap structure 1221, and the core housing 111 may be disposed with a second snap structure 1222. The first snap structure 1221 may extend into the core housing 111, and snap with the second snap structure 1222, so that the adapter housing 122 and the core housing 111 are snap-fixed. The first snap structure 1221 and the second snap structure 1222 may be directly plugged and fixed without the aid of other restriction structures, which is simple and reliable. In some embodiments, two first snap structures 1221 may be integrally disposed on the adapter housing 122, and may be spaced apart in the thickness direction X. Two second snap structures 1222 may be integrally disposed on the core inner housing 1111, and may be disposed in one-to-one correspondence with the two first snap structures 1221.

In some embodiments, in combination with FIG. 7, the earphone10 may include a flexible circuit board 16. A portion of the flexible circuit board 16 may be disposed within the accommodation chamber 124 to be connected to the electronic component 15 and extend into the core housing 111, which in turn allows the electronic components 15 to be connected to the main control circuit board 13 through the flexible circuit board 16. For example, the electronic component 15 may be soldered to one end of the flexible circuit board 16 through a surface mounted technology (SMT), and another end of a circuit board of the flexible circuit board 16 and the main control circuit board 13 may be snapped through a board to board (BTB) connector. The loudspeaker 112 may be disposed to be connected to the flexible circuit board 16 in an extension path of the flexible circuit board 16. For example, leads of the loudspeaker 112 may be soldered to a corresponding region of the flexible circuit board 16. Therefore, the loudspeaker 112 may also be connected to the main control circuit board 13 through the flexible circuit board 16, so that the leads of the loudspeaker 112 do not need to be extended to connect to the main control circuit board 13, which simplifies an alignment structure of the earphone 10, reducing the production cost.

In some embodiments, in combination with FIGs. 16 and 15, the adapter housing 122 may be pre-disposed with the through hole 1251 in communication with the accommodation chamber 124. The electronic component 15 may include an electrode terminal 151. At least a portion of the electrode terminal 151 may be disposed within the through hole 1251, and the electrode terminal 151 may include a retractable elastic component (e.g., a pogo-PIN) or a non-retractable rigid component (e.g., a metal pillar). An aperture of the through hole 1251 may be larger than an outer diameter of the electrode terminal 151 to facilitate subsequent installation of the electrode terminal 151. In some embodiments, the electrode terminal 151 may also be integrally molded with the adapter housing 122 in the form of an insert. In some embodiments, the electrode terminal 151 may face the ear in the wearing state. Therefore, by making the electrode terminal 151 invisible in the wearing state, the appearance quality of the earphone 10 in the wearing state can be improved.

It should be noted that when the electrode terminal 151 is disposed as the retractable elastic component, such as the pogo-PIN, an extension direction of the electrode terminal 151 may be a direction where the electrode terminal 151 retracts. When the electrode terminal 151 is disposed as the non-retractable rigid component, such as the metal pillar, the extension direction may be a direction where an axis of the electrode terminal 151 is located.

In some embodiments, multiple electrode terminals 151 may be disposed according to actual use requirements, such as for charging, detecting, etc.

In some embodiments, the electrode terminal 151 may include a charging positive terminal 1511 and a charging negative terminal 1512 spaced apart from each other. The charging positive terminal 1511 and the charging negative terminal 1512 may be disposed within corresponding through holes 1251, respectively, so as to facilitate the charging of the earphone 10 through the electrode terminal 151. In some embodiments, only one of the charging positive terminal 1511 and the charging negative terminal 1512 may also be disposed on the adapter housing 122, and the other may be disposed on another housing in the hook structure 12 (e.g., the battery housing 123) or disposed on the core inner housing 1111.

In some embodiments, the electrode terminal 151 may include a detection terminal 1513 spaced apart from the charging positive terminal 1511 and the charging negative terminal 1512. The detection terminal 1513 may be used to perform detection functions, such as a charging detection, a detection of putting the earphone 10 into or out of the charging case, etc. In some embodiments, the detection terminal 1513 may also be replaced by an electronic component, such as a Hall sensor.

In some embodiments, viewed along the extension direction of the electrode terminal 151, lines connecting each two of the charging positive terminal 1511, the charging negative terminal 1512, and the detecting terminal 1513 may form a triangle, such as a regular triangle.

In some embodiments, viewed along the extension direction of the electrode terminal 151, the charging positive terminal 1511, the charging negative terminal 1512, and the detection terminal 1513 may be spaced apart from each other to arrange in a line section, such as a straight line section. A spacing between the charging positive terminal 1511 and the charging negative terminal 1512 may be larger than a spacing between the charging negative terminal 1512 and the detection terminal 1513. For example, the charging negative terminal 1512 may be disposed between the charging positive terminal 1511 and the detection terminal 1513, and the spacing between the charging positive terminal 1511 and the charging negative terminal 1512 may be larger than the spacing between the charging negative terminal 1512 and the detection terminal 1513. As another example, the detection terminal 1513 may be disposed between the charging positive terminal 1511 and the charging negative terminal 1512. In this way, when a space on the adapter housing 122 for disposing the electrode terminal 151 is limited, the spacing between the charging positive terminal 1511 and the charging negative terminal 1512 can be increased as much as possible to avoid short circuits between the charging positive terminal 1511 and the charging negative terminal 1512.

In some embodiments, in combination with FIG. 15, an outer side of the adapter housing 122 may be disposed with a boss 126. The through hole 1251 may further penetrate through the boss 126, so that the multiple electrode terminals 151 are exposed at the boss 126, respectively. In this way, a localization of the adapter housing 122 that is not flat due to having a certain curvature can be made flat through the boss 126 to facilitate the dispose of the electrode terminals 151. The charging positive terminal 1511, the charging negative terminal 1512, and the detecting terminal 1513 may be sequentially disposed at intervals along a length direction of the boss 126.

In some embodiments, in combination with FIGs. 15-17, the hook structure 12 may include a magnet 127. The magnet 127 and the electrode terminal 151 may be exposed on a same side of the adapter housing 122. That is, the magnet 127 and the electrode terminal 151 may be visible on the same side of the adapter housing 122 to make the magnet 127 closer to the outside world where an exposed end of the electrode terminal 151 faces, thereby shortening a spacing between the magnet 127 and a magnetic suction structure used to cooperate with the magnet 127 in a charging device (e.g., the charging case), or a spacing between the magnet 127 and the Hall sensor used to cooperate with the magnet 127, which improves the reliability of functions, such as charging, detection, etc. The magnet 127 and the electrode terminal 151 may be disposed adjacent to each other to allow the magnet 127 to cooperate with the magnetic suction structure in the charging device (e.g., the charging case), such that the electrode terminal 151 cooperates with an electrode terminal in the charging device to facilitate charging. Correspondingly, the boss 126 may protrude out of the adapter housing 122 around the magnet 127. That is, the magnet 127 may be lower than the boss 126, so that the electrode terminal 151 is in contact with the electrode terminal in the charging device (e.g., the charging case). In the embodiment that the magnet 127 is used for detection in combination with the Hall sensor in the charging device (e.g., the charging case), the magnet 127 may be disposed adjacent to the electrode terminal 151. Alternatively, the electrode terminal in the charging device (e.g., the charging case) used to cooperate with the electrode terminal 151 may be disposed adjacent to the Hall sensor, which reduces an area of the charging device (e.g., the charging case) used for carrying the electrode terminal and the Hall sensor.

In some embodiments, the hook structure 12 may include a flexible coating 128. A hardness of the flexible coating 128 may be smaller than a hardness of the adapter housing 122. The adapter housing 122 may be a plastic fabrication. The flexible coating 128 may be made of silicone, rubber, etc., and may be formed on the adapter housing 122 by injection molding, glue connection, etc. In some embodiments, the flexible coating 128 may cover the adapter housing 122 and the magnet 127, such that the magnet 127 is not exposed and the electrode terminal 151 is exposed. That is, the magnet 127 may be invisible and the electrode terminal 151 may be visible. In this way, not only use needs of the electrode terminal 151 can be satisfied, but also the magnet 127 can be shielded from being worn out or affecting the appearance quality due to the exposure of the magnet 127. In addition, the flexible coating 128 can be used to improve the comfort of the earphone 10 in the wearing state. A thickness of the flexible coating 128 may be smaller than a thickness of the adapter housing 122.

In some embodiments, in combination with FIG. 16, the adapter housing 122 may be pre-disposed with the blind hole 1252. The blind hole 1252 may not be connected to the accommodation chamber 124 to increase the waterproof and dustproof performance of the accommodation chamber 124. The magnet 127 may be disposed at least within the blind hole 1252, and exposed through an open end of the blind hole 1252. In this way, not only the thickness of the adapter housing 122 in a region where the magnet 127 is located can be reduced, but also the appearance quality of the earphone 10 in the region where the magnet 127 is located can be improved. In some embodiments, the blind hole 1252 may also be disposed as a through hole.

In some embodiments, in combination with FIG. 15, viewed in the extension direction of the electrode terminal 151, the multiple electrode terminals 151 may be spaced apart from each other in a line section, such as a straight line section or a zigzag segment. The magnet 127 may be located on either side of the line section. Alternatively, the magnet 127 may intersect with the line section, and at least a portion of the magnet 127 may be located between any two adjacent electrode terminals 151. For example, a count of the magnet 127 may be one, and the magnet 127 may be integrally located on one side of the line section. Alternatively, the magnet 127 may intersect with the line section, and be integrally located between any two adjacent electrode terminals 151. As another example, the count of the magnet 127 may be two. One magnet 127 may be integrally located on one side of the line section, and the other magnet 127 may be integrally located on the other side of the line section. As still another example, the count of the magnet 127 may be one. A portion of the magnet 127 may intersect with the line section and be located between any two adjacent electrode terminals 151, and another portion may be located below the electrode terminal 151 in the extension direction.

In some embodiments, in combination with FIG. 15, the multiple electrode terminals 151 may include the charging positive terminal 1511, the charging negative terminal 1512, and the detecting terminal 1513 arranged in the straight line section. The magnet 127 may be located on one side of the straight line section. In some embodiments, viewed along the extension direction of the electrode terminal 151, a center of the magnet 127 may have a first distance, a second distance, and a third distance from centers of the charging positive terminal 1511, the charging negative terminal 1512, and the detection terminal 1513, respectively. The third distance may be larger than the first distance and the second distance, respectively, so as to prioritize the charging reliability. It should be noted that in the embodiment that the hook structure 12 is disposed with the flexible coating 128, in order to conveniently determine a relative position relationship between the magnet 127, the charging positive terminal 1511, the charging negative terminal 1512, and the detection terminal 1513, the flexible coating 128 can be removed first.

In some embodiments, in combination with FIGs. 16-18, the electronic component 15 may include the electrode terminal 151 and a microphone 152. The adapter housing 122 may be pre-disposed with the accommodation chamber 124, the through hole 1251, and the through hole 1253. The through hole 1251 and the through hole 1253 may be in communication with the accommodation chamber 124, respectively. Due to different roles of the electrode terminal 151 and the microphone 152, the through hole 1251 and the through hole 1253 may be disposed on different side walls of the adapter housing 122. Based on this, at least a portion of the electrode terminal 151 may be disposed within the through hole 1251. The microphone 152 may be disposed within the accommodation chamber 124 and pick up sounds (e.g., user voice, environmental sounds) outside the earphone 10 through the through hole 1253. In this way, by reasonably arranging a relative position between the electrode terminal 151 and the microphone 152, a space of the accommodation chamber 124 can be fully used, thereby causing the structure of the earphone 10 to be more compact and smaller. In some embodiments, the earphone10 may include a support assembly 17. At least a portion of the support assembly 17 disposed within the accommodation chamber 124. The support assembly 17 may support and fix the electrode terminal 151 and the microphone 152 on the side walls corresponding to the through hole 1251 and the through hole 1253, respectively. In this way, the electrode terminal 151 and the microphone 152 can be prevented from separating from the adapter housing 122. The waterproof and dustproof performance of the electronic component 15 can be improved, and the structure can be simple and reliable.

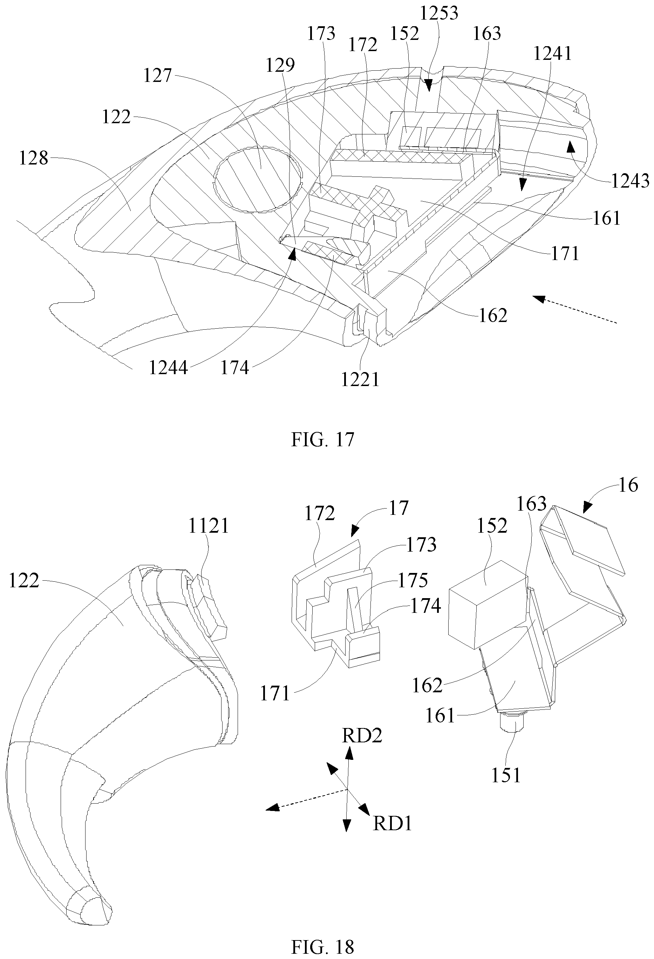

In some embodiments, in combination with FIG. 18, the flexible circuit board 16 may include a first circuit board part 161, a second circuit board part 162, and a third circuit board part 163 of an integrated structure. The electrode terminal 151 may be soldered on the first circuit board part 161, the second circuit board part 162 may be bent with respect to the first circuit board part 161, and the microphone 152 may be soldered to the third circuit board part 163 and bent with respect to the second circuit board part 162. In other words, after the flexible circuit board 16 has been bent twice, the first circuit board part 161, the second circuit board part 162, and the third circuit board part 163 may correspond to three sides of a six-sided structure, and each two of the three sides may be adjacent. An end of the second circuit board part 162 away from the third circuit board part 163 may be connected to the first circuit board part 161, and other portions of the second circuit board part 162 may not be connected to the first circuit board part 161. In this way, after the flexible circuit board 16 and the electrode terminal 151 and microphone 152 thereon are assembled in the adapter housing 122, an operator can be allowed to first press the end of the second circuit board part 162 connected to the first circuit board part 161, so that the second circuit board part 162 can flush with the first circuit board part 161 as much as possible to avoid the support assembly 17 subsequently assembled.

In some embodiments, the adapter housing 122 may include two housings whose parting surfaces are perpendicular to the extension direction of the electrode terminal 151. The two housings may be snapped with each other to form the accommodation chamber 124. The support assembly 17 may be integrally molded with one of the two housings, so as to support (or press) the electrode terminal 151 and the microphone 152, respectively, when the two housings are snapped together. Alternatively, at least one of a first support member for supporting the electrode terminal 151 and a second support member for supporting the microphone 152 in the support assembly 17 may be independent of the adapter housing 122, so as to support (or press) the electrode terminal 151 and the microphone 152, respectively, when the two housings are snapped together. Alternatively, after the two housings are snapped together, the support assembly 17 may be assembled to support (or press) the electrode terminal 151 and microphone 152, respectively.

In some embodiments, at least a portion of the adapter housing 122 corresponding to the accommodation chamber 124 may be an integral housing structure. At least one of the first support member for supporting the electrode terminal 151 and the second support member of the support assembly 17 for supporting the microphone 152 in the support assembly 17 may be independent of the adapter housing 122 to at least facilitate the assembly of the electrode terminal 151.

In some embodiments, in combination with FIG. 18, the support assembly 17 may be independent of the adapter housing 122, and inserted into the accommodation chamber 124. In this way, since the support assembly 17, the electrode terminal 151, and the microphone 152 are independent of the adapter housing 122, the support assembly 17, the electrode terminal 151, and the microphone 152 may be assembled according to a certain sequence, which avoids unnecessary interference in structure, thereby improving the assembly efficiency.

In some embodiments, the first support member for supporting the electrode terminal 151 and the second support member for supporting the microphone 152 in the support assembly 17 may be independent of the adapter housing 122, respectively. That is, the first support member and the second support member may be independent of each other to support (or press) the electrode terminal 151 and the microphone 152, respectively. Therefore, the first support member and the second support member in the support assembly 17 can be designed differently according to actual needs.

In some embodiments, the support assembly 17 may be an integrally molded structural member. That is, the first support member for supporting the electrode terminal 151 and the second support member for supporting the microphone 152 in the support assembly 17 may be connected to each other, which simplifies the structure of the support assembly 17, and avoids the first support member and the second support member being too small and difficult to assemble. The support assembly 17 may be fixed in a tight fit with a chamber wall of the accommodation chamber 124 after the support assembly 17 is inserted into place. That is, a process of insertion or extraction of the support assembly 17 may have a certain degree of damping, and the structure may be simple and reliable. Correspondingly, the chamber wall of the accommodation chamber 124 may be disposed with a guiding groove and a limitation groove which are fit with the support assembly 17. In some embodiments, the support assembly 17 may be further in a glue connection to the chamber wall of the accommodation chamber 124 through the dispensing operation.

In some embodiments, in combination with FIGs. 17 and 18, dimensions of at least a portion of the support assembly 17 and the accommodation chamber 124 in at least one reference direction perpendicular to an insertion direction (e.g., a direction indicated by arrows in FIGs. 17 and 18) of the support assembly 17 with respect to the accommodation chamber 124 may be disposed to progressively reduce along the insertion direction, so that the support assembly 17 inserts into an interval region between the electrode terminal 151 and the microphone 152. In other words, the dimension of at least a portion of the support assembly 17 in the at least one reference direction perpendicular to the insertion direction may be disposed to progressively reduce along the insertion direction, and the dimension of at least a portion of the accommodation chamber 124 in the same reference direction may be disposed to progressively reduce along the insertion direction. Trends of reduction of the support assembly 17 and the accommodation chamber 124 may be the same or similar, which facilitates the support assembly 17 to be tightly fitted and fixed with the chamber wall of the accommodation chamber 124 after being inserted in place.

In some embodiments, in combination with FIGs. 16-18, the chamber wall of the accommodation chamber 124 may include a first chamber wall 1241, a second chamber wall 1242, and a third chamber wall 1243. The first chamber wall 1241 and the second chamber wall 1242 may be disposed side by side with each other and spaced apart, and the third chamber wall 1243 may be used to connect the first chamber wall 1241 and the second chamber wall 1242. The through hole 1251 may be disposed on the first chamber wall 1241, and the through hole 1253 may be disposed on the third chamber wall 1243. Correspondingly, the support assembly 17 may include a bottom plate 171 and a first side plate 172 connected to the bottom plate 171. For example, the support assembly 17 may have an L-shaped structure. A main surface on one side of the bottom plate 171 may be disposed opposite the first chamber wall 1241, and support the electrode terminal 151. A main surface on one side of the first side plate 172 may be disposed opposite the third chamber wall 1243, and support the microphone 152. In this way, after the electrode terminal 151 and the microphone 152 are assembled in place, the support assembly 17 can be inserted into the accommodation chamber 124 along the insertion direction. After the support assembly 17 is inserted in place, the support assembly 17 can support the electrode terminal 151 and the microphone 152 through the bottom plate 171 and the first side wall, respectively.

In some embodiments, an orthographic projection of the microphone 152 on the first chamber wall 1241 may cover at least a portion of the electrode terminal 151. For example, the microphone 152 may cover a portion of the charging positive terminal 1511, which facilitates the structure to be more compact.

In some embodiments, dimensions of at least a portion of the bottom plate 171 and the accommodation chamber 124 in a first reference direction RD1 that is perpendicular to the insertion direction and parallel to the main surface on the one side of the bottom plate 171 may be disposed to progressively reduce along the insertion direction. That is, one of a front end and a rear end of the bottom plate 171 in the insertion direction or a localization between the front end and the rear end may be disposed along the insertion direction, such that dimensions in the first reference direction RD1 remain unchanged. Dimensions of the first side plate 172 and the accommodation chamber 124 in a second reference direction RD2 that is perpendicular to the insertion direction and parallel to the main surface on the one side of the first side plate 172 may be disposed to remain unchanged along the insertion direction.

In some embodiments, dimensions of at least a portion of the first side plate 172 and the accommodation chamber 124 in the second reference direction RD2 that is perpendicular to the insertion direction and parallel to the main surface on the one side of the first side plate 172 may be disposed to progressively reduce along the insertion direction. That is, one of a front end and a rear end of the first side plate 172 in the insertion direction or a localization between the front end and the rear end may be disposed along the insertion direction, such that dimensions in the second reference direction RD2 remain unchanged. The dimensions of the bottom plate 171 and the accommodation chamber 124 in the first reference direction RD1 that is perpendicular to the insertion direction and parallel to the main surface on the one side of the bottom plate 171 may be disposed to remain unchanged along the insertion direction.

In some embodiments, dimensions of at least a portion of the first side plate 172 and the accommodation chamber 124 in the second reference direction RD2 that is perpendicular to the insertion direction and parallel to the main surface on the one side of the first side plate 172 may be disposed to progressively reduce along the insertion direction. In some embodiments, dimensions of at least a portion of the first side plate 172 and the accommodation chamber 124 in the second reference direction RD2 that is perpendicular to the insertion direction and parallel to the main surface on the one side of the first side plate 172 may be disposed to progressively reduce along the insertion direction.

It should be noted that for the support assembly 17, the dimension of the bottom plate 171 in the first reference direction RD1 may be simply regarded as a width of the bottom plate 171, and the dimension of the first side plate 172 in the second reference direction RD2 may be simply regarded as a height of the first side plate 172.

In some embodiments, in combination with FIGs. 16-18, the support assembly 17 may include a second side plate 173 connected to the bottom plate 171. The second side plate 173 and the first side plate 172 may be disposed side by side with each other and spaced apart on a same side of the bottom plate 171. The second side plate 173 may abut against the second chamber wall 1242 to provide a support force facing the electrode terminal 151 for the bottom plate 171, which improves the support effectiveness of the support assembly 17 on the electrode terminal 151. In the embodiment that the electrode terminal 151 includes the charging positive terminal 1511 and the charging negative terminal 1512 spaced apart from each other along a direction perpendicular to the insertion direction, the second side plate 173 may be disposed between the charging positive terminal 1511 and the charging negative terminal 1512, so that the force on each part of the electrode terminal 151 is uniform, further improving the support effectiveness of the support assembly 17 on the electrode terminal 151.

In some embodiments, in combination with FIGs. 16-18, the chamber wall of the accommodation chamber 124 may include a fourth chamber wall 1244. The fourth chamber wall 1244 may connect the first chamber wall 1241 and the second chamber wall 1242, and be opposite to the third chamber wall 1243. The first chamber wall 1241 and the second chamber wall 1242 may be disposed substantially as planar structures parallel to each other, and the third chamber wall 1243 and the fourth chamber wall 1244 may be disposed substantially as curved structures flared out from each other, so as to maximize a volume of the accommodation chamber 124 when a volume of the adapter housing 122 is limited. Correspondingly, the support assembly 17 may include a third side plate 174 connected to the bottom plate 171. The first side plate 172 and the third side plate 174 may be respectively located on edges of two sides of the bottom plate 171 in the direction perpendicular to the insertion direction. The second side plate 173 may be located between the first side plate 172 and the third side plate 174. The third side plate 174 may abut against the fourth chamber wall 1244 to provide a support force facing the microphone 152 for the first side plate 172, thereby improving the support effectiveness of the support assembly 17 on the microphone 152.

In some embodiments, with respect to the bottom plate 171, a height of the second side plate 173 may be larger than the height of the first side plate 172 and a height of the third side plate 174, respectively, so that the second side plate 173 abuts against the second chamber wall 1242, and the third side plate 174 abuts against the fourth chamber wall 1244. Since the second side plate 173 and the third side plate 174 are not in direct contact with either of the electrode terminal 151 and the microphone 152, the second side plate 173 and the third side plate 174 may be used for guiding during the process that the support assembly 17 is inserted into the accommodation chamber 124. Correspondingly, since the height of the second side plate 173 is relatively the highest, the support assembly 17 may include a reinforcement 175 connecting the second side plate 173 to the bottom plate 171. The reinforcement 175 may be disposed on opposite sides of the second side plate 173 facing the first side plate 172 and the third side plate 174.

In some embodiments, in combination with FIGs.15-17 and 9, the hook structure 12 may include an elastic metal wire 121, the adapter housing 122, the battery housing 123, and a conductor 129. Two ends of the elastic metal wire 121 and the conductor 129 may be connected to the adapter housing 122 and the battery housing 123, respectively, so that the conductor 129 extends along the elastic metal wire 121 and is threaded within the adapter housing 122 and the battery housing 123. In some embodiments, the conductor 129 may also be threaded within a predetermined threading channel after the elastic metal wire 121 is connected to the adapter housing 122 and the battery housing 123. The battery 14 may be disposed within the battery housing 123, and may be connected to the flexible circuit board 16 through the conductor 129, which in turn allows the battery 14 to be connected to the main control circuit board 13 through the flexible circuit board 16, which simplifies the alignment structure of the earphone 10, thereby reducing the production cost. In other words, components (e.g., the electrode terminal 151, the microphone 152, the battery 14, etc.) in the hook structure 12 may be connected to the main control circuit board 13 through the flexible circuit board 16.

In some embodiments, the flexible coating 128 may at least further cover an exposed portion of the elastic metal wire 121 and the conductor 129, and at least a portion of the battery 123, so as to expose the conductor 129, which can improve the appearance quality of the earphone 10.

It should be noted that the adapter housing 122 may also be a portion of the core housing 111. For example, the adapter housing 122 may be integrally molded with the core inner housing 1111. As another example, a portion of the adapter housing 122 may be integrally molded with the core inner housing 1111, and a remaining portion of the adapter housing 122 may be integrally molded with the core outer housing 1112. A portion (e.g., an end of the elastic metal wire 121 away from the battery housing 123, the battery housing 123, etc.) of the hook structure 12 other than the adapter housing 122 may be fixedly connected (e.g., through a plug-in fixation) with the core module 11 having the adapter housing 122 at the adapter housing 122. Correspondingly, positions of structural components (e.g., the electrode terminal 151, the microphone 152, the magnet 127, etc.) are consequently adjusted, which will not be repeated herein.

Based on the relative descriptions, the present disclosure provides a housing assembly. The housing assembly may include a plastic housing, a metallic function pattern, and a silicone coating. The metallic function pattern may be disposed on an outer side of the plastic housing, and the silicone coating may be covered on a side of the metallic function pattern back from the plastic housing and a portion of the plastic housing that is not covered by the metallic function pattern by injection molding, glue connection, etc. In this way, compared to the metallic function pattern being disposed on an inner side of the plastic housing away from the silicone coating, the metallic function pattern can be disposed on the outer side of the plastic housing facing the silicone coating, so as to make the metallic function pattern farther away from the interference of other electronic components in the housing assembly or closer to a signal trigger source outside the housing assembly, thereby increasing the anti-interference and sensitivity of the metallic function pattern. A structure of the plastic housing may be the same as or similar to that of the core housing 111 or the core outer housing 1112 of the core housing 111, and a structure of the silicone coating may be the same as or similar to that of the flexible coating 1132, which will not be repeated herein.

In some embodiments, the metallic function pattern may be disposed as the antenna pattern 1141 or the touch pattern 1142. The antenna pattern 1141 may be disposed on the outer side of the plastic housing, which may increase a spacing between the antenna pattern 1141 and other electronic components in the plastic housing. That is, the antenna headroom region can be increased, thereby increasing the interference immunity of the antenna pattern 1141. By disposing the touch pattern 1142 on the outer side of the plastic housing, a spacing between the touch pattern 1142 and an external signal trigger source (e.g., the user's finger) may be shortened. That is, a touch spacing can be reduced, thereby increasing the sensitivity of the touch pattern 1142 to be triggered by the user.

In some embodiments, the metal functional pattern may include the antenna pattern 1141 and the touch pattern 1142. The antenna pattern 1141 may surround the periphery of the touch pattern 1142 to make full use of the space of the outer side of the core outer housing 1112. The antenna pattern 1141 may have the U-shape, and the touch pattern 1142 may have the square shape.

In some embodiments, a thickness of the silicone coating may be smaller than a thickness of the plastic housing, so as to further increase the interference immunity and sensitivity of the metal functional pattern and reduce the volume of the housing assembly while blocking the silicone coating and protecting the metal functional pattern.

In some embodiments, the housing assembly may serve as the core housing that accommodates the loudspeaker 112. A relative position relationship between the plastic housing and the silicone coating may be the same or similar to that between the core housing 111 and the flexible coating 1132, which will not be repeated herein.

In some embodiments, the housing assembly may be applied to other electronic devices, such as smart glasses, in addition to the earphone 10. The electronic device may include the core module disposed with the loudspeaker 112, the main control circuit board 13, and the loudspeaker 112 and the battery 14 coupled to the main control circuit board 13, respectively. The housing assembly may be used to accommodate at least one of the electronic components, such as the loudspeaker 112, the main control circuit board 13, the battery 14, etc. The housing assembly may also be used to support the loudspeaker 112 in the electronic device to be a corresponding wearing position. It should be noted that for electronic devices based on a principle of bone conduction, such as earphones, smart glasses, etc., the loudspeaker 112 may be adaptively adjusted to be a bone-conducting loudspeaker, and a basic structure of the bone-conducting loudspeaker is well known to those skilled in the art, which will not be repeated herein.

The present disclosure provides a housing assembly. The housing assembly may include a first housing, the electrode terminal 151, the magnet 127, and the flexible coating 128. The electrode terminal 151 and the magnet 127 may be exposed on a same side of the first housing. The hardness of the flexible coating 128 may be smaller than a hardness of the first housing, and the flexible coating may cover the first housing and the magnet 127, such that the magnet 127 is not exposed and the electrode terminal 151 is exposed. In this way, compared to the magnet 127 being disposed in the first housing, the magnet 127 can be closer to the outside world where the exposed end of the electrode terminal 151 faces in the present disclosure, thereby shortening the spacing between the magnet 127 and the magnetic suction structure used to cooperate with the magnet 127 in the charging device (e.g., the charging case), or the spacing between the magnet 127 and the Hall sensor used to cooperate with the magnet 127, which improves the reliability of functions, such as charging, detection, etc. Therefore, the housing assembly may be applied to a powered device, such as the earphone 10, the smart glasses, etc., and may be applied to the charging device, such as the charging case. In other words, the electronic device may include both the powered device and the charging device. For the convenience of description, the first housing may be the adapter housing 122.

In some embodiments, the first housing may be disposed with the through hole 1251 and the blind hole 1252. At least a portion of the electrode terminal 151 may be disposed within the through hole 1251, and at least a portion of the magnet 127 may be disposed within the blind hole 1252 and exposed through the open end of the blind hole 1252. In this way, not only the thickness of the adapter housing 122 in a region where the magnet 127 is located can be reduced, but also the appearance quality of the earphone 10 in the region where the magnet 127 is located can be improved. In some embodiments, the blind hole 1252 may also be disposed as a through hole.

In some embodiments, the outer side of the first housing may be disposed with the boss 126. The boss 126 may be disposed adjacent to the magnet 127, and protrude out of the first housing around the magnet 127. The through hole 1251 may further penetrate through the boss 126, so that the multiple electrode terminals 151 are exposed at the boss 126, respectively. In this way, a part of the first housing that is not flat due to having a certain curvature can be made flat through the boss 126 to facilitate the disposal of the electrode terminals 151. The boss 126 may have a long strip shape, with a simple and reliable structure.

In some embodiments, the housing assembly may include the flexible circuit board 16. The electrode terminal 151 may be connected to the flexible circuit board 16 to simplify the alignment of the electrode terminal 151. The first housing may be disposed with the accommodation chamber 124. At least a portion of the flexible circuit board 16 may be disposed within the accommodation chamber 124. The through hole 1251 may be connected to the accommodation chamber 124, and the blind hole 1252 may not be connected to the accommodation chamber 124, so as to improve the waterproof and dustproof performance of the first housing.

In some embodiments, the housing assembly may include a second housing, the elastic metal wire 121, and the conductor 129. Two ends of the elastic metal wire 121 and the conductor 129 may be connected to the first housing and second housing, respectively, such that the conductor 129 extends along the elastic metal wire 121 and is threaded within the first housing and the second housing. For the convenience of description, the second housing may be the battery housing 123. In some embodiments, the battery 14 may be disposed in the second housing and connected to the flexible circuit board 16 through the conductor 129. That is, both the battery 14 and the electrode terminal 151 may be connected to the flexible circuit board 16 to simplify the alignment. Correspondingly, the flexible coating 128 may at least further cover the elastic metal wire 121 and the conductor 129, so as to expose the conductor 129.

In some embodiments, the housing assembly may be used for the earphone 10, and may include a third housing for accommodating the loudspeaker 112. The third housing may be plugged and fixed to the first housing. For the convenience of description, the third housing may be the core housing 111.

The present disclosure provides a housing assembly. The housing assembly may include the first housing, the electrode terminal 151, the microphone 152, and the support assembly 17. The first housing may be disposed with the accommodation chamber 124, the through hole 1251, and the through hole 1253. The through hole 1251 and the through hole 1253 may be in communication with the accommodation chamber 124, respectively. The through hole 1251 and the through hole 1253 may be disposed on different side walls of the first housing. At least a portion of the electrode terminal 151 may be disposed within the through hole 1251. The microphone 152 may be disposed within the accommodation chamber 124, and pick up the sounds outside the housing assembly through the through hole 1253. In some embodiments, the support assembly 17 may be disposed within the accommodation chamber 124. The support assembly 17 may support and fix the electrode terminal 151 and the microphone 152 on the side walls corresponding to the through hole 1251 and the through hole 1253, respectively. In this way, the electrode terminal 151 and the microphone 152 can be prevented from separating from the adapter housing 122. The waterproof and dustproof performance of the electronic component 15 can be improved, and the structure can be simple and reliable. For the convenience of description, the first housing may be either the adapter housing 122, or the core housing 111, or a housing structure integrally molded by the core housing 111 and the adapter housing 122.

In some embodiments, the support assembly 17 may be independent of the first housing and inserted in the accommodation chamber 124.

In some embodiments, the support assembly 17 may be an integrally molded structural member.

In some embodiments, the housing assembly may be used for the earphone 10, and may include the third housing for accommodating the loudspeaker 112. The third housing may be plugged and fixed to the first housing. The first housing may be the adapter housing 122, and the third housing may be the core housing 111.

In some embodiments, the housing assembly may be applied to other electronic devices, such as smart glasses, in addition to the earphone 10. The electronic device may include the main control circuit board 13, and the loudspeaker 112 and the battery 14 coupled to the main control circuit board 13, respectively. The housing assembly may be used to accommodate at least one of the electronic components, such as the loudspeaker 112, the main control circuit board 13, the battery 14, etc. The housing assembly may also be used to support the loudspeaker 112 in the electronic device to be a corresponding wearing position. It should be noted that for electronic devices based on a principle of bone conduction, such as earphones, smart glasses, etc., the loudspeaker 112 may be adaptively adjusted to be a bone-conducting loudspeaker, and a basic structure of the bone-conducting loudspeaker is well known to those skilled in the art, which will not be repeated herein.

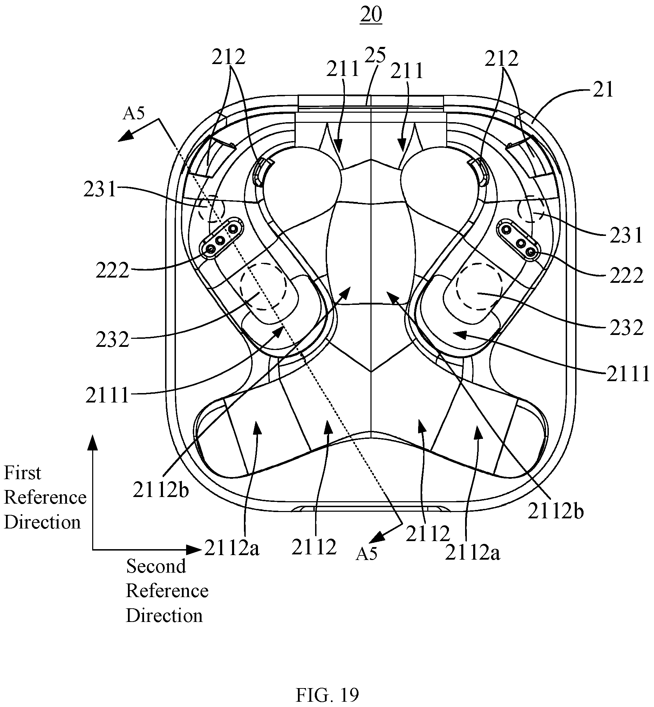

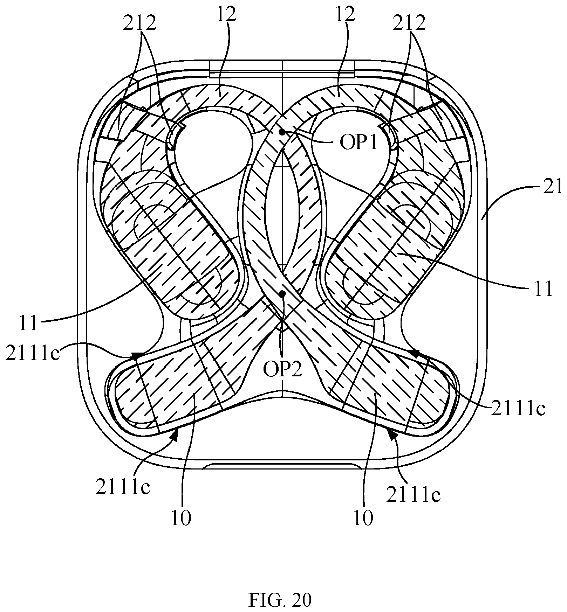

In some embodiments, in combination with FIGs. 19 and 20, each of two earphones 10 may include the core module 11 and the hook structure 12 connected to the core module 11. The hook structure 12 may be a structure bent or curved into a hook shape. Alternatively, the hook structure 12 may be a rod structure that is not parallel to an extension direction of the core module 11, and the rod structure may cooperate with the core module 11 to play a "hook" role that the earphone can be worn in the human ear. Correspondingly, the charging case 20 may include a lower housing assembly 21. The lower housing assembly 21 may be disposed with two profiling grooves 211 for accommodating the two earphones 10. Each profiling groove 211 may include a first profiling groove region 2111 corresponding to the core module 11 and a second profiling groove region 2112 corresponding to the hook structure 12. Second profiling groove regions 2112 of the two profiling grooves 211 may be disposed intersecting with each other. In this way, when the two profiling grooves 211 are accommodating the two earphones 10, respectively, the hook structures 12 of the two earphones 10 may overlap with each other, e.g., stacked on top and bottom, which can reduce a volume of the charging case 20 and make the charging case 20 compact, thereby being convenient for the user to carry. It should be noted that overlapping with each other refers to that there is at least an overlapping region between each other, including partial overlapping and complete overlapping.

In some embodiments, in combination with FIG. 19, a projection of the first profiling groove region 2111 and a projection of the second profiling groove region 2112 may overlap in a first reference direction, and a projection of the first profiling groove region 2111 along a second reference direction and a projection of the second profiling groove region 2112 along the second reference direction may overlap. The first reference direction may be perpendicular to the second reference direction. In this way, when the earphones 10 are placed into the profiling grooves 211, a projection length of the charging case 20 occupied by the second profiling groove region 2112 along the first reference direction can overlap a projection length of the charging case 20 occupied by the first profiling groove region 2111 along the first reference direction, and a projection length of the charging case 20 occupied by the second profiling groove region 2112 along the second reference direction can overlap a projection length of the charging case 20 occupied by the first profiling groove region 2111 along the second reference direction. Therefore, the volume of the charging case 20 can be accordingly reduced, which is convenient for the user to carry. A reduction amount of the volume of the charging case 20 may relate to the projection length in the first reference direction and an overlapping degree of projections in the second reference direction. In other words, when each earphone10 is placed in each profiling groove 211, a projection of the core module 11 of the earphone10 in the first reference direction may overlap with a projection of the hook structure 12 in the first reference direction, and a projection of the core module 11 in the second reference direction may overlap with the projection of the hook structure 12 in the second reference direction. It should be noted that the first reference direction and the second reference direction are two directions orthogonal to each other and are perpendicular to a thickness direction of the charging case 20. The first reference direction in the present disclosure may have a plurality of different implementations. Descriptions of different implementations of the first reference direction are provided below. The implementation of the first reference direction may be at least one of the following implementations, which will not be repeated.
Implementation 1), in some embodiments, when the two profiling grooves 211 are spaced apart in the lower housing assembly 21, the first reference direction may be an arrangement direction (i.e., a connecting line of geometrical centers of the two profiling grooves 211) of the two profiling grooves 211 or a direction perpendicular to the arrangement direction.
Implementation 2), in some embodiments, when an upper housing assembly 24 opens or closes the charging case 20 by rotating with respect to the lower housing assembly 21, the first reference direction may refer to a direction perpendicular or parallel to a rotation axis of the upper housing assembly 24 with respect to the lower housing assembly 21.
Implementation 3), in some embodiments, when the two profiling grooves 211 are disposed asymmetrically, the first reference direction may be a direction perpendicular or parallel to a symmetry axis of the two profiling grooves 211.

In some embodiments, the first reference direction may also be a direction of a connecting line of same feature points of the two profiling grooves 211 or a direction perpendicular to the direction of the connecting line.

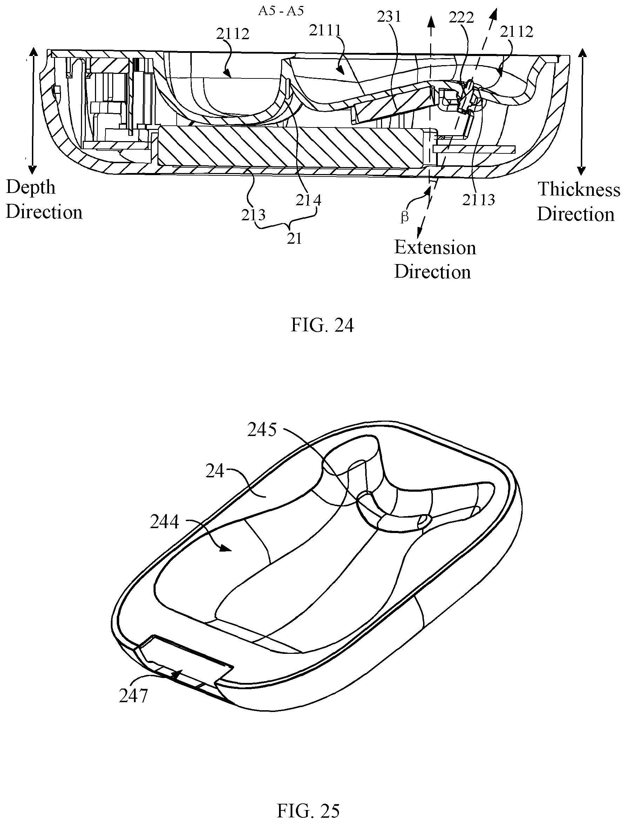

It should be noted that the charging case 20 includes a thickness direction and the profiling grooves 211 include a depth direction, in combination with FIG. 24, the thickness direction of the charging case 20 and the depth direction of the profiling grooves 211 in the present disclosure may refer to a direction perpendicular to a contact plane between the charging case 20 and a horizontal platform surface after the charging case 20 is placed smoothly on the horizontal platform surface. The thickness direction of the charging case 20 and the depth direction of the profiling grooves 211 in the following embodiments may be the same, which will not be repeated. It should be noted that in an actual manufacturing process, there is an error in verticality due to process reasons. In other words, in an actual product, two objects in the present disclosure being perpendicular to each other refers to that a perpendicularity between the two objects is within an allowable tolerance range. The perpendicularity is a positional tolerance, and the specific tolerance range may be determined by referring to relevant national standards. The symmetry is similar to the perpendicularity, which will not be repeated. On the other hand, the projection overlap in the present disclosure includes complete projection overlap and partial projection overlap.

In some embodiments, in combination with FIG. 19, a projection of a first portion 2112a of the second profiling groove region 2112 in the first reference direction and the projection of the first profiling groove region 2111 in the first reference direction may overlap. In this way, when the earphones 10 are placed into the profiling grooves 211, a dimension of the charging case 20 occupied by the first portion 2112a of the second profiling groove region 2112 and a dimension of the charging case 20 occupied by the first profiling groove region 2111 may overlap. In other words, the charging case 20 can accommodate the first portion 2112a of the second profiling groove region 2112 and the first profiling groove region 2111 in the second reference direction in a first dimension. The first dimension may be smaller than a sum of a dimension of the first portion 2112a of the second profiling groove region 2112 in the second reference direction and a dimension of the first profiling groove region 2111 in the second reference direction. Therefore, on the premise that the charging case 20 can accommodate the earphones 10, the dimension of the charging case 20 in the second reference direction can be reduced, which is convenient for the user to carry.

In some embodiments, in the second reference direction perpendicular to the first reference direction, a projection of a second portion 2112b of the second profiling groove region 2112 and the projection of the first profiling groove region 2111 may overlap. In this way, when the earphones 10 are placed into the profiling grooves 211, a dimension of the charging case 20 occupied by the second portion 2112b of the second profiling groove region 2112 and the dimension of the charging case 20 occupied by the first profiling groove region 2111 may overlap. In other words, the charging case 20 can accommodate the second portion 2112b of the second profiling groove region 2112 and the first profiling groove region 2111 in the first reference direction in a second dimension. The second dimension may be smaller than a sum of a dimension of the second portion 2112b of the second profiling groove region 2112 in the first reference direction and the dimension of the first profiling groove region 2111 in the first reference direction. Therefore, on the premise that the charging case 20 can accommodate the earphones 10, the dimension of the charging case 20 in the first reference direction can be reduced, which is convenient for the user to carry.

In some embodiments, the projection of the first profiling groove region 2111 in the first reference direction and the projection of the first portion 2112a of the second profiling groove region 2112 in the first reference direction may overlap, and the projection of the first profiling groove region 2111 in the second reference direction and the projection of the second portion 2112b of the second profiling groove region 2112 in the second reference direction may overlap. In this way, by adjusting an overlapping ratio of the projections of the first profiling groove region 2111 and the second profiling groove region 2112 in the first reference direction and an overlapping ratio of the projections of the first profiling groove region 2111 and the second profiling groove region 2112 in the second reference direction, the reasonableness of the dimensions of the charging case 20 occupied in the first reference direction and the second reference direction can be improved, so that a shape of the charging case 20 can be relatively square, which not only can improve the appearance of the charging case 20, but also can allow the charging case 20 to be stored more easily in a pocket or backpack by the user.

For instance, in some embodiments, the first portion 2112a of the second profiling groove region 2112 may correspond to the battery housing 123 in the hook structure 12, and the second part 2112b of the second profiling groove region 2112 may correspond to an elastic part of the hook structure 12. The projection of the first profiling groove region 2111 in the first reference direction overlapping with the projection of the first portion 2112a of the second profiling groove region 2112 in the first reference direction refers to that when the earphones 10 are placed into the profiling grooves 211, a projection of the battery housing 123 in the first reference direction overlaps with a projection of the core module 11 in the first reference direction. The projection of the second portion 2112b of the second profiling groove region 2112 overlapping with the projection of the first profiling groove region 2111 refers to that when the earphones 10 are placed into the profiling grooves 211, a projection of the elastic part in the second reference direction overlaps with a projection of the core module 11 in the second reference direction.

In some embodiments, in the second reference direction, the second portion 2112b of the second profiling groove region 2112 may be disposed on a side of the first profiling groove region 2111 away from an edge of the lower housing assembly 21 that is adjacent to the first profiling groove region 2111. In other words, the second profiling groove regions 2112 of the two profiling groove regions 211 may be disposed close to each other. In this way, when the two earphones 10 are accommodated, the hook structures 12 in the two earphones 10 may be disposed close to each other compared with a portion of the core module 11 with a relatively small thickness. The second profiling groove regions 2112 of the two profiling grooves 211 may be disposed intersecting with each other, so that when the two profiling grooves 211 accommodate the earphones 10, respectively, the hook structures 12 of the two earphones 10 overlap with each other. Since the hook structures 12 of the earphones 10 are thinner than the core module 11, after the two hook structures 12 are close to each other and overlap with each other, the utilization of the space of the charging case 20 can be further improved, which can reduce the volume of the charging case 20.

In some embodiments, in combination with FIG. 20, the hook structure 12 may include the battery housing 123 and an elastic part connecting the battery housing 123 and the core module 11. When the two second profiling groove regions 2112 are disposed for accommodating the two earphones 10, elastic parts of the earphones 10 may overlap with each other. Since the elastic part is thinner than the battery housing 123, by overlapping the elastic parts of the two earphones 10, a space occupied by the hook structure 12 in the thickness direction of the charging case 20 can be reduced, which reduces the volume of the charging case 20. The two elastic parts may have a plurality of overlapping manners. For example, edges of the two elastic parts that are close to each other may overlap to form an overlapping region. Alternatively, each elastic part may have a curved shape, and the two elastic parts may overlap with each other. Since each of the two elastic parts has a certain volume, two disjointed overlapping regions may be formed, and geometric centers of the two overlapping regions may form two overlapping points. In some embodiments, the two profiling grooves 211 may be mirror symmetrical with a line connecting the two overlapping points as an axis of symmetry. A direction of the line connecting the two overlapping points may be parallel to the first reference direction or the second reference direction.

In some other embodiments, the second profiling groove regions 2112 of the two profiling grooves 211 may be disposed independently to each other. In this way, the two earphones 10 can be relatively independently accommodated in the charging case 20, and the use of the two earphones 10 will not be affected by each other, which facilitates to use of the two earphones 10 by the user individually.

In some embodiments, the charging case 20 may include a main control circuit board 221 disposed within the lower housing assembly 21 and electrode terminals 222 disposed on the main control circuit board 221. A plurality of sets (e.g., two sets) of electrode terminals 222 may be disposed according to need(s). Correspondingly, when either earphone 10 is placed into the charging case 20, the electrode terminal 151 in the earphone 10 may be in one-to-one contact with the electrode terminals 222 in the charging case 20 to satisfy requirement(s) of functions, such as charging, detection, etc. Correspondingly, the electrode terminals 222 may include a power supply positive terminal and a power supply negative terminal, and may further include a detection terminal. Lines connecting each two of the power supply positive terminal, the power supply negative terminal, and the detection terminal may form a triangle, such as a positive triangle. Alternatively, the power supply positive terminal, the power supply negative terminal, and the detection terminal may be spaced apart along a straight line, such as spaced apart from each other and be collinear.

In some embodiments, in combination with FIGs. 7 and 24, an electrode terminal in the charging case 20 may be a first electrode terminal (i.e., the electrode terminal 222), and an electrode terminal in the earphone 10 may be a second electrode terminal (i.e., the electrode terminal 151). The first electrode terminal may be exposed in the profiling groove 211. When the earphone 10 is accommodated in the profiling groove 211, the second electrode terminal may be connected to the first electrode terminal.

For instance, in some embodiments, the first electrode terminal may be disposed in the first profiling groove region 2111, and the second electrode terminal may be disposed on the core module 11. Since the core module 11 is a rigid structure with respect to the hook structure 12, and a hardness of the core module 11 is relatively high, a relatively smooth and stable contact surface can be provided for the connection of the first electrode terminal and the second electrode terminal, thereby improving the stabilization degree of the connection of the first electrode terminal and the second electrode terminal. In some embodiments, the core module 11 may include a magnetic member (e.g., a first magnetic suction member in the other embodiments disclosed herein), and the charging case 20 may include a magnetic suction structure that cooperates with the magnetic member in the core module 11. The stabilization degree of the connection between the first electrode terminal and the second electrode terminal may be improved under the magnetic suction cooperation between the magnetic member in the core module 11 and the magnetic suction structure in the charging case 20.

In some embodiments, the hook structure 12 may include the elastic part and a rigid part connecting the core module 11 and the elastic part. The elastic part may at least include the elastic metal wire 121, and the elastic part may have an elastic deformation. The rigid part may include the adapter housing 122 and the electrode terminal 151, the magnet 127, etc. in the adapter housing 122. The first electrode terminal may be exposed to the second profiling groove region 2112, and the second electrode terminal may be disposed on an inner side of the rigid part (a side surface of the rigid part facing the profiling groove 211 when the earphone 10 is accommodated in the profiling groove 211, referring to MS in FIG. 7). With such arrangement, the second electrode terminal and related mechanical and circuit structures can be disposed in the hook structure 12, simplifying the structure of the core module 11. A hardness of the rigid part may be larger than a hardness of the elastic part. By disposing the second electrode terminal in the rigid part, the success rate and stability of the connection between the second electrode terminal and the first electrode terminal can be improved when the earphones 10 are accommodated in the charging case 20.

In some embodiments, the inner side of the core module 11 (referring to IS in FIG. 7) and the inner side of the rigid part (referring to MS in FIG. 7) may be inclined to each other. By setting the inner side of the core module 11 and the inner side of the rigid part to be inclined to each other, the adaptation of the earphones 10 to human ears can be improved. For instance, with such arrangement, the rigid part can bypass the tragus to connect with the elastic part disposed at a rear side of the ear while enabling the core module 11 to extend into the cavity of auricular concha, thereby reducing the interference between the earphone 10 and the ear, and increasing the comfort of the earphone 10 in the wearing state. In some embodiments, the profiling groove 211 of the charging case 20 may be disposed so that a region of the first profiling groove region 2111 for accommodating the core module 11 and a region of the second profiling groove region 2112 for accommodating the rigid part are inclined towards each other, thereby improving the adaptability with the earphone 10. Viewed in the thickness direction of the charging case 20, compared to setting the region of the first profiling groove region 2111 for accommodating the core module 11 and the region of the second profiling groove region 2112 for accommodating the rigid part to be parallel to each other, by disposing the region of the first profiling groove region 2111 for accommodating the core module 11 and the region of the second profiling groove region 2112 for accommodating the rigid part to be inclined to each other, a dimension of a projection of the charging case 20 in the thickness direction can be reduced, which is convenient to carry. Compared to setting the region of the first profiling groove region 2111 for accommodating the core module 11 and the region of the second profiling groove region 2112 for accommodating the rigid part to be perpendicular to each other, by disposing the region of the first profiling groove region 2111 for accommodating the core module 11 and the region of the second profiling groove region 2112 for accommodating the rigid part to be inclined to each other, a required dimension of the charging case 20 in the thickness direction can be reduced, and the user's operability in storage of the earphones 10 can be improved at the same time. In summary, by disposing the region of the first profiling groove region 2111 for accommodating the core module 11 and the region of the second profiling groove region 2112 for accommodating the rigid part to be inclined to each other, the adaptability between the charging case 20 and the earphone 10 can be improved. In some embodiments, the thickness dimension, the length dimension, and the width dimension of the charging case 20 may be optimized, so that the charging case 20 can be easily carried by the user, and ergonomic requirements of the charging case 20 can be satisfied.

In some embodiments, referring to FIG. 24, an extension direction of the first electrode terminal may be inclined with respect to the thickness direction of the charging case 20 (referring to an angle β in FIG. 24). With such arrangement, on the one hand, a space occupied by the first electrode terminal in the thickness direction of the charging case 20 can be decreased, which reduces the volume of the charging case 20. On the other hand, when the earphones 10 are accommodated in the profiling grooves 211, the extension direction of the first electrode terminal may match with an extension direction of the second electrode terminal, thereby increasing the success rate of the connection between the first electrode terminal and the second electrode terminal. In some embodiments, the angle β may be within a range of 10 degrees to 45 degrees. For example, the angle β may be within a range of 30 degrees to 40 degrees. As another example, the angle β may be within a range of 15 degrees to 25 degrees. As still another example, the angle β may be 20 degrees.

In some embodiments, a normal direction of the inner side surface IS of the core module 11 and the extension direction of the second electrode terminal may be inclined to each other, which can facilitate the connection of the first electrode terminal and the second electrode terminal, thereby improving the success rate of the connection.

For instance, when the earphone 10 is placed into the profiling groove 211, the extension direction of the first electrode terminal may be inclined with respect to the thickness direction of the charging case 20, which causes a contact area between the first electrode terminal and the second electrode terminal to gradually increase with the placement of the earphone 10, so that the change of the contact area between the first electrode terminal and the second electrode terminal is not instantaneous. Therefore, the success rate of the connection of the first electrode terminal and the second electrode terminal can be improved, and the stability of the first electrode terminal and the second electrode terminal after the connection can be improved.

In some embodiments, a depth of the first profiling groove region 2111 may gradually increase in a direction away from the first electrode terminal. When the earphone 10 is placed into the profiling groove 211, the core module 11 may fit with a depth variation region of the first profiling groove region 2111, which can guide and position the core module 11, thereby facilitating the core module 11 to be placed into the first profiling groove region 2111.

In some embodiments, the first electrode terminal may be exposed at an end of the second profiling groove region 2112 near the first profiling groove region 2111. A depth of the region of the second profiling groove region 2112 for accommodating the rigid part in a direction away from the first profiling groove region 2111 may gradually increase. Therefore, the first profiling groove region 2111 and the region of the second profiling groove region 2112 for accommodating the rigid part may form a conical structure with a certain angle matching with the rigid part of the earphone 10 and the core module 11 in the thickness direction of the charging case 20, so as to serve as a guide to facilitate the fit of the earphone 10 with the profiling groove 211 when the earphone 10 is placed into the charging case 20. When the earphone 10 is accommodated in the profiling groove 211, the conical structure may be used to limit the earphone10, for example, limit the movement of the earphone 10 with respect to the profiling groove 211, thereby improving the stability of the earphone 10 when the earphone 10 is accommodated in the charging case 20.

In some embodiments, a first support platform 2113 may be disposed at a bottom of the second profiling groove region 2112, and the first electrode terminal may be disposed on the first support platform 2113. The earphone 10 may be disposed with a second support platform 176, and the second electrode terminal may be disposed on the second support platform 176. Merely by way of example, as shown in FIG. 7, the second support platform 176 may be disposed on a rigid part of the earphone 10. The second support platform 176 may also be disposed at other positions of the core module 11 or the hook structure 12, which is not limited herein. When the earphone 10 is accommodated in the profiling groove 211, the second support platform 176 and the first support platform 2113 may abut against each other to cooperate. By disposing the first support platform 2113 and the second support platform 176, a structural strength of the earphone 10 at the second electrode terminal and a structural strength of the profiling groove 211 at the first electrode terminal can be increased, thereby improving the stability of the connection of the first electrode terminal and the second electrode terminal. At the same time, when the first electrode terminal and the second electrode terminal are connected, the first support platform 2113 and the second support platform 176 can bear more wear, which reduces the wear of the first electrode terminal, the second electrode terminal, and other parts during repeated use of the earphone 10, thereby improving the service life of the earphones 10 and the charging box 20.

In some embodiments, a contact surface between the first support platform 2113 and the second support platform 176 may be a plane. In some embodiments, a normal direction of the contact surface may be inclined with respect to the thickness direction of the charging case 20. In this way, after the first support platform 2113 and the second support platform 176 abut against each other to cooperate, the first electrode terminal and the second electrode terminal can also be connected more smoothly. With such arrangement, a contact area between the first support platform 2113 and the second support platform 176 can gradually increase with the placement of the earphone 10, so that the change of the contact area between the first support platform 2113 and the second support platform 176 is not instantaneous the first support platform 2113 and the second support platform 176, thereby improving the stability of the abutting and cooperation between the first support platform 2113 and the second support platform 176, and improving the success rate of the connection of the first electrode terminal and the second electrode terminal. In some embodiments, the contact surface between the first support platform 2113 and the second support platform 176 and a bottom wall of the second profiling groove region 2112 may be inclined to each other, so that the first support platform 2113 and the second support platform 176 form a step structure, thereby facilitating the abutting and cooperation between the first support platform 2113 and the second support platform 176.

In some other embodiments, a normal direction of the contact surface between the first support platform 2113 and the second support platform 176 may be parallel to the extension direction of the first electrode terminal. With such arrangement, the contact surface between the first electrode terminal and the second electrode terminal can be parallel to the contact surface between the first support platform 2113 and the second support platform 176, and in the process of gradually placing the earphone 10 into the profiling groove 211, the connection between the first electrode terminal and the second electrode terminal can be relatively smooth, thereby reducing the sense of damping in the process of cooperation between the two support platforms.

In some other embodiments, the normal direction of the contact surface between the first support platform 2113 and the second support platform 176 may be inclined with respect to the extension direction of the first electrode terminal. In this way, the contact surface between the first electrode terminal and the second electrode terminal may form a step structure with respect to the contact surface between the first support platform 2113 and the second support platform 176, so as to position and limit during the process of cooperation between the first electrode terminal and the second electrode terminals, thereby improving the stability of the connection between the first electrode terminal and the second electrode terminal.

In some embodiments, in combination with FIGs. 20 and 9, the hook structure 12 may include the elastic part. The elastic part may connect the core module 11 and the battery housing 123. The elastic part may be a portion of the elastic metal wire 121 exposed to the adapter housing 122 and the battery housing 123. The two second profiling groove regions 2112 may be disposed such that the elastic parts of the two earphones 10 overlap with each other. In this way, after one of the two earphones 10 is first placed into the profiling groove 211, the other one may also be placed into the profiling groove 211. The earphone 10 that is placed in first may undergo a certain degree of deformation to enable the earphone 10 that is placed in later to be better placed into the lower housing assembly 21.

In some embodiments, viewed directly above the charging case 20, such as by placing the charging case 20 on a desktop first and then viewing the charging case 20 from a top view, the elastic part of the hook structure 12 may have an arc shape. The elastic parts of the two earphones 10 may overlap with each other to form two overlapping points (e.g., as shown by OP1 and OP2 in FIG. 20), and the two profiling grooves 211 may be mirror symmetrical with a line connecting the two overlapping points (i.e., a line section OP1 OP2) as the axis of symmetry, so as to improve the reasonableness of the distribution of the two profiling grooves 211, thereby improving the appearance quality of the charging case 20.

In some embodiments, regions of the two second profiling groove regions 2112 located between the two overlapping points may be a portion of the lower housing assembly 21. That is, the two second profiling groove regions 2112 may form an isolated island at their confluence, which limits the degree of freedom of either earphone 10 when placed into the profiling groove 211. In other words, the regions of the two second profiling groove regions 2112 that are surrounded by the hook structure 12 and located between the two overlapping points may form the isolated island.

In some embodiments, two earphones 10 may be used to be worn on left and right ears of the user, respectively. The core modules 11 of the two earphones 10 may be disposed on both sides of the first reference direction, respectively. With such arrangement, viewed from the first reference direction (i.e., a direction where the user opens the charging case 20 in a positive direction), the earphone10 for wearing on the left ear may be accommodated in the left side with respect to the user, and the earphone10 for wearing on the right ear may be accommodated on the right side with respect to the user to facilitate the user to use and accommodate the earphones 10 within the charging case 20. In some embodiments, the two profiling grooves 211 may be mirror symmetrical with the line connecting the two overlapping points as an axis of symmetry. The direction of the line connecting the two overlapping points may be parallel to the first reference direction.

In some embodiments, the regions of the two second profiling groove regions 2112 that are surrounded by the hook structure 12 located between the two overlapping points may integrate with each other. That is, the isolated island may not exist, so that the two second profiling groove regions 2112 integrate with each other at a convergence, which facilitates the earphones 10 to be easily placed into the corresponding profiling grooves 211.

In some embodiments, in combination with FIGs. 20 and 9, the hook structure 12 may include the rigid part disposed between the elastic part and the core module 11. The rigid part may connect the core module 11 and the elastic part, and the rigid part may include the adapter housing 122 and the electrode terminal 151, the magnet 127, etc. in the adapter housing 122. Correspondingly, the lower housing assembly 21 may include a limiting structure 212, and the limiting structure 212 may be disposed within or adjacent to the profiling groove 211. After either earphone 10 is placed into the profiling groove 211, the limiting structure 212 may form a pressing force facing a bottom of the profiling groove 211 on the rigid part of the earphone 10, so as to maintain a relative position between the earphone 10 and the lower housing assembly 21. At least a portion of the elastic part of the same earphone 10 may form a cantilevered structure with respect to an action point of the limiting structure 212 on the rigid part. That is, at least a portion of the earphone 10 may not be in contact with the bottom of the profiling groove 211 (in particular, the second profiling groove region 2112). In this way, after one of the two earphones 10 is placed into the profiling groove 211 first, when the other earphone 10 is placed into the profiling groove 211 later, the elastic part of the first-placed earphone 10 can be more likely to deform to a certain extent, which facilitates the earphones 10 to be easily placed into the corresponding profiling grooves 211.

In some embodiments, the limiting structure 212 may be a bump that interferes with the rigid part of the earphone 10 when either earphone 10 is placed into the profiling groove 211 and taken out of the profiling groove 211. The bump may be disposed adjacent to the profiling groove 211.

In some embodiments, a count of the bump may be two, and the two bumps may be disposed on opposing sides of the profiling groove 211. During a process of placing either earphone 10 into the profiling groove 211, the rigid part of the earphone 10 may be clamped into a space between the two bumps under a pressing force applied by the user.

In some embodiments, the charging case 20 may include a first magnetic suction structure 231 and a second magnetic suction structure 232 disposed within the lower housing assembly 21. The electrode terminal 222 may be disposed between the first magnetic suction structure 231 and the second magnetic suction structure 232. After either earphone 10 is placed into the profiling groove 211, the first magnetic suction structure 231 and a first magnetic suction member within the earphone 10 may form a first magnetic suction matching pair, and the second magnetic suction structure 232 and a second magnetic suction member within the earphone 10 may form a second magnetic suction matching pair. The first magnetic suction matching pair and the second magnetic suction matching pair may cause the electrode terminals 222 and the electrode terminals 151 in one-to-one contact. In this way, since the electrode terminal 222 and the electrode terminal 151 are located between the first magnetic suction matching pair and the second magnetic suction matching pair after being paired up, the contact between the earphone 10 and the charging case 20 can be improved. It should be noted that with the action of the limiting structure 212, the contact between the earphone 10 and the charging case 20 can be further ensured.

In some embodiments, the limiting structure 212 may be a position limiting groove in communication with the profiling groove 211. The hook structure 12 may be further moved into the position limiting groove after either earphone 10 is placed into the profiling groove 211. That is, the earphone 10 may have a certain displacement as a whole. The position limiting groove may be disposed within the profiling groove 211.

In some embodiments, the charging case 20 may include the first magnetic suction structure 231 disposed within the lower housing assembly 21. After either earphone 10 is placed into the profiling groove 211, the first magnetic suction structure 231 and the first magnetic suction member within the earphone 10 may form the first magnetic suction matching pair (e.g., two magnets of opposite sex attracting each other), so as to guide the hook structure of the earphone 10 to further move into the position limiting groove. The bottom of the profiling groove 211 may be disposed with a guiding surface used for guiding the hook structure of the earphone 10 to the position limiting groove. For example, a depth of a section of the second profiling groove region 2112 near the first profiling groove region 2111 may be larger than a depth of the first profiling groove region 2111. That is, there is a height difference between the section of the second profiling groove region 2112 and the first profiling groove region 2111, and the profiling groove 211 may be disposed as an inclined plane in a region having the height difference for transition, so as to form the guiding surface. Correspondingly, the position limiting groove may also be located in the section of the second profiling groove region 2112 near the first profiling groove region 2111.

In some embodiments, the charging case 20 may include the second magnetic suction structure 232 disposed within the lower housing assembly 21, and the electrode terminal 222 may be disposed between the first magnetic suction structure 231 and the second magnetic suction structure 232. After either earphone 10 is placed into the profiling groove 211, the second magnetic suction structure 232 and the second magnetic suction member within the earphone 10 may form the second magnetic suction matching pair, (e.g., two magnets of opposite sex attracting each other), so as to guide the hook structure of the earphone 10 together with the first magnetic suction matching pair to further move into the position limiting groove, and increase the power for further moving the earphone 10 into the position limiting groove. Similarly, the first magnetic suction matching pair and the second magnetic suction matching pair may cause the electrode terminals 222 and the electrode terminals 151 in one-to-one contact. In this way, since the electrode terminal 222 and the electrode terminal 151 are located between the first magnetic suction matching pair and the second magnetic suction matching pair after being paired up, the contact between the earphone 10 and the charging case 20 can be improved. It should be noted that with the action of the limiting structure 212, the contact between the earphone 10 and the charging case 20 can be further ensured.

It is to be noted that the first magnetic suction member may be the loudspeaker 112 within the core module 11, for instance, a magnetic circuit system of the loudspeaker 112. The second magnetic suction member may be the magnet 127 disposed on the rigid part of the earphone 10.

Usually, when the earphone 10 is placed into the charging case 20, the success rate of the earphone 10 into the charging case 20 may be reduced if the hook structure 12 deforms or affects the stability of the placement of the earphone 10. For example, the core module 11 of the earphone 10 may be accommodated in the first profiling groove region 2111, and the hook structure 12 may be accommodated in the second profiling groove region 2112. However, since the hook structure 12 has elasticity, during the process of placing the hook structure 12 into the second profiling groove region 2112, the hook structure 12 may not correspond well to a shape of the second profiling groove region 2112 due to previously existing deformation of the use or action deformation under the action of inertial force, so that the hook structure 12 is not easily placed into the profiling groove region 211. At the same time, a placement relationship between the core module 11 and the first profiling groove region 2111 may be unstable. To improve the above technical problems, the following embodiments may be provided.

In some embodiments, in combination with FIG. 20, by disposing a certain movable gap between the core module 11 and a side wall of the first profiling groove region 2111, and a certain moveable gap between the hook structure 12 and a side wall of the second profiling groove region 2112, the profiling groove 211 may provide a sufficient space to allow the hook structure 12 to exist or deform to a certain extent during the process of placing the earphone 10 into the profiling groove 211, which ensures that the core module 11 and the hook structure 12 are smoothly placed into the first profiling groove region 2111 and the second profiling groove region 2112, respectively, with less intervention by the user, thereby improving the success rate and the placement stability of the earphone into the charging case 20. In some embodiments, since one end of the hook structure 12 is connected to the core module 11, and another end is disposed in a cantilever state, a portion of the hook structure 12 away from the core module 11 may be regarded as a distal end of a cantilever beam. Considering that the portion of the hook structure 12 away from the core module 11 generates a larger deformation than other portions during the process of placing the earphone 10 into the profiling groove 211, and the core module 11 only needs a smaller movable gap than the hook structure 12 at the same time, the core module 11 can be only placed into the first profiling groove region 2111. An excessively large movable gap may not be conducive to the optimization of the size of the charging case 20, and may cause the placement of the core module 11 in the charging case to be unstable and prone to wobbling and rattling.

In some embodiments, when the earphone 10 is placed into the profiling groove 211, by disposing a movable gap between the portion of the hook structure 12 away from the core module 11 and the side wall of the second profiling groove region 2112 (referring to a side wall 2111c in FIG. 20) to be larger than the movable gap between the core module 11 and the side wall of the first profiling groove region 2111, the first profiling groove region 2111 can be placed into the core module 11 smoothly, and the second profiling groove region 2112 can provide a larger movable space for the hook structure 12, thereby further improving the success rate of the earphone 10 being placed into the charging case 20 and the stability of the placing of the earphone 10, and facilitating the optimization of the dimension of the charging case 20. When the hook structure 12 is accommodated in the second profiling groove region 2112, deformation may still occur due to wobbling or stress, and a dimension of the movable gap between the hook structure 12 and the side wall of the second profiling groove region 2112 may change. However, the change may not result in the disappearance of the movable gap. In some embodiments, the dimension of the movable gap between the portion of the hook structure 12 away from the core module 11 and the side wall of the second profiling groove region 2112 may be within a range of 0.5 to 1.5 mm. For example, the dimension of the movable gap may be within a range of 1 to 1.3 mm. For instance, the dimension of the movable gap may be 1.2 mm. By disposing the dimension of the movable gap in such a manner, the success rate of placing the hook structure 12 into the second profiling groove region 2112 can be increased, and a relatively small impact can be applied to the dimension of the charging case 20.

In some embodiments, the dimension of the movable gap between the core module 11 and the side wall of the first profiling groove region 2111 may be within a range of 0.05 to 0.2 mm. For example, the dimension of the movable gap may be within a range of 0.07 to 0.15 mm. For instance, the dimension of the movable gap may be 0.1 mm. By disposing the dimension of the movable gap in such a manner, the core module 11 can be stably accommodated in the first profiling region 2111, which can position and limit the accommodation of the earphone 10 in the profiling groove 211, and improve the contact stability of the electrode terminal.

In some embodiments, the portion of the hook structure 12 away from the core module 11 may include the battery housing 123 for housing the battery. The battery housing 123 may be disposed in the portion of the hook structure 12 away from the core module 11. The hook structure 12 may also include the elastic part connecting the core module 11 and the battery housing 123. The battery housing 123 may have a larger size than the elastic part, so that the elastic part can surround the user's ear to hang the earphone 10, and the battery housing 123 may support the ear from the rear side of the ear, thus improving the stability of the earphone 10 in the wearing state. The movable gap between the battery housing 123 and the side wall of the second profiling groove region 2112 may be larger than the movable gap between the core module 11 and the side wall of the first profiling groove region 2111, which can increase the success rate of placing the battery housing 123 into the second profiling groove region 2112, and facilitate the accommodation of the earphone 10. In some embodiments, when the earphone 10 is accommodated in the profiling groove 211, a movable gap between the elastic part and the side wall of the second profiling groove region 2112 may be larger than the movable gap between the core module 11 and the side wall of the first profiling groove region 2111, which can improve the success rate of placing the elastic part into the second profiling groove region 2112, and facilitate the accommodation of the earphone 10.

In some embodiments, the hook structure 12 may further include the rigid part connecting the elastic part and the core module 11. Since the rigid part may be used to dispose the electrode terminal 151 or the second magnetic suction member, the hardness of the rigid part may be larger than the hardness of the elastic part, and the rigid part may have a relatively high requirement for the stability. When the earphone 10 is accommodated in the profiling groove 211, the movable gap between the elastic part and the side wall of the second profiling groove region 2112 may be larger than a movable gap between the rigid part and the side wall of the second profiling groove region 2112. In this way, the elastic part can be placed into the second profiling groove region 2112, and the stability of the rigid part accommodated in the second profiling groove region 2112 can be improved, so that the rigid part can cooperate with the core module 11, thereby increasing the stability of the earphone 10 accommodated within the profiling groove 211, and improving the stability and reliability of the second magnetic suction member or the contact of the electrode terminals.

In some embodiments, the charging case 20 may at least include an electrode terminal for charging, and the electrode terminal may not be disposed on the battery housing 123. It can be understood that the battery housing 123 is at an end of the hook structure 12, which generates a relatively great degree of deformation. The electrode terminal disposed on the battery housing 123 is not favorable for matching with the electrode terminal in the lower housing assembly 21. For instance, the electrode terminal may not be disposed on the battery housing 123, but may be disposed on a structure on the earphone 10 that generates a relatively small degree of deformation, for example, the core module 11 or the rigid part, which facilitates the matching between the electrode terminals.

In some embodiments, in combination with FIG. 19, the lower housing assembly 21 may be disposed with the limiting structure. During the process of placing the earphone 10 into the profiling groove 211, the core module 11 may be accommodated in the first profiling groove region 2111 through the limiting structure. For example, the limiting structure may be a clamping structure, and the core module 11 may be accommodated in the first profiling groove region 2111 by means of a clamping cooperation with the limiting structure. As another example, the limiting structure may be a magnetic suction structure, and the core module 11 may be placed into the first profiling groove region 2111 by means of a magnetic cooperation with the limiting structure. For instance, the first profiling groove region 2111 may also be disposed with the first magnetic suction structure 231, and the core module 11 may be disposed with the first magnetic suction member. When the core module is placed into the first profiling groove region 2111, the first magnetic suction member and the first magnetic suction structure 231 may magnetically cooperate with each other. The placement of the core module 11 within the first profiling groove region 2111 through the magnetic suction may be found in the descriptions of the above embodiments, which will not be repeated herein. The core module 11 can be stably accommodated in the first profiling groove region 2111 in the manner described above, which can limit the movement of the earphone 10 within the charging case 20, and improve the stability of the matching between the electrode terminals.

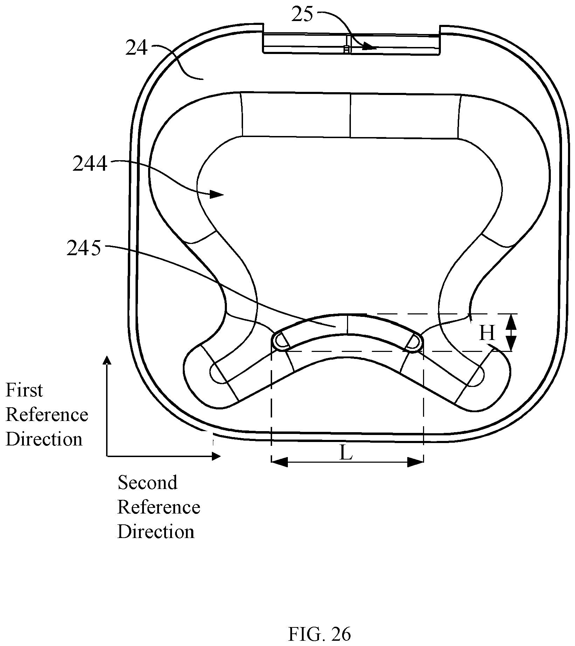

In some embodiments, in combination with FIGs. 25 and 26, the charging case 20 may further include an upper housing assembly 24. When the charging case 20 is in a closed state, the upper housing assembly 24 may cooperate with the lower housing assembly 21. The upper housing assembly 24 may be disposed with a limiting member 245. The limiting member 245 may abut against the charging case 20 when the charging case 20 is in the closed state. In this way, when the charging case 20 is closed, the limiting member 245 can apply a pressure on the hook structure 12, thereby limiting the movement of the hook structure 12 in the thickness direction of the charging case 20. In some embodiments, a friction may also be generated between the limiting member 245 and the hook structure 12, thereby limiting the movement of the hook structure 12 in other directions to reduce abnormal noise due to the movement of the hook structure 12 while reducing the wear of the earphone 10 and the charging case 20.

A count of limiting members 245 may be one, two, or multiple. In some embodiments, the count of limiting members 245 may be one, and the limiting member 245 may abut against the hook structures 12 of the two earphones 10 when the charging case 20 is closed. In this way, the movements of the two hook structures 12 can be simultaneously limited by one limiting member 245. In some embodiments, the count of limiting members 245 may be two, and two limiting members 245 may limit the movements of the two hook structures 12 of the earphones 10, respectively, when the charging case 20 is closed.

In some embodiments, the hook structure 12 may include the battery housing 123 for housing the battery. The limiting member 245 may abut against the battery housing 123 when the charging case 20 is closed. The battery housing 123 may be a relatively large portion of the hook structure 12. The limiting member 245 may improve the stability of the hook structure 12 when accommodated in the charging case 20 by limiting the movement of the battery housing 123. In some embodiments, the core module 11 may be accommodated in the first profiling groove region 2111 by means of clamping, magnetic suction, etc., to limit the degree of freedom of the core module 11. In this way, when the earphone 10 is accommodated in the profiling groove 211, the degrees of freedom of both the core module 11 and the hook structure 12 of the earphone 10 may be limited, which limits the degree of freedom of the movement of the earphone 10 to a relatively great extent, thereby preventing the earphone 10 from wobbling inside the charging case 20. In some embodiments, wear of the charging case 20 and the earphone 10 can be avoided, improving the service life of the charging case 20 and the earphone 10.

In some other embodiments, the movable gap between the battery housing 123 and the side wall of the second profiling groove region 2112 may be larger than the movable gap between the core module 11 and the side wall of the first profiling groove region 2111. The beneficial effect resulting from such a setting can be found in the description of the above embodiments, which will not be repeated herein. With a relatively large movable gap between the battery housing 123 and the side wall of the second profiling groove region 2112, the success rate of placing the earphone 10 into the charging case 20 can become relatively high. However, the hook structure 12 may be caused to be more susceptible to wobbling. On this basis, in some embodiments, by disposing the limiting member 245 to abut against the battery housing 123 when the charging case 20 is closed, the success rate of placing the earphone 10 can be improved, and the wobbling of the hook structure 12 can be reduced.

In some embodiments, when the earphone 10 is accommodated in the profiling groove 211 of the charging case 20, the first magnetic suction member of the core module 11 may cooperate with the first magnetic suction structure of the lower housing assembly 21, which can limit the degree of freedom of the core module 11, thereby reducing the wobbling of the core module 11. Furthermore, by disposing the limiting member 245 to abut against the hook structure 12, the wobbling of the hook structure 12 can be reduced, thereby reducing the overall wobbling of the earphone10.

In some embodiments, the lower housing assembly 21 may include the position limiting structure 212, and the limiting structure 212 may be disposed within or adjacent to the profiling groove 211. After either earphone 10 is placed into the profiling groove 211, the limiting structure 212 may form a pressing force facing a bottom of the profiling groove 211 on the rigid part of the earphone 10, so as to maintain a relative position between the earphone 10 and the lower housing assembly 21, thereby limiting the degree of freedom of the earphone 10 and reducing the wobbling of the earphone 10 within the charging case 20. Furthermore, by disposing the limiting member 245 to abut against the hook structure 12, the wobbling of the hook structure 12 can be reduced, thereby reducing the overall wobbling of the earphone10.

In some embodiments, the limiting member 245 may be a flexible structure. For example, a material of the limiting member 245 may include a material such as silicone or rubber. Shore hardness of the limiting member 245 may be within a range of 20 to 50. With such arrangement, the limiting member 245 can deform when abutting against the hook structure 12. On the one hand, the wear of the limiting member 245 on the hook structure 12 can be reduced. On the other hand, the force applied by the limiting member 245 on the hook structure 12 can be more uniform, so that the limiting member 245 can be more fit to the shape of the hook structure 12, thereby further limiting the hook structure 12 from moving in a plurality of directions, reducing the wobbling of the earphone 10 within the profiling groove 211, and reducing abnormal noise due to the movement.

In some other embodiments, the limiting member 245 may include an abutting part and a retracting part. The retracting part may connect the abutting part and the upper housing assembly 24. When the charging case 20 is closed, the retracting part may cause the abutting part to abut against the hook structure 12 through elastic expansion and contraction. In other words, the retracting part can provide an elastic force when the abutting part abuts against the hook structure 12, so that the abutting part can apply a pressure on the hook structure 12 to limit the wobbling of the hook structure 12. For instance, the retracting part may include a structure such as a spring, a torsion spring, etc.

In some embodiments, a thickness of the limiting member 245 may be within a range of 1.2 to 2 mm. For example, the thickness of the limiting member 245 may be 1.2 mm, 1.5 mm, or 2 mm. If the thickness of the limiting member 245 is smaller than 1.2 mm, the limiting member 245 may not be able to sufficiently interfere with the hook structure 12 to generate sufficient pressure to limit the movement of the hook structure 12. If the thickness of the limiting member 245 is larger than 2 mm, the limiting member 245 may generate too much pressure on the hook structure 12, so that the hook structure 12 continues to deform when the hook structure 12 is accommodated, which in turn causes the hook structure 12 to lose its original shape, affecting the user's wearing experience.

In some embodiments, the first portion 2112a of the second profiling groove region 2112 may be used to accommodate a portion (e.g., the battery housing 123) of the hook structure 12. When the charging case 20 is in the closed state, projections of the first portions 2112a of the two second profiling groove regions 2112 in the thickness direction of the charging case 20 may at least partially cover a projection of the limiting member 245 in the thickness direction of the charging case 20. With such arrangement, at least a portion of the limiting member 245 can abut against the hook structure, and a limiting region of the limiting member 245 can not extend beyond a region where the first portion 2112a of the second profiling groove region 2112 is located, which can reduce redundancy that may be generated by the limiting member 245, thereby reducing the cost.

In some embodiments, in combination with FIG. 26, the limiting member 245 may be a single arcuate structure that abuts against the two hook structures 12. A length (referring to L in FIG. 26) of a projection of the limiting member 245 in the first reference direction perpendicular to an axis of a shaft mechanism 25 may be within a range of 20 to 24 mm. For example, the length of the projection of the limiting member 245 in the first reference direction may be within a range of 21 to 23 mm. As another example, the length of the projection of the limiting member 245 in the first reference direction may be within a range of 22 to 22.5 mm. If the length of the projection of the limiting member 245 in the first reference direction is smaller than 20 mm, a contact area between the limiting member 245 and each of the hook structures 12 may be reduced, which may even cause the limiting member 245 to be unable to simultaneously abut against the two hook structures 12, resulting in the loss of the limiting capability of the limiting member 245 to limit the two hook structures 12 at the same time. If the length of the projection of the limiting member 245 in the first reference direction is larger than 24 mm, the limiting member 245 may still have redundancy in the length except for the portion of the limiting member 245 that abuts against the two hook structures 12, and the redundancy in the length may increase the production cost.

In some embodiments, a length (referring to H in FIG. 26) of a projection of the limiting member 245 in the second reference direction perpendicular to the first reference direction may be within a range of 3 to 7 mm. For example, the length of the projection of the limiting member 245 in the second reference direction may be within a range of 3 to 6 mm. As another example, the length of the projection of the limiting member 245 in the second reference direction may be within a range of 5 to 6 mm. If the length of the projection of the limiting member 245 in the second reference direction is smaller than 3 mm, an area where the limiting member 245 abuts against the two hook structures 12 may be reduced, which weakens the ability of the limiting member 245 to limit the movement of the hook structure 12. If the length of the projection of the limiting member 245 in the second reference direction is larger than 7 mm, the area of the limiting member 245 in contact with the hook structure 12 may be relatively large, which can excessively increase the pressure on the hook structure 12, causing the hook structure 12 to deform other than desired.

In some embodiments, the upper housing assembly 24 may be disposed with an accommodation groove 244 for accommodating the earphone 10 when the charging case 20 is closed. The accommodation groove 244 may accommodate a portion of the earphone 10 that is not accommodated by the profiling grooves 211 when the upper housing assembly 24 is closed on the lower housing assembly 21, thereby allowing the upper housing assembly 24 to close tightly with the lower housing assembly 21. When the charging case 20 is in the closed state, side walls of the accommodation groove 244 may also limit the position of the earphone 10 to limit the movement of the earphone 10 within the charging case 20. In some embodiments, the limiting member 245 may be disposed within the accommodation groove 244. The limiting member 245 may cooperate with the accommodation groove 244, such that when the earphone 10 is accommodated in both the profiling groove 211 and the accommodation groove 244, the limiting member 245 can apply the pressure on the hook structure 12 to limit the hook structure 12 from moving, reducing the generation of the wobbling and abnormal noise of the hook structure 12.

In some embodiments, in combination with FIG. 20, the second profiling groove regions 2112 of the two profiling grooves 211 are disposed intersecting with each other, so that when the two profiling grooves 211 accommodate the earphones 10, respectively, the hook structures 12 of the two earphones 10 overlap with each other, and form a first overlapping point OP1 near the shaft mechanism 25 and a second overlapping point OP2 away from the shaft mechanism 25. With such arrangement, the hook structures 12 of the two earphones 10 can be placed overlappingly, which reduces the dimension of the charging case 20. In a direction of a line connecting the first overlapping point OP1 and the second overlapping point OP2, regions where the limiting member 245 abuts against the hook structures 12 may be located in a direction where the second overlapping point OP2 is back from the first overlapping point OP1. The hook structures 12 may overlap with each other when the hook structures 12 are accommodated in the profiling groove 211, and the overlapping portion may limit the degree of freedom of the movement of a portion of the hook structures 12. By disposing the regions where the limiting member 245 abuts against the hook structures 12 on a side where the second overlapping point OP2 is back from the first overlapping point OP1, the degree of freedom of the hook structures 12 can be further reduced, thereby further limiting the movement of the hook structures 12. In some embodiments, when the charging case 20 is closed, the limiting member 245 may abut against a portion corresponding to the second overlapping point OP2 of the hook structures 12. In this way, since the hook structures 12 overlap with each other at the second overlapping point OP2, thicknesses of the two hook structures 12 can be superimposed. The limiting member 245 can abut against the portion corresponding to the second overlapping point OP2, so that the hook structures 12 can have a relatively small thickness and the production costs can be reduced while limiting the degree of freedom of the hook structures 12.

In some embodiments, when the charging case 20 is in the closed state, a distance between the limiting member 245 and a side wall of the upper housing assembly 24 near the second overlapping point OP2 may be within a range of 15 to 20 mm. With such arrangement, the limiting member 245 can abut against the portion of the hook structures 12 near the second overlapping point OP2. Regions of the two hook structures 12 near the second overlapping point OP2 may have an overlapping portion, so that the region has a relatively high height in the thickness direction of the charging case 20, thereby reducing the thickness of the limiting member 245. If a distance between the limiting member 245 and an edge of the lower housing assembly 21 near the second overlapping point OP2 is smaller than 15 mm, the limiting member 245 may be relatively far away from the second overlapping point OP2, and the thickness of the limiting member 245 needs to be increased to be able to abut against the hook structures 12. If the distance between the limiting member 245 and the edge of the lower housing assembly 21 near the second overlapping point OP2 is larger than 20 mm, the area of the limiting member 245 that abuts against the hook structures 12 may be reduced, thereby weakening the limiting effectiveness.

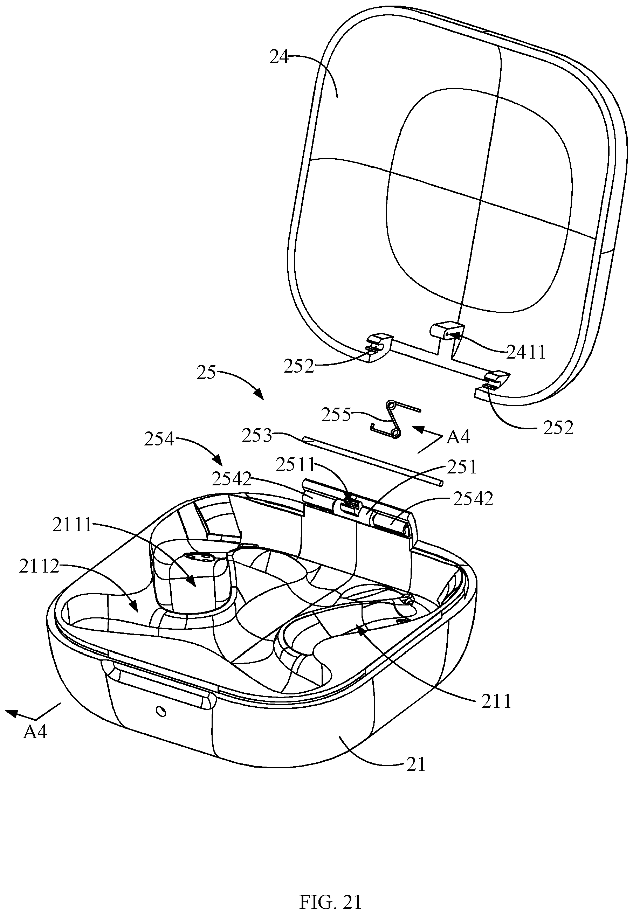

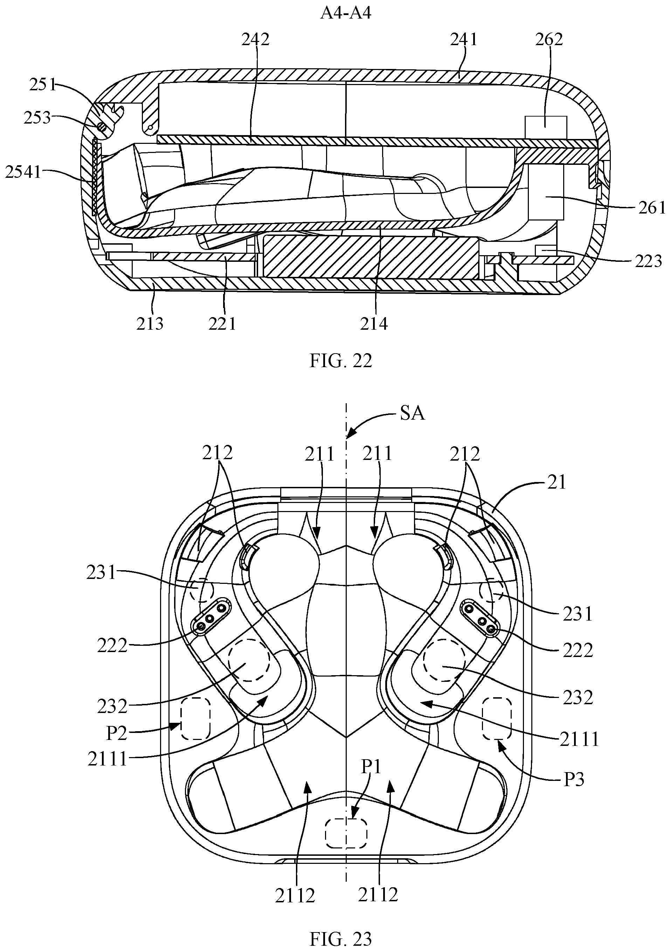

In some embodiments, in combination with FIGs. 21 and 22, the charging case 20 may include the upper housing assembly 24 and the shaft mechanism 25 connecting the upper housing assembly 24 and the lower housing assembly 21 to enable the charging case 20 to be opened or closed. The shaft mechanism 25 may include a lower fixing seat 251 integrally molded with the lower housing assembly 21, an upper fixing seat 252 integrally molded with the upper housing assembly 24, and a shaft 253. The lower fixing seat 251 may extend into the upper housing assembly 24, which in turn is pivotally connected to the upper fixing seat 252 through the shaft 253. In some embodiments, the shaft mechanism 25 may include a reinforcement member 254 connected to the lower fixing seat 251. A structural strength of the reinforcement member 254 may be larger than that of the lower fixing seat 251. The shaft 253 may be further penetrated through the reinforcement member 254 to provide structural reinforcement to the shaft mechanism 25. The reinforcement member 254 and the lower fixing seat 251 may be an integrally molded structural member, such as integrally molded by a metal insert injection molding operation. Alternatively, the reinforcement member 254 and the lower fixing seat 251 may be two separate structural members and connected by a glue connection, a screw connection, a clamping connection, or the like, or any combination thereof.

In some embodiments, the shaft mechanism 25 may include an elastic member 255. One end of the elastic member 255 may be connected to the lower housing assembly 21, for example, connected to the lower fixing seat 251. Another end of the elastic member 255 may be connected to the upper housing assembly 24, so as to maintain the charging case 20 in the open state or the closed state. During the opening or closing process of the charging case 20, the elastic member 255 may be elastically deformed to provide a certain sense of damping. A portion of the sense of damping may originate from a frictional resistance of the shaft 253 when the shaft 253 rotates with a structure connected to the shaft 253.

In some embodiments, in combination with FIG. 21, the elastic member 255 may be disposed as a Z-type torsion spring. A basic structure of the Z-type torsion spring is well known to those skilled in the art, which will not be repeated herein. One of the lower fixing seat 251 or the upper housing assembly 24 may be disposed with a mounting hole 2411, and the other may be disposed with a mounting groove 2511. For example, the mounting hole 2411 may be disposed on an upper housing body 241 and located between two upper fixing seats 252 in an extension direction of the shaft 253, and the mounting groove 2511 may be disposed on the lower fixing seat 251 and located between two sleeve parts 2542 in the extension direction of the shaft 253. In this way, during the process of installing the elastic member 255, one end of the elastic member 255 can extend into the mounting hole 2411 along an axial direction of the mounting hole 2411 firstly, and then another end of the elastic member 255 can be inserted into the mounting groove 2511 along a direction perpendicular to an axial direction of the mounting groove 2511, so as to reduce an amount of deformation of the elastic member 255 in the process of installing, thereby maintaining the reliability of the elastic member 255. In some embodiments, the mounting hole 2411 and the mounting groove 2511 may be disposed in a through-hole structure along their axial directions, respectively.

In some embodiments, in combination with FIG. 21, two upper fixing seats 252 may be spaced apart along the extension direction of the shaft 253. The lower fixing seat 251 may be disposed between the two upper fixing seats 252, and respectively spaced apart from the two upper fixing seats 252, which can support the shaft 253. The reinforcement member 254 may include a connecting portion 2541 connected to the lower fixing seat 251 and two sleeve parts disposed at intervals along the extension direction of the shaft 253. The two sleeve parts 2542 may be disposed in a spacing region between the lower fixing seat 251 and the two upper fixing seats 252, respectively. Correspondingly, the shaft 253 may be inserted within the lower fixing seat 251, the two sleeve parts 2542, and the two upper fixing seats 252.

In some embodiments, in combination with FIG. 22, the lower housing assembly 21 may include a lower housing body 213 and a lower housing liner 214 disposed on an inner side of the lower housing body 213. The lower fixing seat 251 and the lower housing body 213 may be integrally molded plastic parts, and the reinforcement member 254 may be a metal part. The connecting portion 2541 may be disposed between the lower housing body 213 and the lower housing liner 214, such that the reinforcement member 254 is not exposed at least when the charging case 20 is in the closed state. Correspondingly, the profiling groove 211, the limiting structure 212, etc., may be disposed on the lower housing liner 214. The main control circuit board 221 (and the electrode terminals 222, the first magnetic structure 231, and the second magnetic structure 232, etc., on the main control circuit board 221) may be disposed between the lower housing body 213 and the lower housing liner 214. In some embodiments, the upper housing assembly 24 may include an upper housing body 241 and an upper housing liner 242 disposed on an inner side of the upper housing body 241. The upper fixing seat 252 and the upper housing body 241 may be an integrally molded plastic part.

Compared to the related technique that the upper housing assembly 24 is connected to the lower housing assembly 21 through a metal connecting member (i.e., the upper housing assembly 24 and the lower housing assembly 21 can not be connected together after the removal of the metal connecting member, and the metal connecting member must be exposed), in the present disclosure, the upper housing assembly 24 and the lower housing assembly 21 can be still connected together after the removal of the reinforcement member 254, and the reinforcement member 254 is not exposed, which can reduce the cost of the charging case 20 and maintain the consistency of the appearance.

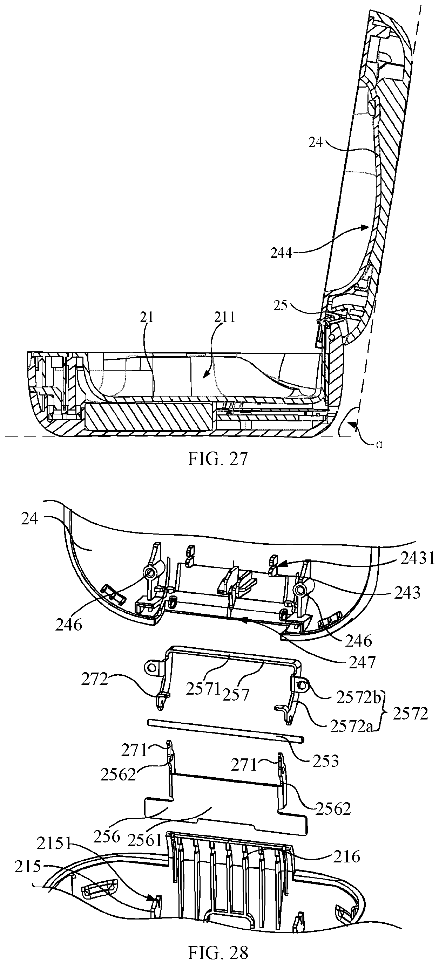

In some embodiments, in combination with FIGs. 28-31, the charging case 20 may include the upper housing assembly 24 and the shaft mechanism 25 connecting the upper housing assembly 24 and the lower housing assembly 21, so as to open or close the charging case 20. The charging case 20 may further include a position limiting mechanism. The position limiting mechanism may be used to limit a rotation angle of the upper housing assembly 24 with respect to the lower housing assembly 21 when the charging case 20 is in the open state. In other words, the position limiting mechanism can limit a further relative rotation of the upper housing assembly 24 with respect to the lower housing assembly 21 when the upper housing assembly 24 is rotated to a predetermined angle. It should be noted that an angle at which the upper housing assembly 24 opens with respect to the lower housing assembly 21 refers to an angle (referring to an angle α in FIG. 27) between a lower surface of the lower housing assembly 21 and an upper surface of the upper housing assembly 24. By disposing the position limiting mechanism, the angle at which the upper housing assembly 24 opens with respect to the lower housing assembly 21 can be limited, thereby reducing the risk of damage to a housing structure of the charging case 20 due to over-rotation of the upper housing assembly 24, the wear on a surface of the charging case 20 caused by the housing being abutted, etc.

In some embodiments, the position limiting mechanism may be connected to the upper housing assembly 24 and the lower housing assembly 21, respectively, thereby limiting the angle at which the upper housing assembly 24 opens with respect to the lower housing assembly 21. For example, the position limiting mechanism may include two connecting rods. The two connecting rods may be hinged connected to each other, and hinged connected to the upper housing assembly 24 and the lower housing assembly 21, respectively. When the upper housing assembly 24 is rotated to the predetermined angle with respect to the lower housing assembly 21, the two connecting rods may be located in a straight line, thereby limiting the further rotation of the upper housing assembly 24 with respect to the lower housing assembly 21. The two connecting rods may be rotated with respect to each other when the charging case 20 is transformed from the open state to the closed state, and a portion connected to the upper housing assembly 24 and a portion connected to the lower housing assembly 21 may be close to each other. In other words, the two connecting rods can limit the rotation of the upper housing assembly 24 with respect to the lower housing assembly 21 toward the open state, and but do not limit the rotation toward the closed state.

In some embodiments, the position limiting mechanism may include a first position limiting member 271 and a second position limiting member 272. The second position limiting member 272 may be connected to the upper housing assembly 24, and may follow the movement of the upper housing assembly 24. The first position limiting member 271 may be connected to the lower housing assembly 21, and may follow the movement of the lower housing assembly 21. The first position limiting member 271 and the second position limiting member 272 may abut against each other when the upper housing assembly 24 is rotated to the predetermined angle with respect to the lower housing assembly 21, thereby limiting the further rotation of the upper housing assembly 24 with respect to the lower housing assembly 21. In some embodiments, the predetermined angle may be within a range of 90 degrees to 110 degrees. If the predetermined angle is smaller than 90 degrees (i.e., if an angle between the upper housing assembly 24 and the lower housing assembly 21 is an acute angle), the upper housing assembly 24 may tend to reclose under the action of gravity or an elastic member of the shaft mechanism 25, which is not conducive for the user to take and store the earphones 10. In addition, the predetermined angle smaller than 90 degrees may cause the user to interfere with the upper housing assembly 24 when the user takes and stores the earphone 10, affecting the using experience of the user. If the predetermined angle is larger than 110 degrees, the angle at which the upper housing assembly 24 opens with respect to the lower housing assembly 21 may be too large, which enhances a strength requirement for the shaft mechanism 25 and the position limiting mechanism. If the angle at which the upper housing assembly 24 opens with respect to the lower housing assembly 21 is too large, a length of the charging case 20 when opened may be increased. The length of the charging case 20 when opened refers to a distance between a farthest end of the upper housing assembly 24 from the shaft mechanism and a farthest end of the lower housing assembly 21 from the shaft mechanism. For example, in an extreme operating condition where the charging case 20 is dropped or squeezed, a relatively long length of the charging case 20 when opened can enhance a moment being applied to the upper housing assembly 24 and the lower housing assembly 21, thereby improving the risk of damage to the charging case 20.

In some embodiments, the upper housing assembly 24 may be disposed with a slot 247 on an edge near the lower housing assembly 21. The shaft mechanism 25 may include the shaft 253 bridged at two ends of the slot 247. The upper housing assembly 24 may rotate around the shaft 253 with respect to the lower housing assembly 21. In some embodiments, the predetermined angle described above may be smaller than the angle at which the upper housing assembly 24 opens with respect to the lower housing assembly 21 when an edge of the slot 247 abuts against an outer wall of the lower housing assembly 21. It can be understood that the slot 247 can facilitate the rotation of the upper housing assembly 24 with respect to the lower housing assembly 21. The rotation of the upper housing assembly 24 with respect to the lower housing assembly 21 may also be limited when the edge of the slot 247 abuts against the outer wall of the lower housing assembly 21. However, due to materials and structures of the upper housing assembly 24 and the lower housing assembly 21, the abutting and limiting manner of the edge of the slot requires a relatively high structural strength of the housing of the charging case 20, which raises the costs of the process and material. By adding the position limiting mechanism, the angle at which the upper housing assembly 24 opens with respect to the lower housing assembly 21 can be limited, which can increase a position limiting strength, while reducing the requirement for the structural strength of the charging case and the costs.

In some embodiments, when the edge of the slot 247 abuts against the outer wall of the lower housing assembly 21, pressure may be applied on the outer wall of the lower housing assembly 21, so that the outer wall of the lower housing assembly 21 is easily indented, which affects the appearance. In addition, an abutment region of the lower housing assembly 21 where the indentation of the outer wall of the lower housing assembly 21 occurs may have a stress concentration when subjected to a force, and a strength of the lower housing assembly 21 may be affected. In order to avoid the stress concentration in the abutment region, the predetermined angle may be disposed to be smaller than the angle at which the upper housing assembly 24 opens with respect to the lower housing assembly 21 when the edge of the slot 247 abuts against the outer wall of the lower housing assembly 21. Therefore, when the upper housing assembly 24 is opened to the predetermined angle with respect to the lower housing assembly 21, the further rotation may be limited by the position limiting mechanism, avoiding the abutment of the edge of the slot 247 with the outer wall of the lower housing assembly 21. For example, the angle at which the upper housing assembly 24 opens with respect to the lower housing assembly 21 when the edge of the slot 247 abuts against the outer wall of the lower housing assembly 21 may be 120 degrees, and the predetermined angle may be 110 degrees. When the angle at which the upper housing assembly 24 opens with respect to the lower housing assembly 21 is 110 degrees, the position limiting mechanism may limit the further rotation of the upper housing assembly 24, thereby avoiding the abutment of the edge of the slot 247 with the outer wall of the lower housing assembly 21.

In some embodiments, the shaft mechanism 25 may include a first fixing seat 256 mounted to the lower housing assembly 21 and a second fixing seat 257 mounted to the upper housing assembly 24. The shaft 253 may be threaded through the first fixing seat 256 and the second fixing seat 257. By disposing the first fixing seat 256 and the second fixing seat 257, the strength of the shaft mechanism 25 can be increased. The position limiting mechanism may include the first position limiting member 271 connected to the first fixing seat 256 and the second position limiting member 272 connected to the second fixing seat 257. The first position limiting member 271 and the second position limiting member 272 may abut against each other when the upper housing assembly 24 is rotated to the predetermined angle with respect to the lower housing assembly 21, thereby limiting the further rotation of the upper housing assembly 24 with respect to the lower housing assembly 21.

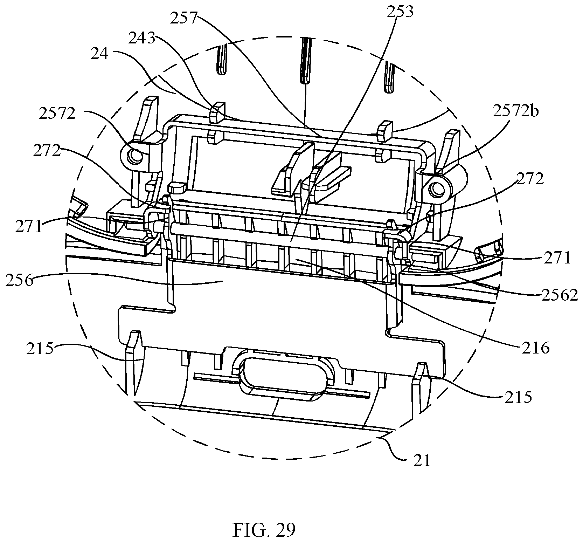

In some embodiments, in combination with FIGs. 28 and 29, an extension direction of the first position limiting member 271 and an extension direction of the second position limiting member 272 may be perpendicular to each other. With such arrangement, the success rate of the first position limiting member 271 and the second position limiting member 272 abutting against each other can be increased. In some embodiments, the extension direction of one of the first position limiting member 271 or the second position limiting member 272 may be disposed along an axial direction of the shaft 253, and the extension direction of the other may be disposed along a radial direction of the shaft 253. In this way, a relative rotation between the first position limiting member 271 and the second position limiting member 272 can match with the rotations of the upper housing assembly 24 and the lower housing assembly 21 with respect to the shaft 253, so that the first position limiting member 271 and the second position limiting member 272 can limit the rotations of the upper housing assembly 24 and the lower housing assembly 21 with respect to the shaft 253.

In some embodiments, the first position limiting member 271 and the first fixing seat 256 may be an integrally molded metal part. Alternatively, the second position limiting member 272 and the second fixing seat 257 may be an integrally molded metal part. Alternatively, the first position limiting member 271 and the first fixing seat 256 may be an integrally molded metal part, and the second position limiting member 272 and the second position limiting member 257 may be an integrally molded metal part. By disposing the first fixing seat 256 and the second fixing seat 257 as a metal part, volumes of the first fixing seat 256 and the second fixing seat 257 can be relatively small while the strength of the first fixing seat 256 and the second fixing seat 257 can be sufficient, which can reduce the occupation of space in the charging case 20, thereby reducing the dimension of the charging case 20. Since the first position limiting member 271 is integrally molded with the first fixing seat 256 or the second position limiting member 272 is integrally molded with the second fixing seat 257, when the first position-limiting member 271 and the second position-limiting member 272 resist the force, torques of the members may be transmitted to the charging case 20 through the first fixing seat 256 or the second fixing seat 257. A connection structure of the first fixing seat 256 and the second fixing seat 257 with the charging case 20 may have a high connection strength. Therefore, the first position limiting member 271 being integrally molded with the first fixing seat 256 or the second position limiting member 272 being integrally molded with the second fixing seat 257 can increase the stability when the first position limiting member 271 and the second position limiting member 272 are abutting.

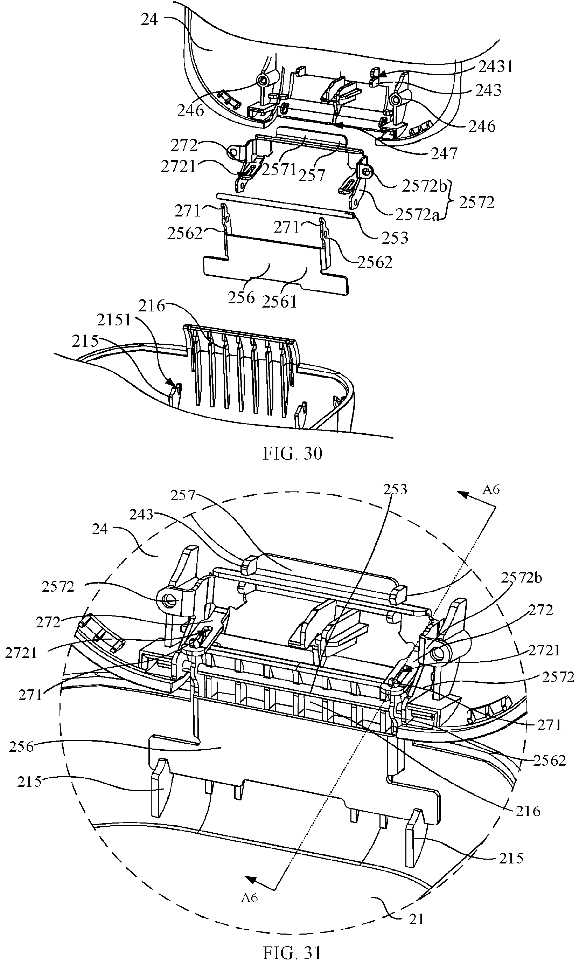

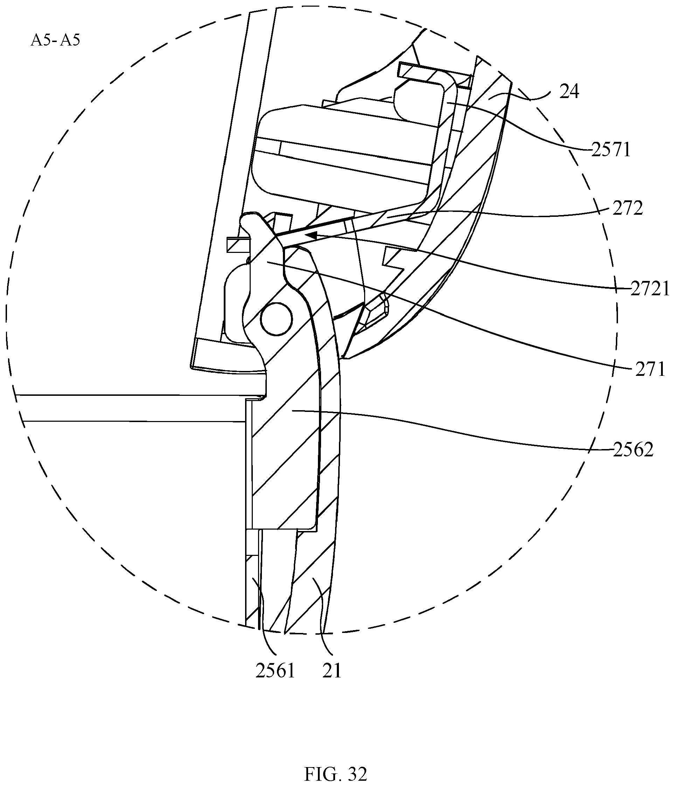

In some embodiments, in combination with FIGs. 30-32, one of the first position limiting member 271 or the second position limiting member 272 may be disposed with a position limiting groove 2721, and another of the first position limiting member 271 or the second position limiting member 272 may cooperate with the position limiting groove 2721 when the charging case 20 is opened to limit the rotation of the upper housing assembly 24 with respect to the lower housing assembly 21. In some embodiments, the second position limiting member 272 may be disposed with the position limiting groove 2721, and the first position limiting member 271 may extend into the position limiting groove 2721 after the upper housing assembly 24 is opened to a first angle with respect to the lower housing assembly 21. The first angle may be smaller than the predetermined angle. When the upper housing assembly 24 is rotated to the predetermined angle with respect to the lower housing assembly 21, the first position limiting member 271 may abut against a wall of the position limiting groove 2721. Through the abutment cooperation between the first position limiting member 271 and the position limiting groove 2721, when the position limiting mechanism is subjected to a force in another direction, the wall of the position limiting groove 2721 can also limit the first position limiting member 271, thereby increasing the strength and reliability of the position limiting mechanism. When the charging case 20 is rotated from the open state to the closed state, the first position limiting member 271 may be separated from the position limiting groove 2721, thereby reducing the charging case 20 from being affected by the position limiting mechanism when the charging case 20 is closed. In some other embodiments, the first position limiting member 271 may be disposed with the position limiting groove 2721, and the second position limiting member 272 may extend into the position limiting groove 2721 after the upper housing assembly 24 is opened to the first angle with respect to the lower housing assembly 21.

In some embodiments, with the charging case 20 is in the open state, an included angle between the extension direction of the first position limiting member 271 and the extension direction of the second position limiting member 272 may be an obtuse angle. With such arrangement, when a length of the position limiting groove 2721 is relatively short, the first position limiting member 271 or the second position limiting member 272 can smoothly extend into and separate from the position limiting groove 2721. If the included angle between the extension direction of the first position limiting member 271 and the extension direction of the second position limiting member 272 is a right angle or an acute angle, the length of the position limiting groove 2721 needs to be relatively long to ensure that the first position limiting member 271 or the second position limiting member 272 can smoothly separate from the position limiting groove 2721, which increases an overall volume of the shaft mechanism 25, thereby occupying more space in the charging case 20.

In some embodiments, the connection and fit of the lower housing assembly 21, the position limiting mechanism, and the shaft mechanism 25 may be found in the following exemplary descriptions. The lower housing assembly 21 may include two first support parts 215 spaced apart along an axial direction of the shaft 253 and a first reinforcement part 216 disposed between the two first support parts 215. The first reinforcement part 216 refers to a reinforcement rib structure or a structure with a thickness that is thicker than other side walls of the charging case 20. The first reinforcement part 216 may be used to enhance the structural strength of the charging case 20, so that the charging case 20 may stably carry the shaft mechanism 25 and the position limiting mechanism. Each of the two first support parts 215 may be disposed with a first inset groove 2151. The first fixing seat 256 may include a first plate-like body 2561. A lower edge of the first plate-like body 2561 towards the lower housing assembly 21 may be inserted the first inset grooves 2151 of the two first support parts 215, and the first plate-like body 2561 may abut against the first reinforcement part 216. The first reinforcement part 216 can increase the structural strength of the lower housing assembly 21 itself, and the strength of the cooperation between the shaft mechanism 25 and the lower housing assembly 21 can be increased through the cooperation between the first fixing seat 256 and the first reinforcement part 216, so that the shaft mechanism 25 can be easily assembled with the lower housing assembly 21. In some embodiments, the lower housing assembly 21 may include the lower housing body 213 and the lower housing liner 214. The first support part 215, the first reinforcement part 216, and the first fixing seat 256 may be disposed between the lower housing body 213 and the lower housing liner 214.

In some embodiments, the first fixing seat 256 may further include two first extension parts 2562. The two first extension parts 2562 may extend from the first plate-like body 2561 in a direction toward the first reinforcement part 216. The first reinforcement part 216 may be disposed between the two first extension parts 2562. The first extension parts 2562 may protrude from an upper edge of the first plate-like body 2561 and disposed with first shaft holes for the shaft 253 to pass through. The first position limiting member 271 may be disposed at an end of the first extension part 2562 away from the first plate-like body 2561. With such arrangement, the stability of the cooperation between the first fixing seat 256 and the first reinforcement part 216 can be increased, and the structural strength of the first position limiting member 271 and the first fixing seat 256 can be increased to improve the stability of the charging case 20 in the open state.

In some embodiments, the connection and fit of the upper housing assembly 24, the position limiting mechanism, and the shaft mechanism 25 may be found in the following exemplary descriptions. The upper housing assembly 24 may include two second support parts 243 spaced apart along an axial direction of the shaft 253. The two second support parts 243 may be disposed with a second inset groove 2431. The second fixing seat 257 may include a second plate-like body 2571 and two second extension parts 2572. An upper edge of the second plate-like body 2571 toward the upper housing assembly 24 may be inserted into the second inset groove 2431 of the two second support parts 243. The second extension parts 2572 may be connected to the second plate-like body 2571 and extend toward the slot 247. The second extension parts 2572 may be disposed with second shaft holes for the shaft 253 to pass through. The first position limiting member 271 may be disposed on the second extension parts 2572. With such arrangement, the strength of the cooperation between the shaft mechanism 25 and the upper housing assembly 24 can be increased, and the shaft mechanism 25 can be easily assembled with the upper housing assembly 24.

In some embodiments, the upper housing assembly 24 may include second reinforcement parts 246 disposed at two ends of the slot 247. Each of the second extension parts 2572 may include a first sub-extension part 2572a disposed between the two second reinforcement parts 246 and a second sub-extension part 2572b connected to the first sub-extension part 2572a and extending along an axial direction of the shaft 253. The second sub-extension part 2572b may be further connected to the second reinforcement part 246. For example, the second sub-extension part 2572b may cooperate with the second reinforcement part 246 through a fastening member, such as a screw, a rivet, etc., so as to increase the strength and stability of the cooperation between the first fixing seat 256 and the upper housing assembly 24.

In some embodiments, in combination with FIG. 22, the charging case 20 may include a magnetic guide member 261 disposed within the lower housing assembly 21, and a permanent magnet 262 disposed within the upper housing assembly 24. For example, the magnetic guide member 261 may be fixed to an inner side of the lower housing liner 214 away from the upper housing assembly 24, and the permanent magnet 262 may be fixed to an inner side of the upper housing liner 242 away from the lower housing assembly 21, which reduces a spacing between the magnetic guide member 261 and the permanent magnet 262 in the charging case 20 after the charging case 20 is closed. The main control circuit board 221 may be disposed with the Hall sensor 223. That is, the Hall sensor 223 may be directly fixed to the main control circuit board 221, and the Hall sensor 223 may be disposed adjacent to the magnetic guide member 261. In this way, during a process of switching between the open state and the closed state of the charging case 20, the permanent magnet 262 may magnetize the magnetic guide member 261 to different degrees, and the Hall sensor 223 may sense a magnetic field of the magnetic guide member 261 to detect the open state or the closed state. In other words, in the closed state, the magnetic guide member 261 can cause the magnetic field generated by the permanent magnet 262 to converge more towards the Hall sensor 223, thereby increasing the reliability of the detection by the Hall sensor 223 and reducing a dimension of the permanent magnet 262.

Compared to a related technique that the Hall sensor 223 is fixed to the inner side of the lower housing liner 214 and is connected to the main control circuit board 221 through wires, the Hall sensor 223 can be directly fixed to the main control circuit board 221 in the present disclosure, thereby simplifying the alignment of the charging case 20.

In some embodiments, in combination with FIGs. 22 and 23, an orthographic projection of each profiling groove 211 and an orthographic projection of the magnetic guide member 261 on the main control circuit board 221 may be staggered to allow the magnetic guide member 261 to be as close as possible to the permanent magnet 262 after the charging case 20 is closed. For example, viewed directly above the charging case 20, the magnetic guide member 261 may be located in any one of a first position (e.g., as shown by a dashed box P1 in FIG. 23), a second position (e.g., as shown by a dashed box P2 in FIG. 23), or a third position (e.g., as shown by a dashed box P3 in FIG. 23) at a periphery of the two profiling grooves 211.

In some embodiments, in combination with FIG. 23, viewed directly above the charging case 20, the two profiling grooves 211 may be mirror symmetrical about a symmetry axis (e.g., as shown by a dotted line SA in FIG. 23) to allow the two earphones 10 to be neatly placed and accommodated within the charging case 20. The magnetic guide member 261 may be disposed on the symmetry axis SA and away from the shaft mechanism 25. In this way, the amount of difference in the magnetic field of the magnetic guide member 261 in the open state and the closed state that is sensed by the Hall sensor 223, respectively, can be increased, so as to increase the reliability of the detection of the Hall sensor 223. It should be noted that the symmetry axis SA may be parallel to the line section OP1 OP2, and the symmetry axis SA may also coincide with the line section OP1 OP2.

In some embodiments, in combination with FIG. 22, orthographic projections of the magnetic guide member 261 and the Hall sensor 223 on the main control circuit board 221 may be at least partially overlapped, which reduces a magnetic gap between the magnetic guide member 261 and the Hall sensor 223, thereby allowing more of the magnetic field generated by the permanent magnet 262 to converge toward the Hall sensor 223, especially in the closed state. The Hall sensor 223 may be disposed on a side of the main control circuit board 221 toward the magnetic guide member 261 to reduce the magnetic gap between the magnetic guide member 261 and the Hall sensor 223. The Hall sensor 223 and the magnetic guide member 261 may be spaced apart in a normal direction of the main control circuit board 221 to reduce the risk of collision between the magnetic guide member 261 and the Hall sensor 223, especially under extreme working conditions such as when the charging case 20 is dropped, etc.

In some embodiments, in conjunction with FIG. 22, in the closed state, the orthogonal projections of the permanent magnet 262 and the magnetic guide member 261 on the main control circuit board 221 may at least partially overlap, which is conducive to reducing the magnetic gap between the permanent magnet 262 and the magnetic guide member 261, and thus allowing the magnetic field generated by the permanent magnet 262 to be more converged towards the Hall sensor 223, particularly in the closed state.

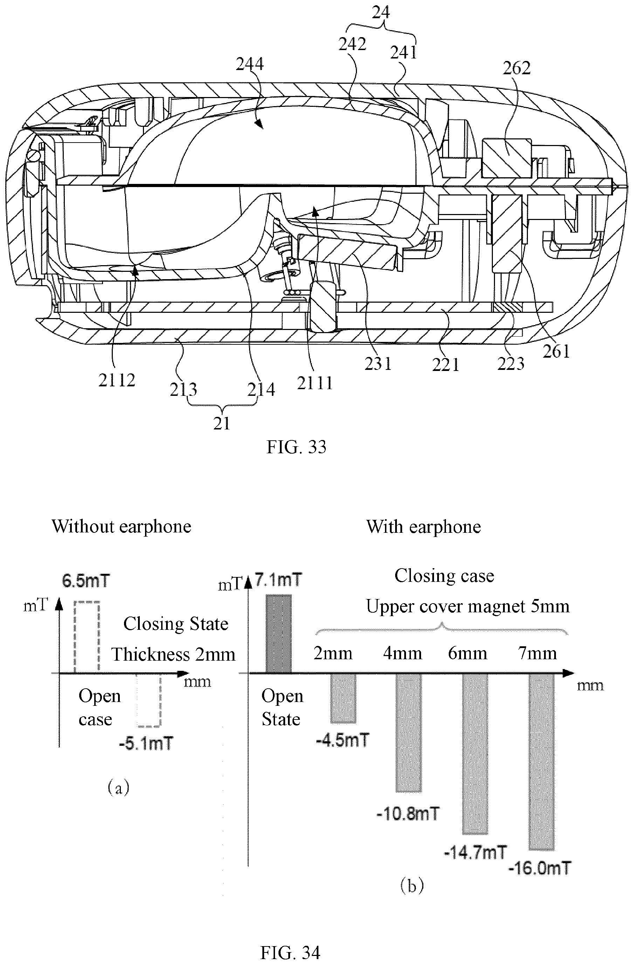

In some embodiments, in combination with FIG. 33, FIG. 33 is a schematic diagram illustrating a sectional structure of the charging case 20 when the charging case 20 is closed according to some embodiments of the present disclosure. The charging case 20 may include the lower housing assembly 21, the upper housing assembly 24, the main control circuit board 221 and the magnetic suction structure disposed within the lower housing assembly 21, and an upper housing magnet disposed within the upper housing assembly 24. The upper housing magnet may be the permanent magnet 262. The Hall sensor 223 may be disposed in the lower housing assembly 21, and the Hall sensor 223 may be electrically connected to the main control circuit board 221. The magnetic suction structure is configured to place the earphones 10 in a magnetic suction manner, that is, the magnetic structure may be used to magnetically maintain the placement of the earphones 10 within the charging case 20. On this basis, during a process of closing the upper housing assembly 24, the Hall sensor 223 can further detect the closing of the upper housing assembly 24 by detecting the proximity of the upper housing magnet. A type of the Hall sensor 223 may include an S-pole-triggered unipolar Hall switch or an N-pole-triggered unipolar Hall switch, which is not limited herein. The Hall sensor 223 being the S-pole-triggered unipolar Hall switch may be taken as an example in the latter present disclosure for illustration. When the Hall sensor 223 is the N-pole-triggered unipolar Hall switch, the principle is the same, which will not be repeated. It should be understood that those skilled in the art can adjust relevant magnetic pole characteristics when the Hall sensor 223 is the N-pole-trigger unipolar Hall switch according to the relevant principles later described when the Hall sensor 223 is the S-pole-triggered unipolar Hall switch, thereby achieving the same or similar technical effectiveness. Therefore, the technical solution when the Hall sensor 223 is the N-pole-triggered unipolar Hall switch is also included in the scope of the present disclosure.

It should be noted that the Hall sensor 223 has two output states, which can output a high level and a low level, respectively. The Hall sensor 223 may have an inductive surface. A component of the magnetic field at the Hall sensor 223 along a direction that is perpendicular to the inductive surface of the Hall sensor 223 and is in a positive direction toward the inductive surface may act on carriers of the Hall sensor 223, which causes the carriers to deviate, thereby changing the output state of the Hall sensor 223. The specific principle at least refers to the prior art, which will not be repeated. Taking the Hall sensor 223 being the N-pole-triggered unipolar Hall switch as an example, during a process that an S-pole of the magnet is gradually approached to the Hall sensor 223, the component of the magnetic field at the Hall sensor 223 generated by the magnet in a direction perpendicular to a positive direction of the inductive surface of the Hall sensor 223 may be gradually increased. When the component exceeds a certain threshold value (e.g., when a strength of the magnetic field is 2 millitesla (mT) or 3 mT), the Hall sensor 223 may be transformed from the high level to the low level.

In related techniques, the charging case 20 may also include an auxiliary magnet that cooperates with the earphone 10 to form a magnetic suction structure or plays an auxiliary role in the closing of the charging case 20. In addition to the magnetic field of the upper housing magnet when the upper housing magnet is close to act on the Hall sensor, magnetic fields of components (e.g., the magnetic suction structure, the auxiliary magnet, etc.) within the charging case 20 may also have some effect on the Hall sensor. For example, the magnetic suction structure disposed within the lower housing assembly 21 may affect the Hall sensor. However, since a size of the magnetic suction structure is relatively small, the effect on the Hall sensor 223 can be negligible. In other words, a strength of the magnetic field of the magnetic suction structure acting on the Hall sensor 223 may not reach a threshold value for changing the output state of the Hall sensor 223 (i.e., the presence or absence of the magnetic suction structure does not change the output state of the Hall sensor 223). In this way, the reason for the change in the state of the Hall sensor 223 is mainly due to the proximity of the upper housing magnet. Taking the Hall sensor 223 being the N-pole-triggered unipolar Hall switch as an example, when a volume of the magnetic suction structure is relatively small, the output state of the Hall sensor 223 does not change due to the magnetic field of the magnetic suction structure. When the upper housing assembly 24 is closed, the S pole of the upper housing magnet may be close to the Hall sensor 223, and the Hall sensor 223 may be subjected to the magnetic field of the upper housing magnet. When the strength of the magnetic field reaches the threshold value for changing the output state, the output state may be changed. For example, the change of the output state of the Hall sensor 223 may be a change from the high level to the low level, and a circuit in the main control circuit board may be designed to determine that the charging case 20 is closed when the circuit detects the output of the Hall sensor 223 is the low level.

In some embodiments, due to a weak suction force on the earphone 10 generated by the magnetic suction structure with a relatively small volume, which is not conducive to the placement of the earphones 10 inside the charging case 20, the suction force on the earphone 10 needs to be enhanced by increasing the volume of the magnetic suction structure, so as to improve the stability of the placement of the earphones 10. For example, a diameter of the first magnetic suction structure may be a range within 8 to15 mm and a thickness of the first magnetic suction structure may be a range within 2 to 4 mm. However, the increase in the size of the magnetic suction structure may result in that the effect on the Hall sensor 223 from the magnetic field generated by the magnetic suction structure can not be ignored. That is, the strength of the magnetic field of the magnetic suction structure at the Hall sensor 223 may have reached the threshold value where the Hall sensor 223 changes the output state, resulting in that the magnetic field of the magnetic suction structure can change the output state of the Hall sensor 223 when the charging case 20 is not closed. For example, in the case where the upper housing magnet described above is disposed with the S-pole facing downward, if the component of the magnetic field of the magnetic suction structure in the direction that is perpendicular to the inductive surface of the Hall sensor 223 is oriented to the positive direction of the inductive surface and exceeds the threshold value for changing the output state of the Hall sensor, when the upper housing magnet approaches the Hall sensor 223, since a direction of the component corresponding to the upper housing magnet at the Hall sensor 223 in the direction that is perpendicular to the inductive surface is the same as a direction of the component corresponding to the magnetic suction structure at the Hall sensor 223 in the direction that is perpendicular to the inductive surface, the magnetic field at the Hall sensor 223 may be enhanced, but the output state of the Hall sensor 223 may fail to be changed, resulting in a detection failure of the opening and closing the charging case 20. In order to improve the above technical problem, the present disclosure may provide the following embodiments.

In some embodiments, a cooperation relationship between the magnetic suction structure, the upper housing magnet, and the Hall sensor 223 may be disposed such that when the upper housing assembly 24 is in the open state with respect to the lower housing assembly 21, the Hall sensor 223 is in a first state under an action of the magnetic field of the magnetic suction structure, and when the upper housing assembly 24 is in the closed state with respect to the lower housing assembly 21, the upper housing magnet counteracts the action of the magnetic field of the magnetic suction structure on the Hall sensor 223, and the Hall sensor 223 is switched into a second state different from the first state. The first state refers to one of states in which the Hall sensor 223 outputs the high level or the Hall sensor 223 outputs the low level, and the second state refers to another state different from the first state in which the Hall sensor 223 outputs the high level or the Hall sensor 223 outputs the low level. In other words, by disposing the cooperation relationship between the magnetic suction structure, the upper housing magnet, and the Hall sensor 223, the Hall sensor 223 can change the output state under the action of the upper housing magnet when the charging case 20 is closed.

The above embodiments are described for illustration by taking the S-pole-triggered unipolar Hall switch as an example. When the magnetic field of the magnetic suction structure at the Hall sensor 223 reaches the threshold value for the Hall sensor 223 to change the output state (compared to the state of the Hall sensor 223 completely unperturbed by the magnetic field, i.e., the presence or absence of the magnetic suction structure affects the output state of the Hall sensor 223), e.g., the magnetic field is larger than 3 mT, the Hall sensor 223 may be in the first state and output the low level. In this case, in order to ensure the validity of the closure detection, when the upper housing assembly 24 is closed, the upper housing magnet is close to the Hall sensor 223, and it is necessary to change the magnetic field at the Hall sensor 223 to cause the Hall sensor 223 to be in the second state (i.e., to output the high level). In this way, by disposing the circuit in the main control circuit board to determine that the charging case 20 is closed when the circuit detects that the Hall sensor 223 outputs the high level, the closure detection can be achieved. For instance, when the upper housing assembly 24 is in the closed state with respect to the lower housing assembly 21, magnetic poles of the magnetic suction structure toward the upper housing assembly 24 may be opposite polarity to magnetic poles of the upper housing magnet toward the lower housing assembly 21. For example, with the S pole of the magnetic suction structure facing the upper housing assembly 24, and an included angle between the inductive surface of the Hall sensor 223 and a line connecting the magnetic suction structure and the Hall sensor 223 being smaller than 45 degrees, a component of the magnetic field of the magnetic suction structure perpendicular to the inductive surface of the Hall sensor 223 facing the positive direction of the inductive surface can trigger the Hall sensor 223 to the first state (i.e., the low level). The N-pole of the upper housing magnet may be disposed toward the lower housing assembly 21 when the charging case 20 is closed. With such arrangement, when the charging case 20 is closed, the component of the upper housing magnet perpendicular to the inductive surface at the Hall sensor 223 may be in a negative direction of the inductive surface. In other words, when the charging case 20 is closed, magnetic fields of the upper housing magnet and the magnetic suction structure at the Hall sensor 223 may cancel with each other, so that the component of a composite magnetic field perpendicular to the inductive surface of the magnetic suction structure and the upper housing magnet at the Hall sensor 223 is smaller than the triggering threshold value of the Hall sensor 223 (even if the component of the composite magnetic field perpendicular to the inductive surface is facing the negative direction of the inductive surface), thereby triggering the Hall sensor 223 to the second state (i.e., a state of the high level). The main control circuit board 221 can detect whether the charging case 20 is closed or not by detecting the output state of the Hall sensor 223. Through the above manner, the closure detection can be performed on the charging case 20 even when the Hall sensor 223 is interfered by the magnetic suction structure.

In some embodiments, a magnetic field distribution of the upper housing magnet at the Hall sensor 223 may be adjusted to cooperate with a magnetic field distribution of the magnetic suction structure at the Hall sensor 223, so that a direction of a total magnetic field acting on the Hall sensor 223 may be changed when the upper housing magnet is close to the Hall sensor 223. Differences in the magnetic field distribution of the upper housing magnet at the Hall sensor 223 may be represented by differences in physical parameters of the upper housing magnet.

In some embodiments, a diameter of the upper housing magnet may be within a range of 4 to 6 mm, and a thickness of the upper housing magnet may be within a range of 1 to 8 mm. For instance, referring to FIG. 34, FIG. 34 is a schematic diagram illustrating an exemplary simulation result of a magnetic field at the Hall sensor 223 for upper cover magnets with different thicknesses according to some embodiments of the present disclosure. FIG. 34(a) is a schematic diagram illustrating exemplary simulation results of the magnetic field at the Hall sensor 223 when the charging case 20 in the open state and the closed state, respectively, and the earphones 10 are not accommodated. FIG. 34(b) is a schematic diagram illustrating exemplary simulation results of the magnetic field at the Hall sensor 223 when the charging case 20 is in the open state and the closed state, respectively, and the earphones 10 are accommodated. The positive and negative of values in FIG. 34 represent positive and negative directions of the total magnetic field near the Hall sensor with respective to an inductive surface, respectively. For example, in the case where the magnetic suction structure uses a permanent magnet with a diameter of 10 mm and a thickness of 2.5 mm, and no earphone 10 is placed in the charging case 20, the magnetic suction structure generates a magnetic field at the Hall sensor 223 in a direction toward the positive direction of the inductive surface of the Hall sensor 223 and a magnetic field strength of 6.5 mT. At this time, the Hall sensor 223 is in a low level state under the influence of the magnetic field of the magnetic suction structure. After the upper housing assembly 24 is closed, the upper housing magnet cancels the magnetic field generated by the magnetic attraction structure at the Hall sensor 223 and flips the magnetic field, so that the direction of the magnetic field at the Hall sensor 223 faces the negative direction of the inductive surface and the magnetic field strength becomes 5.1 mT. At this time, the Hall sensor 223 is in a high level state. When dimensions of the upper cover magnet are different, effects on the Hall sensor 223 are also different. For example, when the diameter of the upper housing magnet is 5 mm, with the increase in the thickness of the upper housing magnet, the magnetic field strength of the Hall sensor 223 after flip is gradually increased.

In some embodiments, the earphone 10 may be further disposed with the first magnetic suction member that cooperates with the magnetic suction structure. The first magnetic suction member may be disposed such that when the earphone 10 is accommodated within the charging case 20 and the upper housing assembly 24 is in an open state, the Hall sensor 223 is in the first state. The first magnetic suction member may be disposed such that when the earphone 10 is accommodated within the charging case 20 and the upper housing assembly 24 is in the closed state, the Hall sensor 223 is in the second state. When the earphone 10 is placed in the charging case 20, the first magnetic suction member disposed in the earphone 10 may also have an effect on the magnetic field at the Hall sensor 223 that is distinct from that of the magnetic suction structure. The component at the Hall sensor 223 perpendicular to the inductive surface may be oriented in the positive direction of the inductive surface or in the negative direction of the inductive surface. However, the first magnetic suction member may be disposed to have an effect only on a magnitude of the magnetic field perpendicular to the inductive surface at the Hall sensor 223, and not on a direction of the total magnetic field there. In other words, the placement of the earphone 10 may have no effect on the output state of the Hall sensor 223. For example, FIG. 34(b) is a schematic diagram illustrating exemplary simulation results in the case where the earphone 10 is placed inside the charging case 20. The schematic diagram was made in the case that the magnetic suction structure uses a permanent magnet with a diameter of 10 mm and a thickness of 2.5 mm, and the upper housing magnet uses a permanent magnet with a diameter of 5 mm and a thickness of 2 mm. When the earphone 10 is placed inside the charging case 20, the magnetic field at the Hall sensor 223 may be a magnetic field with the magnetic field direction facing the positive direction of the inductive surface and with a magnetic field strength of 7.1 mT. At this time, the Hall sensor 223 outputs the low level. After the upper housing assembly 24 is closed, the upper housing magnet flips the magnetic field at the Hall sensor 223 to a magnetic field with the magnetic field direction facing the negative direction of the inductive surface and with a magnetic field strength of 4.5 mT. At this time, the Hall sensor 223 outputs the high level.

In some embodiments, the earphone 10 may further include the second magnetic suction member that is independent of the first magnetic suction member. The magnetic suction structure may include the second magnetic suction structure that magnetically cooperates with the second magnetic suction member. The first magnetic suction structure 231 and the first magnetic suction member within the earphone 10 may form the first magnetic suction matching pair, and the second magnetic suction structure 232 and the second magnetic suction member within the earphone 10 may form the second magnetic suction matching pair. The first magnetic suction matching pair and the second magnetic suction matching pair may cause the electrode terminals 222 and the electrode terminals 151 in one-to-one contact. In this way, since the electrode terminal 222 and the electrode terminal 151 are located between the first magnetic suction matching pair and the second magnetic suction matching pair after being paired up, the contact between the earphone 10 and the charging case 20 can be improved. Volumes of the second magnetic suction member and the second magnetic suction structure may be smaller than volumes of the first magnetic suction member and the first magnetic suction structure 231, and a distance between the Hall sensor 223 and the first magnetic suction structure 231 may be smaller than a distance between the Hall sensor 223 and the second magnetic suction structure. With such arrangement, the influence of the second magnetic suction structure on the magnetic field at the Hall sensor 223 can be reduced, thereby reducing the interference on the output state of the Hall sensor 223.

In some embodiments, the magnetic guide member 261 may also be disposed within the lower housing assembly 21. The magnetic guide member 261 can change the magnetic field distribution of the upper housing magnet so as to be able to converge the magnetic field of the upper housing magnet to increase the effect of the upper housing magnet on the Hall sensor 223. When the upper housing assembly 24 is closed, as the upper housing magnet gradually approaches to the magnetic guide member 261, the magnetic field of the upper housing magnet may magnetize the magnetic guide member 261, which can affect the magnetic field distribution at the Hall sensor 223. Furthermore, the magnetic field generated by the magnetic guide member 261 may counteract the magnetic field effect of the magnetic suction structure on the Hall sensor 223, which causes the Hall sensor 223 to switch to a second state different from the first state. During a process of switching the charging case 20 between the open state and the closed state, the upper housing magnet may magnetize the magnetic guide member 261 to different degrees, and the Hall sensor 223 may sense the magnetic field of the magnetic guide member 261 to detect the open state or the closed state. In other words, in the closed state, the magnetic guide member 261 may cause the magnetic field generated by the upper housing magnet to converge more towards the Hall sensor 223, thereby increasing the reliability of the detection by the Hall sensor 223 and reducing the dimension of the upper housing magnet. Through the above manner, compared to the related technique that the Hall sensor 223 is fixed to the inner side of the lower housing liner 214 and is connected to the main control circuit board 221 through wires, the Hall sensor 223 can be directly fixed to the main control circuit board 221 in the present disclosure, thereby simplifying the alignment of the charging case 20.

In some embodiments, by disposing a distance between the Hall sensor 223 and the magnetic guide member 261 to be smaller than a distance between the Hall sensor 223 and the magnetic suction structure, the magnetic field converged by the magnetic guide member 261 can be closer to the Hall sensor 223. At the same time, the magnetic field of the magnetic suction structure that is converged by the magnetic guide member 261 is limited, so as to strengthen the effect of the magnetic field converged by the magnetic guide member 261 on the Hall sensor 223, and reduce the magnetic field influence of the magnetic suction structure, which is conducive to the flip of the magnetic field at the Hall sensor 223.

In some embodiments, in the thickness direction of the charging case 20, when the upper housing assembly 24 is in the closed state, orthographic projections of the upper housing magnet and the magnetic guide member 261 may be disposed to at least partially overlap in the thickness direction. In this way, a distance between the upper housing magnet and the magnetic guide member 261 in the first reference direction or the second reference direction can be adjusted. By shortening the distance between the upper housing magnet and the magnetic guide member 261 in the first reference direction or the second reference direction, the magnetic gap between the upper housing magnet and the magnetic guide member 261 can be reduced, so as to cause the magnetic field generated by the permanent magnet 262 to converge more towards the Hall sensor 223, especially in the closed state, so that the upper housing magnet with a relatively small volume also can generate a sufficiently strong magnetic field at the Hall sensor 223. In some embodiments, when the upper housing assembly 24 is in the closed state, centroids of the orthographic projections of the upper housing magnet and the magnetic guide member 261 in the thickness direction may be disposed to coincide.

In some embodiments, when the upper housing assembly 24 is in the closed state, by disposing a relative position between the magnetic guide member 261 and the upper housing magnet mounted within the charging case 20, the distance between the upper housing magnet and the magnetic guide member 261 in the thickness direction can be adjusted. By shortening the distance between the upper housing magnet and the magnetic guide member 261 in the thickness direction, the magnetic gap between the upper housing magnet and the magnetic guide member 261 can be decreased, so as to enhance the ability of the magnetic guide member 261 to converge the magnetic field of the upper housing magnet, which causes the magnetic field generated by the permanent magnet 262 to converge more towards the Hall sensor 223. With such arrangement, when the charging case 20 is closed, the upper housing magnet may have a relatively small volume under the premise of ensuring that the upper housing magnet is able to change the output state of the Hall sensor 223, thereby reducing the volume of the charging case 20. In some embodiments, when the upper housing assembly 24 is in the closed state, a distance between surfaces of the magnetic guide member 261 and the upper housing magnet that are close to each other may be disposed to be smaller than or equal to 5 mm. With such arrangement, a certain gap can be between the upper housing magnet and the magnetic guide member, so that a side wall of the upper housing assembly and a side wall of the lower housing assembly (i.e., the upper housing liner 242 and the lower housing liner 214) can space and cover the upper housing magnet and the magnetic guide member 261, so that the upper housing magnet and the magnetic guide member 261 can not be exposed between the upper housing assembly 24 and the lower housing assembly 21, and no additional holes need to be opened on the upper housing liner 242 and the lower housing liner 214, which increases the structural strength of the charging case 20 and improves the appearance of the charging case 20. In some other embodiments, when the upper housing assembly 24 is in the closed state, an end of the magnetic guide member 261 away from the Hall sensor 223 may be disposed to directly abut against a bottom surface of the upper housing magnet, so as to increase the magnetization of the upper housing magnet to the magnetic guide member 261. Therefore, the magnetic field of the upper housing magnet may be converged more towards the Hall sensor 223.

Along the thickness direction of the charging case 20, the lower housing assembly 21 may be disposed with the profiling grooves 211 for accommodating the earphones 10, respectively. The orthographic projections of the profiling grooves 211 on the main control circuit board 221 may be staggered from the orthographic projections of the Hall sensors 223 and the upper housing magnet on the main control circuit board 221. With such arrangement, the Hall sensor 223 can be disposed outside the profiling groove 211, which enables the Hall sensor 223 to be closer to the upper housing magnet, and is conducive for the upper housing magnet to change the output state of the Hall sensor 223.

In some embodiments, the auxiliary magnet may also be disposed within the lower housing assembly 21. For example, the auxiliary magnet may be a magnet that assists the magnetic cooperation between the upper housing assembly 24 and the lower housing assembly 21. Alternatively, the auxiliary magnet may be a magnet that assists the cooperation between the earphone 10 and the profiling groove 211. The auxiliary magnet may be disposed while the Hall sensor 223 is in the first state when the upper housing assembly 24 is in the open state, and the Hall sensor 223 is in the second state when the upper housing assembly 24 is in the closed state. In other words, the auxiliary magnet may not have an effect on the output state of the Hall sensor 223 that is different from the effect of the magnetic suction structure on the output state of the Hall sensor 223.

The above descriptions are only a portion of embodiments of the present disclosure, and are not intended to limit the scope of the present disclosure. Any equivalent device or equivalent process transformed using the contents of the specification of the present disclosure and the accompanying drawings, or directly or indirectly applied in other related technical fields, are all included in the scope of the present disclosure.

## Claims

1. A charging case for an earphone, comprising a lower housing assembly, an upper housing assembly, a main control circuit board, a magnetic suction structure disposed within the lower housing assembly, an upper housing magnet disposed within the upper housing assembly, and a Hall sensor disposed within the lower housing assembly, wherein
the Hall sensor is electrically connected to the main control circuit board,
the magnetic suction structure is configured to place an earphone in a magnetic suction manner,
when the upper housing assembly is in an open state with respect to the lower housing assembly, the Hall sensor is in a first state under an action of a magnetic field of the magnetic suction structure, and
when the upper housing assembly is in a closed state with respect to the lower housing assembly, the upper housing magnet causes the Hall sensor to switch to a second state different from the first state.

2. The charging case according to claim 1, wherein
a first magnetic suction member cooperating with the magnetic suction structure is disposed on the earphone,
the first magnetic suction member is set so that the Hall sensor is in the first state when the earphone is placed in the charging case and the upper housing assembly is in the open state, and
the first magnetic suction member is set so that the Hall sensor is in the second state when the earphone is placed in the charging case and the upper housing assembly is in the closed state.

3. The charging case according to claim 2, wherein the first magnetic suction member is disposed to have an effect only on a magnitude of the magnetic field perpendicular to the inductive surface at the Hall sensor, and not on a direction of the magnetic field.

4. The charging case according to claim 2, wherein
the magnetic suction structure comprises a first magnetic suction structure that magnetically cooperates with the first magnetic suction member, and
the earphone further includes a second magnetic suction member independent of the first magnetic suction member,
the magnetic suction structure comprises a second magnetic suction structure magnetically cooperating with the second magnetic suction member,
volumes of the second magnetic suction member and the second magnetic suction structure are smaller than volumes of the first magnetic suction member and the first magnetic suction structure, and
a distance from the Hall sensor to the first magnetic suction structure is smaller than a distance from the Hall sensor to the second magnetic suction structure.

5. The charging case according to claim 4, wherein the first magnetic suction structure and the first magnetic suction member form a first magnetic suction matching pair, the second magnetic suction structure and the second magnetic suction member form a second magnetic suction matching pair, and the first magnetic suction matching pair and the second magnetic suction matching pair cause electrode terminals of the earphone and electrode terminals of the charging case in one-to-one contact.

6. The charging case according to claim 1, wherein
a diameter of the first magnetic suction structure is in a range of 8 mm to 15 mm and a thickness of the first magnetic suction structure is in a range of 2 mm to 4 mm; and
a diameter of the upper housing magnet is in a range of 4 mm to 6 mm and a thickness of the upper housing magnet is in a range of 1 mm to 8 mm.

7. The charging case according to claim 2, wherein when the upper housing assembly is in the closed state with respect to the lower housing assembly, a magnetic pole of the magnetic suction structure facing the upper housing assembly and a magnetic pole of the magnetic suction structure facing the lower housing assembly are opposite in polarity.

8. The charging case according to claim 1, wherein
a magnetic guide member is disposed in the lower housing assembly, and
when the upper housing assembly is in the closed state, a magnetic field of the upper housing magnet magnetizes the magnetic guide member.

9. The charging case according to claim 8, wherein during a process of switching the charging case between the open state and the closed state, the upper housing magnet magnetizes the magnetic guide member to different degrees, and the Hall sensor senses the magnetic field of the magnetic guide member to detect the open state or the closed state.

10. The charging case according to claim 8, wherein a distance from the Hall sensor to the magnetic guide member is smaller than a distance from the Hall sensor to the magnetic suction structure.

11. The charging case according to claim 8, wherein projections of the upper housing magnet and the magnetic guide member along a thickness direction of the charging case at least partially overlap when the upper housing assembly is in the closed state.

12. The charging case according to claim 11, wherein when the upper housing assembly is in the closed state, centroids of the projections of the upper housing magnet and the magnetic guide member along the thickness direction are disposed to coincide.

13. The charging case according to claim 8, wherein when the upper housing assembly is in the closed state, the distance between the upper housing magnet and the magnetic guide member in the thickness direction is adjusted by disposing a relative position between the magnetic guide member and the upper housing magnet mounted within the charging case.

14. The charging case according to claim 8, wherein when the upper housing assembly is in the closed state, a distance between surfaces of the upper housing magnet and the magnetic guide member that are close to each other is smaller than or equal to 5 mm.

15. The charging case according to claim 8, wherein when the upper housing assembly is in the closed state, an end of the magnetic guide member away from the Hall sensor is disposed to directly abut against a bottom surface of the upper housing magnet.

16. The charging case according to claim 1, wherein
the lower housing assembly is provided with a profiling recess for accommodating the earphone, and
along a thickness direction of the charging case, a projection of the profiling recess is staggered from a projection of the Hall sensor and a projection of the upper housing magnet.

17. The charging case according to claim 1, wherein the lower housing assembly is further provided with an auxiliary magnet, the auxiliary magnet being set so that the Hall sensor is in the first state when the upper housing assembly is in the open state and the Hall sensor is in the second state when the upper housing assembly is in the closed state.

18. The charging case according to claim 17, wherein the auxiliary magnet is a magnet that assists the magnetic cooperation between the upper housing assembly and the lower housing assembly or a magnet that assists the cooperation between the earphone and a profiling groove for accommodating the earphone.

19. The charging case according to claim 1, wherein the first state refers to one of states in which the Hall sensor outputs a high level or the Hall sensor outputs a low level, and the second state refers to the other one of the states.

20. The charging case according to claim 1, wherein a magnetic field distribution of the upper housing magnet at the Hall sensor is adjusted to cooperate with a magnetic field distribution of the magnetic suction structure at the Hall sensor, so that a direction of the magnetic field acting on the Hall sensor is changed when the upper housing magnet is close to the Hall sensor.
